# EUROPÄISCHE PATENTSCHRIFT

(11) **EP 0 119 441 B1**
(45) Veröffentlichungstag und Bekanntmachung des Hinweises auf die Patenterteilung: **25.02.1987**
(21) Anmeldenummer: 84101368.3
(22) Anmeldetag: 10.02.1984
(51) Int. Cl.: C09B 62/12, C09B 62/002, D06P 3/66

(54) **Reaktivfarbstoffe mit substituierten 4-Fluorpyridaz-6-onresten**
Reactive dyes with substituted 4-fluoropyridaz-6-one groups
Colorants réactifs contenant des groupes substitués de 4-fluoropyridaz-6-one

(30) Priorität: 19.02.1983 DE 3305881
(43) Veröffentlichungstag der Anmeldung: 26.09.1984
(73) Patentinhaber: BASF Aktiengesellschaft, 67063 Ludwigshafen (DE)
(72) Erfinder: Augart, Dietmar, Dr., D-6717 Hessheim (DE); Eilingsfeld, Heinz, Dr., D-6710 Frankenthal (DE); Krueger, Heinz, Dr., D-6700 Ludwigshafen (DE); Lardon, Hartmut, Dr., D-6700 Ludwigshafen (DE); Schaffer, Ortwin, Dr., D-6700 Ludwigshafen (DE); Seybold, Guenther, Dr., D-6708 Neuhofen (DE)

## Beschreibung

### Reaktivfarbstoffe mit substituierten 4-Fluorpyridaz-6-onresten

Gegenstand der EP-A- 102 510 sind substituierte 4-Fluorpyridaz-6-one, die in Ringposition 1 einen gegebenenfalls substituierten aliphatischen, araliphatischen, aromatischen oder heterocyclischen Rest tragen, der zur Verknüpfung mit einem optischen Aufheller- oder Farbstoffmolekül geeignet ist.

In der DE-B- 1 193 623 werden Farbstoffe beschrieben, die jeweils einen 4,5-Dichlorpyridaz-6-onylrest aufweisen. Es zeigte sich jedoch, daß solche Farbstoffe anwendungstechnische Eigenschaften aufweisen, die nicht ausreichend sind.

Die Erfindung betrifft Verbindungen der allgemeinen Formel 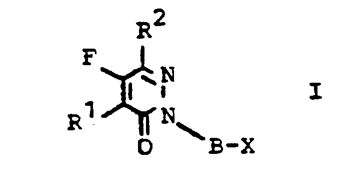 in der
R^{l} und R² voneinander unabhängig Wasserstoff, Halogen, Nitro, Cyan, Acylamino, Hydroxy, Alkoxy, Aryloxy, Mercapto, Alkylthio, Arylthio, Hydroxycarbonyl, Alkoxycarbonyl, Aryloxycarbonyl, Aminocarbonyl, Hydroxysulfonyl, Alkylsulfonyl, Arylsulfonyl, Aminosulfonyl oder ein gegebenenfalls substituierter aliphatischer, araliphatischer, aromatischer oder heterocyclischer Rest,
B eine direkte Bindung oder ein Brückenglied, das einen aliphatischen, aromatischen, araliphatischen oder heterocyclischen Rest darstellt, und
X ein Farbstoffrest sind.
R¹ bzw. R² können insbesondere Wasserstoff, Fluor, Chlor, Brom, Nitro, C₁- bis C₄-Alkyl, Alkoxy, Alkoxycarbonyl oder Alkylsulfonyl oder gegebenenfalls substituiertes Phenyl sein.

Einzelne Reste R^{l} bzw. R² sind z. B. neben den bereits genannten Acetylamino, Propionylamino, Methyl, Ethyl, n- oder i-Propyl, n-, i-, s- oder t-Butyl, Cyclopentyl, Cyclohexyl, Phenyl oder 2-Naphthyl, Benzyl, Methoxy, Ethoxy, n- oder i-Propyloxy, n-, i-, s- oder t-Butyloxy, Phenoxy, 1- oder 2-Naphthyloxy, Benzyloxy, Methylthio, Ethylthio, n- oder i-Propylthio, Phenylthio, Methoxycarbonyl, Ethoxycarbonyl, noder i-Propyloxycarbonyl, n-, i-, s- oder t-Butyloxycarbonyl, Phenoxycarbonyl, Benzyloxycarbonyl, 1- oder 2-Naphthyloxy-carbonyl, Methylsulfonyl, Ethylsulfonyl, Phenylsulfonyl, 2-, 3- oder 4-Methylphenyl, 2-, 3- oder 4-Nitrophenyl, 2-, 3-oder 4-Chlorphenyl, 2-, 3- oder 4-Hydroxycarbonylphenyl, 2-, 3- oder 4-Hydroxysulfonylptienyl, 1-Pyrrolyl, 1-Methyl-2-oder -3-pyrrolyl, 2- oder 3-Thiophenyl, 2- oder 3-Furanyl, 2- oder 3-Tetrahydrofuranyl, 2-, 3- oder 4-Pyridyl, 2-oder 3-(1,4-Dioxanyl), 1-lmidazolyl, 1-Methyl-2-, -4- oder -5-imi-dazolyl, 1-Pyrazolyl, 1 Methyl-2- oder -3-pyrazolyl, 2-, 4-oder 5-Thiazolyl, 3-, 4- oder 5-Isothiazolyl, 2-, 4- oder 5-Oxazolyl, 3-, 4- oder 5-Isoxazolyl, 3- oder 4-Pyridazinyl, 2-, 4- oder 5-Pyrimidinyl, 2- oder 3-Pyrazinyl, 1-Indolyl, 1-Propyl-2-, -3-, -4-, -5-, -6- oder -7-indolyl, 2-, 3-, 4-, 5-, 6- oder 7-Benzothiophenyl, 2-, 3-, 4-, 5-, 6- oder 7-Benzofuranyl, 2-, 3-, 4-, 5-, 6-, 7- oder 8-Chinolinyl, 1-, 3-, 4-, 5-, 6-, 7- oder 8-Isochinolinyl, 1-Benzimidazolyl, 1-Methyl-2-,-4-, -5-, -6- oder -7-benzimidazolyl, 1-Benzpyrazolyl, 1-Ethyl-3-, -4-, -5-, -6- oder -7-benzpyrazolyl, 2-, 4-, 5-, 6- oder 7-Benzothiazolyl, 3-, 4-, 5-, 6- oder 7-Benzisothiazolyl, 2-, 4-, 5-, 6- oder 7-Benzoxazolyl, 3-, 4-, 5-, 6- oder 7-Benzisoxazolyl, 3-, 4-, 5-, 6-, 7- oder 8-Cinnolinyl, 1-, 4-, 5-, 6-, 7- oder 8-Phthalazinyl, 2-, 4-, 5-, 6-, 7- oder 8-Chinazolinyl, 2-, 3-, 5-, 6-, 7- oder 8-Chinoxalinyl.

Bevorzugte Reste R^{l} und R² sind Wasserstoff, Fluor, Chlor, Brom, Amino, Acetylamino, Hydroxy, Methoxy oder Phenyl, wobei H, CI oder Br besonders bevorzugt sind.

Brückenglieder B sind aliphatische, aromatische, araliphatische oder heterocyclische Reste, wobei die beiden ersteren bevorzugt sind. Die Brückenglieder B tragen jeweils zur Verknüpfung mit dem Farbstoffrest X geeignete Gruppen und können darüberhinaus noch durch für R¹ und R² genannte Substituenten substituiert sein.

Aliphatische Brückenglieder sind insbesondere Alkylenreste mit bis zu 10 C-Atomen, die noch durch Sauerstoff, Schwefel oder Cᵢ- bis C₄-Alkylimino unterbrochen und durch Fluor, Chlor, Brom, Nitro, C₁- bis C₄-Alkyl, Aryl, Cyan, Hydroxycarbonyl oder C, bis C₄-Alkoxycarbonyl substituiert sein können und die zur Verknüpfung mit X eine Imino-, Carbonyl- oder Sulfonylgruppe tragen.

Einzelne aliphatische Brückenglieder sind z. B. Methylenimin, Methylmethylenimin, Ethylenimin, 1- oder 2-Methylethylenimin, 1- oder 2-Phenylethylenimin, 1- oder 2-Cyanethylenimin, 1- oder 2-Hydroxycarbonylethylenimin, 1- oder 2-Methoxy-carbonylethylenimin, Propylenimin, Butylenimin, 1- oder 2-Fluorethylenimin, 1- oder 2-Chlorethylenimin, 1- oder 2-Nitroethylenimin, Methylencarbonyl, Ethylencarbonyl, 1- oder 2-Methylethylencarbonyl, 2,2-Dimethylethylencarbonyl, 1- oder 2-Fluorethylencarbonyl, 1- oder 2-Nitroethylencarbonyl, Ethylensulfonyl, 1- oder 2-Methylethylensulfonyl oder 1- oder 2-Fluorethylensulfonyl.

Bevorzugte aliphatische Brückenglieder sind Ethylenimin - oder Ethylencarbonylbrücken, die durch Methyl, Phenyl, Hydroxycarbonyl oder Methoxycarbonyl substituiert sein können, sowie die entsprechenden Propyleniminreste.

Aromatische Brückenglieder B sind insbesondere Phenylenund Naphthylenreste, die wiederum eine Imino-, Carbonyloder Sulfonylgruppe tragen und z. B. noch durch Fluor, Chlor, Brom, Cᵢ- bis C₄-Alkyl, -Alkoxy oder -Alkylthio, Nitro, Hydroxy, Hydroxycarbonyl, Hydroxysulfonyl oder Polyfluoralkyl substituiert sein können.

Einzelne aromatische Brückenglieder B sind z. B:

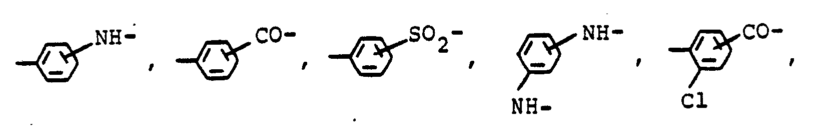

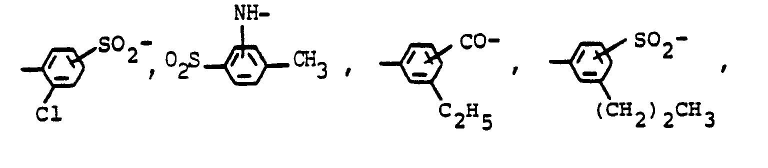

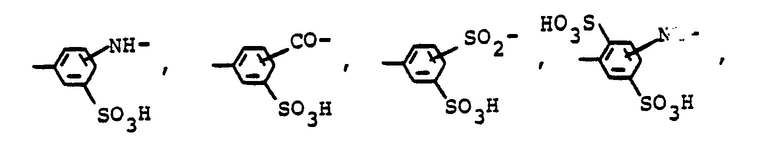

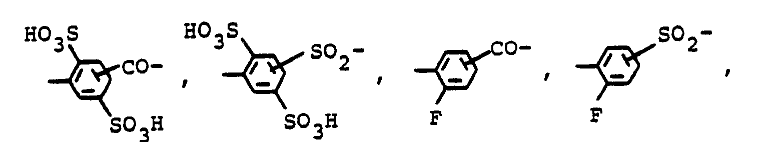

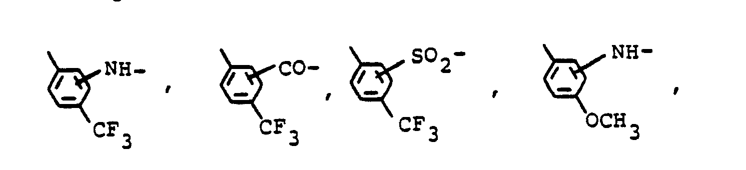

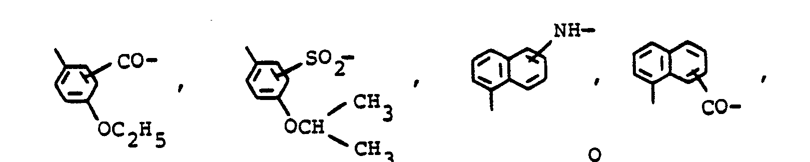

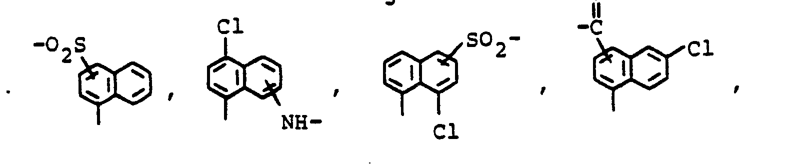

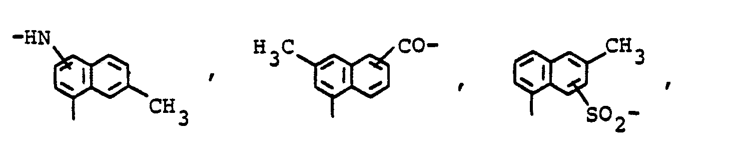

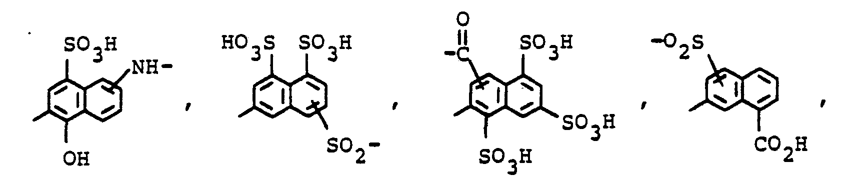

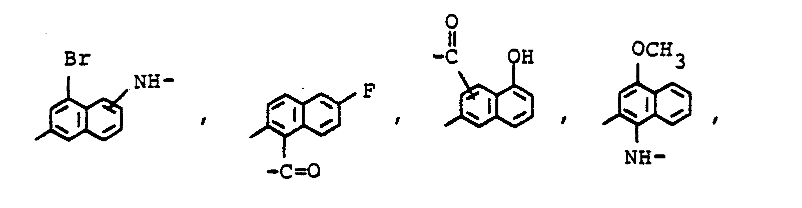

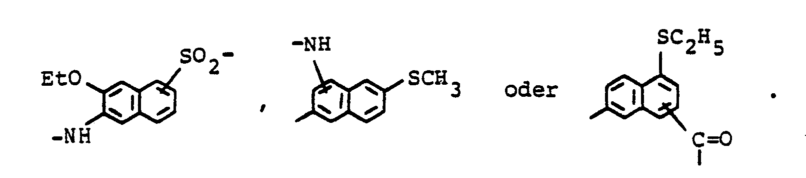

Bevorzugte aromatische Brückenglieder B sind Phenylen- oder Naphthylenreste, die Imino-, Carbonyl- oder Sulfonylgruppen tragen und durch Chlor, Amino, Hydroxy oder Hydroxysulfonyl substituiert sein können.

Araliphatische Brückenglieder B sind beispielsweise:

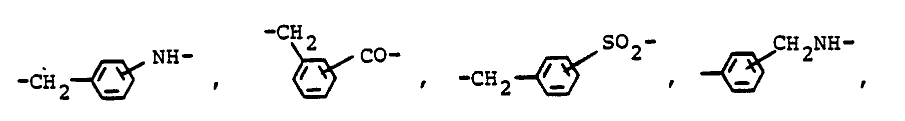

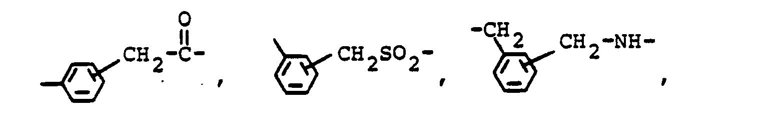

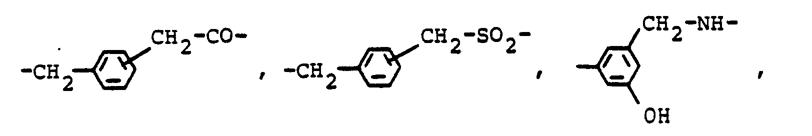

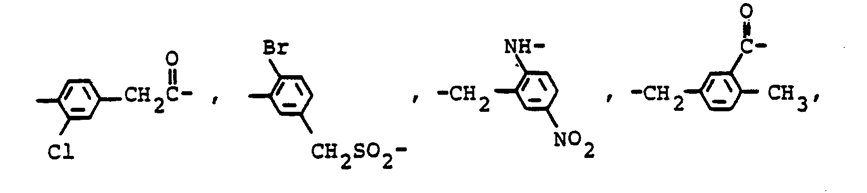

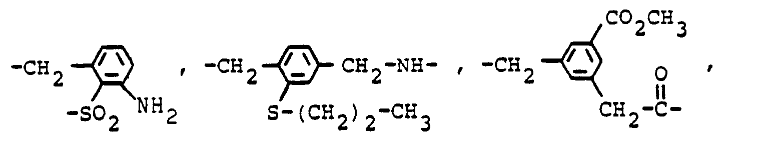

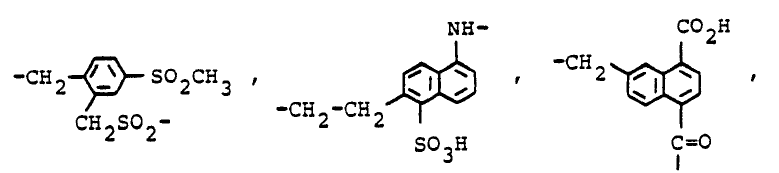

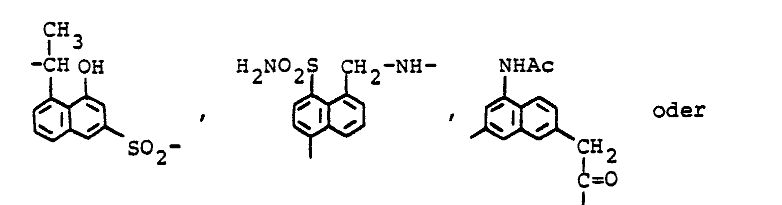

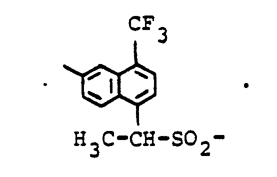

Bevorzugte araliphatische Bruckenglieder sind Benzylreste, die eine Imino-, Carbonyl- oder Sulfonylgruppe tragen und durch Chlor-, Amino, Hydroxy oder Hydroxysulfonyl substituiert sein können.

Heterocyclische Brückenglieder B sind beispielsweise:

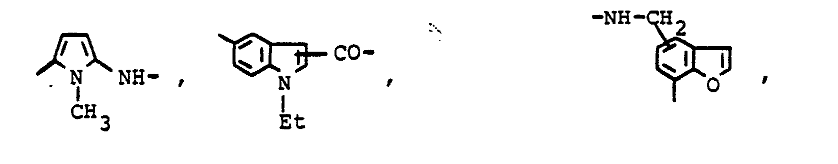

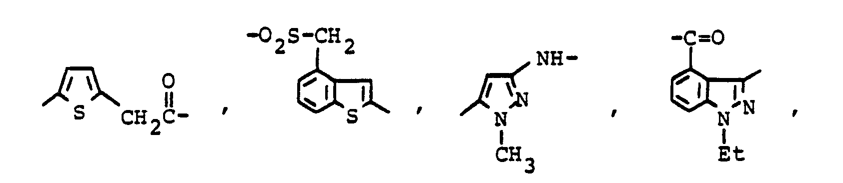

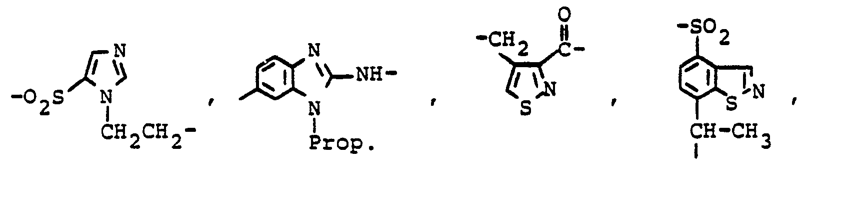

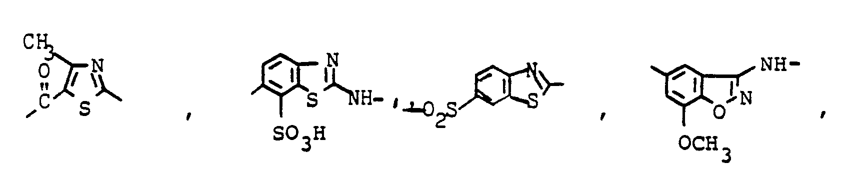

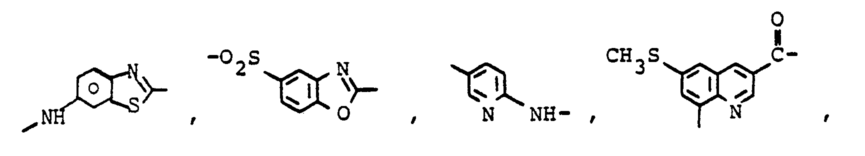

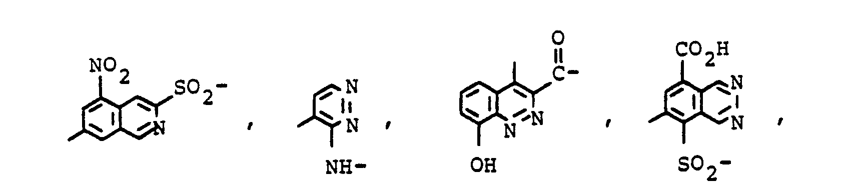

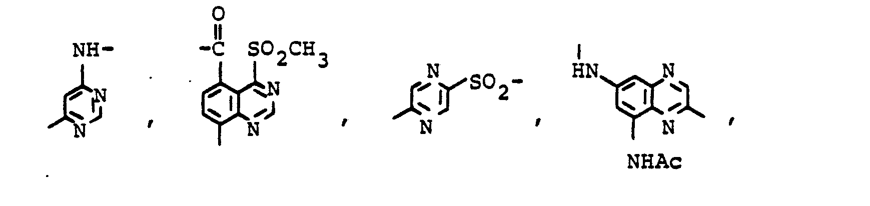

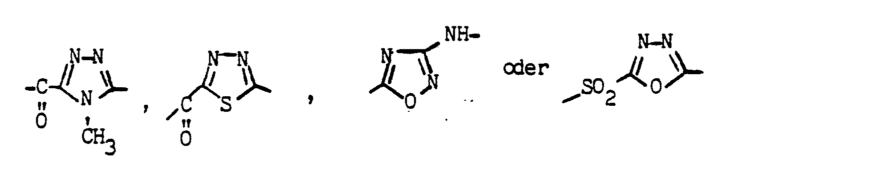

Bevorzugte heterocyclische Brückenglieder B leiten sich von Thiazol-, Benzthiazol-, Imidazol- oder 1,3,4-Thiadiazolresten ab, die eine Imino-, Carbonyl- oder Sulfonylgruppe tragen.

Azofarbstoffreste X entstammen z.B. der Mono- oder Polyazoreihe und können noch faserreaktive Reste enthalten; sie entsprechen der allgemeinen Formel II 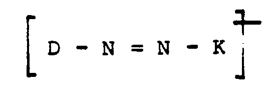 in der
D den Rest einer gegebenenfalls azogruppenhaltigen aromatischen oder heterocyclischen Diazokomponente und
K den Rest einer gegebenenfalls azogruppenhaltigen Kupplungskomponente bedeuten.

Die weiteren faserreaktiven Reste können dabei an D und/oder K gebunden sein, bevorzugt ist ein weiterer faserreaktiver Rest, jedoch sind auch 2 oder 3 faserreaktive Reste möglich. Die weiteren Reste können gleich oder verschieden sein und umfassen auch den Rest der Formel 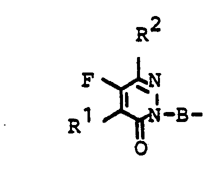 Insbesondere entspricht X den allgemeinen Formeln 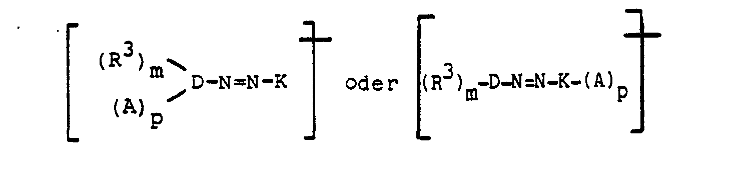 in der
K die angegebene Bedeutung hat,
D ein Rest der Anilin- oder Aminonaphthalinreihe,
m eine ganze Zahl von 0 bis 3,
p eine ganze Zahl von 0 bis 2,
A einen direkt oder über ein Brückenglied gebundenen faserreaktiven Rest und
R³ einen Substituenten bedeuten, wobei die Reste R³ gleich oder verschieden sein können.

Brückenglieder, über die der Rest A gebunden sein kann,sind beispielsweise: -NH-, -N(CH₃)-, -CH₂-NH-, -N(CH₃)-CH₂-, -CₙH₂ₙ-NH-CO-, -CₙH₂ₙ-CO-NH-, -CₙH₂ₙ-SO₂-NH-, -CₙH₂ₙ-NH-SO₂-, -Ar-CO-NH-, -Ar-NH-CO-, -Ar-S0₂-NH-, -Ar-NH-S0₂- oder -Ar-N=N-, wobei
n eine ganze Zahl von 0 bis 4 und
Ar ein Arylrest sind.
Bevorzugte aliphatische Reste sind z. B.: -C₂H₄- und -C₃H₆.

Für Ar sind z. B. zu nennen: 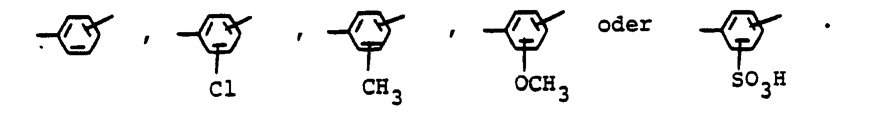 Der faserreaktive Rest A kann auch der Formel
- A' - Z
entsprechen, wobei A' ein über eine Imino-, Methylimino-, Iminomethylen- oder Methyliminomethylenbrücke gebundener Chlor- oder Fluortriazinyl- oder Pyrimidinylrest und Z ein reaktiver Rest aus der Vinylsulfon-, Allylsulfon-, Halogenpyridazon- oder β-Chlorethylaminosulfonreihe sind.

Substituenten R³ stammen z. B. aus der Gruppe C₁- bis C₄-Alkyl, Trifluormethyl, Acetyl, Cᵢ- bis C₄-Alkoxy, Fluor, Chlor, Brom, Hydroxysulfonyl, Cₗ- bis C₄-Alkylsulfonyl, Hydroxycarbonyl, Cᵢ- bis C₄-Alkoxycarbonyl, Amino, C₁- bis C₄-Alkylamino, Nitro, Cyan, Acetylamino, Benzoylamino, Phenylamino, Hydroxy, Aminocarbonyl, C₁- bis C₄-Monoalkyl-aminocarbonyl, C₁- bis C₄-Dialkylaminocarbonyl, Aminosulfonyl, Cᵢ- bis C₄-Monoalkylaminosulfonyl, C₁- bis C₄-Dialkyl-aminosulfonyl, N-Phenylaminocarbonyl, N-Phenylaminosulfonyl, Phenyl, Styryl, Phenylsulfonyl, Phenylazo oder Naphthylazo wo bei Benzringe in den oben genannten Substituenten noch durch Hydroxysulfonyl, Hydroxycarbonyl, Methyl, Methoxy, Chlor, Nitro, Amino, Acetamino oder Hydroxy substituiert sein können.

Bevorzugte Reste R³ sind Methyl, Methoxy, Chlor, Hydroxysulfonyl, Hydroxycarbonyl, Nitro, Amino, Acetamino und Hydroxy.

Faserreaktive Reste A stammen im einzelnen beispielsweise von folgenden Verbindungen ab: (im Folgenden: (-pyridazonyl = pyridaz-6-onyl-1)

Acryloylchlorid, ß-Chlor- oder Brompropionylchlorid, Chloracetylchlorid, a,ß-Dichlor- oder Brompropionylchlorid, 2,3-Dichlorchinoxalin-5-carbonylchlorid, 2,3-Dichlorchin-oxalin-6-carbonylchlorid, 2,3-dichlorchinazolin-5- oder -6-sulfonylchlorid,2,4-Dichlorchinazolin-6- oder -7-sulfonylchlorid, 2,4,6-Trichlorchinazolin-7- oder -8-sulfonylchlorid, 2,4,7- oder 2,4,8-Trichlorchinazolin-6-sulfonylchlorid, 2,4-Dichlorchinazolin-6-carbonylchlorid, 3- und 4-Allylsulfonylanilin, 3- oder 4-Vinylsulfonylanilin, 3- oder 4-(ß-Chlorvinylsulfonyl)anilin, 4-(2'-Chlorethyl)-sulfonylanilin, 4-(ß-Hydroxyethyl)-sulfonylanilin, 3- und 4-(ß-Sulfatoethyl)sulfonylanilin, 3- oder 4-(ß-Sulfatoethylsulfonamido)-anilin, 2,6-Dichlorpyrimidin-4- und -5-carbonylchlorid, N-(ß-Sulfatoethylsulfonyl)-piperazin, 2,6-Dichlorpyrimidin-5-sulfonyl-chlorid, 2,4,6-Trichlorpyrimidin, 2,4,6-Trichlor-5-methylpyrimidin, 2,4,6-Tribrom-5-cyanpyrimidin, 2,4,5,6-Tetrachlorpyrimidin, 2,4,6-Trifluorpyrimidin, 2,4,6-Trifluor-5-chlorpyrimidin, 4,6-Difluor-5-chlorpyrimidin, 2-Methylsulfonyl-4-chlor-6-methylpyrimidin, 2-Methylsulfonyl-4,5-dichlor-6-methylpyrimidin, 2-Methylsulfonyl-4-chlorpyrimidin-5-carbonylchlorid, 2,4,6-Trichlor-5-methylsulfonyl-pyrimidin, 2,4,6-Trifluor-5-methylsulfonylpyrimidin, 2-Methyl-4,6-dichlor-5-methylsul-fonylpyrimidin, 2,4,5-Trichlor-6-methylsulfonylpyrimidin, 2,4,6-Trichlorpyrimidin-5-carbonylchlorid, Tetrachlorpyridazin, Tetrafluorpyridazin, 3,6-Dichlorpyridazin-4-carbonyl-chlorid, 1-(4'-Aminophenyl)-4,5-dichlorpyridaz-6-on, p-(4,5-Dichlorpyridazonyl)-benzoylchlorid, β-(4,5-Dichlorpyridazo-nyl)-propionylchlorid, p-(4,5-Dichlorpyridazonyl)-benzol-sulfochlorid, β-(4,5-Dichlorpyridazonyl)-propylamin, 1-(3'-und 4'-Aminophenyl)-4-fluor-5-chlorpyridaz-6-on, p-(4-Fluor-5-chlorpyridazonyl)-benzoyl-chlorid, p-(4-Fluor-5- chlorpyridazonyl)-benzolsulfochlorid, β-(4-Fluor-5-chlorpyrida-zonyl)-propionylchlorid, β-(4-Fluor-5- chlorpyridazonyl)propylamin, 3- oder 4-Chlorethylaminosulfonylanilin, 2,2,3,3-Tetrafluorocyclobutylcarbonylchlorid, 2,3,3-Trifluoro-cyclobutenylcarbonylchlorid, 2,2,3,3-Tetrafluorocyclobutyl-acryloylchlorid, 1,4-Dichlorphthalazin-6-carbonylchlorid.

Insbesondere seien genannt:
Cyanurfluorid, Cyanurchlorid, Cyanurbromid, 2,4-Dichlor-6-methyltriazin, 2,4-Dichlor-6-phenyltriazin sowie die primären Kondensationsprodukte von Cyanurfluorid, -chlorid und -bromid mit Ammoniak, Aminen, organischen Hydroxy- und Mercaptoverbindungen, also z. B: Methanol, Ethanol, Isopropanol, Phenol, α-Naphthol, β-Naphthol, Chlorphenolen, Cresolen, sulfonierten Phenolen, Thiophenol, Thioglycolsäure, Methylmercaptan, Dimethyldithiocarbaminsäure, 2-Mercapto-benzthiazol, Thioacetamid, Methylamin, Ethylamin, n-Propylamin, Dimethylamin und Diethylamin, β-Hydroxyethylamin, Di-(ß-Hydroxyethyl)-amin, Piperidin, Morpholin, β-Methoxyethylamin, β-(4-Sulfophenyl)-ethylamin, Aminoessigsäure, N-Methylaminoessigsäure, Taurin, N-Methyltaurin, Anilin, N-Methylanilin, Toluidin, Amisidin, Anilin-2,5-, 2,4- und 3,5-Disulfonsäure, Anilin-o-, m- und p-sulfonsäure, N-Methylanilin-o-, m- und p-Sulfonsäure, o-, m- und p-Aminobenzoesäure, 4- und 5-Sulfo-2-aminobenzoesäure, 2-Aminotoluol-4-sulfonsäure, 5-Amino-2-hydroxybenzoesäure, ß-Aminoethansulfonsäure, N-Methylaminoethansulfonsäure oder Mono- und Disulfonsäuren von 1-Amino- und 2-Aminonaphthalin.

Reaktive Reste Z sind vorzugsweise über Stickstoff in Form von -NH- oder -NH-NH- an den Rest A' gebunden und stammen im einzelnen beispielsweise von folgenden verbindungen ab: 4-(ß-Sulfatoethyl)-sulfonylphenylhydrazin, 4-Allylsulfonylanilin, 3-Allylsulfonylanilin, 4-(Propenyl-1')-sulfonylani-lin, 4- vinylsulfonylanilin, 3-(ß-Sulfatoethyl)-sulfonylanilin, 4-(ß-Sulfatoethyl)-sulfonylanilin, 4-(ß-Chlorethyl)-sul- fonylanilin, 1-(3'- und 4'-Aminophenyl)-4,5-dichlorpyridaz-6-on 1-(3'- und 4'-Aminophenyl)-4-fluor-5- chlorpyridaz-6-on, β-(4,5-Dichlorpyridazonyl)-propylamin, β-(4-Fluor-5-chlorpyridazonyl)-propylamin, 3-(β-Chlorethylamino)sulfonylanilin oder 4-(ß-Chlorethylamino)-sulfonylanilin.

Bevorzugt sind für A' Triazinylreste.

Aromatische Reste D der Diazokomponenten der Anilin- und Aminonaphthalinreihe,die keine faserreaktiven Gruppen trägen, leiten sich beispielsweise von Aminen der Formel IV af ab: 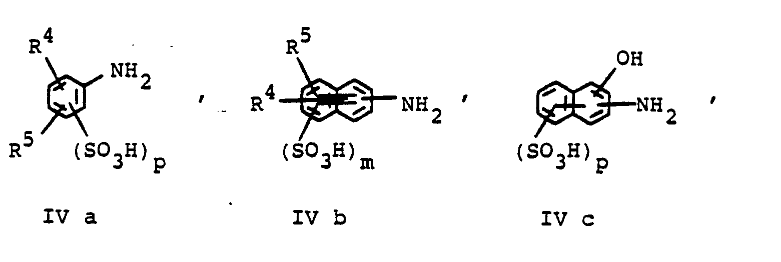 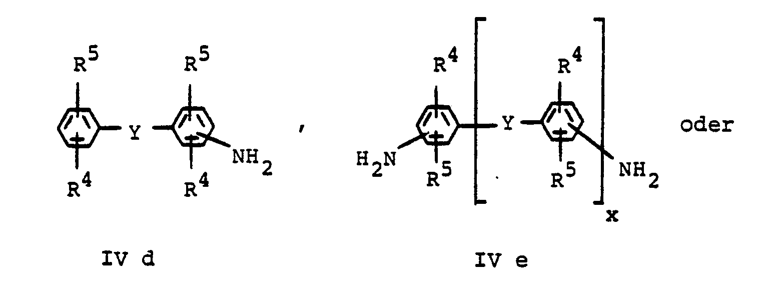 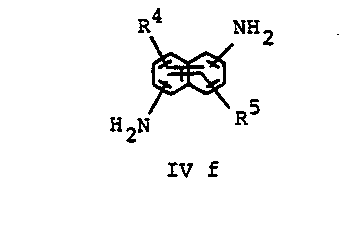
worin m und p die angegebene Bedeutung haben,
R⁴ Wasserstoff, Methyl, Ethyl, Methoxy, Ethoxy, Acetyl, Cyan, Hydroxycarbonyl, Hydroxysulfonyl, Cₗ- bis C₄-Alkoxycarbonyl, Hydroxy, Aminocarbonyl, Cₗ- bis C₄-Alkylaminocarbonyl, Fluor, Chlor, Brom oder Trifluormethyl,
R⁵ Wasserstoff, Methyl, Ethyl, Methoxy, Ethoxy, Cyan, Hydroxycarbonyl, Hydroxysulfonyl, Acetylamino, Cᵢ- bis C₄-Alkoxycarbonyl, Aminocarbonyl, Cₗ- bis C₄-Alkylamino-carbonyl, Fluor, Chlor, Nitro, Aminosulfonyl, Cᵢ- bis C₄-Alkylaminosulfonyl, Cᵢ- bis C₄-Alkylsulfonyl, Phenylsulfonyl oder Phenoxy,
x die Zahl 0 oder 1 und
Y eine direkte Bindung oder eine der Gruppen -NHCO-, -CONH-, -CO-, -NHSO₂-, -SO₂NH-, -SO₂-, -CH=CH-, -CH₂-CH₂-, -CH₂-, -NH-, -O-, -S- oder -N = N- sind.
Bevorzugt sind für
R⁴: H, CH₃, CH₃0, CI, COOH, S0₃H oder OH,
R⁵: H, CH₃, CH₃0, CI, COOH, S0₃H oder NHCOCH₃ und
Y: S0₂-, CO-, -CH = CH-, -N = N-, -CH₂-CH₂- und -CH₂-.

Als aromatische Amine ohne faserreaktive Gruppe, die zur Herstellung der erfindungsgemäßen Farbstoffe als Diazokomponenten eingesetzt werden können und beispielsweise den allgemeinen Formeln (IV a), (IV b), (IV c) und (IV d) entsprechen, sind im einzelnen beispielsweise zu nennen: Anilin, 2-Methoxy-anilin, 2-Ethoxyanilin, 2-Methyl-anilin, 4-Nitro-2-amino-anisol, 4-Chlor-2-amino-anisol, 4-Methyl-anilin, 4-Methoxy-anilin, 2-Nitro-4-aminoanisol, 2-Methoxy-5-methyl-anilin, 4-Nitro-anilin, 2-Chlor-4-nitroanilin, 2,6-Dichlor-4-nitro-anilin, 2-Nitro-4-methyl-anilin, 2,5-Dimethoxyanilin, 2,5-Dimethyl-anilin, 2,4-Dimethyl-anilin, 4-Butyl-anilin, 2-Cyano-4-nitroanilin, 2,5-Diethoxy-anilin, 4-Cyano-anilin, 2-Chloranilin, 3-Chloranilin, 4-Chloranilin, 2,5-Dichlor-anilin, 4-Chlor-2-nitroanilin, 4-Chlor-2-methyl-anilin, 3-Chlor-2-methyl-anilin, 4-Chlor-2-aminotoluol, 4-(p-Tolyl-sulfonyl)-anilin, 2-Ethoxy-1-naphthylamin, 1-Naphthylamin, 2-Naphthylamin, 4-Benzoylamino-2-ethoxyanilin, 3-Amino-4-methyl-benzonitril, 4-Methylsulfonylanilin, 2-Trifluormethyl-anilin, 1-Trifluormethyl-3-chloranilin, 2,4-Dichlor-anilin-5-carbonsäure, 2-Aminobenzoesäure, 4-Amino-benzoesäure, 3-Amino-benzoesäure, 3-Chlor-anilin-6-carbonsäure, Anilin-2-oder -3- oder -4-sulfonsäure, 2,5-Disulfo-anilin, 2,4-Disulfo -anilin, 3,5-Disulfoanilin, 2-Amino-toluol-4-sulfon-säure, 2-Amino-anisol-4-sulfonsäure, 2-Amino-anisol-5-sulfonsäure, 2-Ethoxy-anilin-5-sulfonsäure, 2-Ethoxy-anilin-4-sulfonsäure, 4-Sulfo-2-amino-benzoesäure, 2,5-Dimethoxy-anilin -4-sulfonsäure, 2,4-Dimethoxyamilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Brom-anilin-4-sulfonsäure, 2,6-Dichlor-anilin-4-sulfonsäure, 2,6-Dimethyl-anilin-3-sulfonsäure oder -4-sulfonsäure, 3-Acetylamino-6-sulfo-anilin, 4-Acetyl-amino-2-sulfo-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Amino-naphthalin-3,6,8- trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Amino-naphthalin-1,5-disulfonsäure, 2-Aminonaphthalin-3,6-disulfonsäure, 2-Aminonaphthalin-4,8-disulfonsäure, 2-Amino-phenol-4-sulfonsäure, 2-Aminophenol-5-sulfonsäure, 3-Amino-phenol-6-sulfonsäure, 4- oder 5-Nitro-2-aminophenol, 4-Nitro-6-sulfo-2-aminophenol, 1-Hydroxy-2-aminonaphthalin-6,8- oder -4,6-disulfonsäure, 6-Nitro-2-hydroxy-4-sulfo- aminonaphthalin, 6-Nitro-2-aminonaphthalin-4,8-disulfonsäure, 4-Amino-diphenylamin, 4-Amino-4'-methoxy- diphenylamin, 4-Amino-4'-methoxy-diphenylamin-3-sulfonsäure, 4-(2'-Methyl-phenyl-azo)-2-methylanilin, 4-Aminoazobenzol, 4'-Nitrophenyl-azo-1-amino-naphthalin, 4-(6'-Sulfonaphthylazo)-1-amino-naphthalin, 4-(2',5'-Disulfophenylazo)-1-aminonaphthalin, 4'-Amino-3'-methyl-3-nitro-benzophenon, 4-Amino-2-methyl- benzophenon, 2-Amino-4'-methoxy-benzophenon, 4-Amino-benzophenon, 4-(4'-Aminophenylazo)-benzolsulfonsäure, 4-(4'-Ami-no-3'-methoxyphenylazo)-benzolsulfonsäure, 2-Ethoxy-1-naphthylamin -6-sulfonsäure.

Als aromatische Diamine ohne faserreaktive Gruppe, die als Tetrazokomponenten zur Herstellung der erfindungsgemäßen Farbstoffe verwendet werden können und die beispielsweise der allgemeinen Formel (IV e) oder (IV f) entsprechen, sind im einzelnen beispielsweise zu nennen: 1,3-Diaminobenzol, 1,3-Diaminobenzol-4-sulfonsäure, 1,4-Di-aminobenzol, 1,4-Diaminobenzol-2-sulfonsäure, 1,4-Diamino-2-methyl-benzol, 1,4-Diamino-2-methoxy-benzol, 1,3-Diamino-4-methyl-benzol, 1,3-Diaminobenzol-5-sulfonsäure, 1,3-Di-amino-5-methyl-benzol, 1,6-Diamino-naphthalin-4-sulfonsäure, 2,6-Diamino-4,8-disulfo-naphthalin, 3,3'-Diamino-diphenylsulfon, 4,4'-Diamino-diphenylsulfon, 3,3'-Diamino-diphenyl-sulfon-disulfonsäure, 4,4'-Diaminostilben-2,2'-disulfonsäu-re, 2,7'-Diamino-diphenylsulfon, 2,7'-Diamino-diphenylsulfon-4,5-disulfonsäure, 4,4'-Diaminobenzophenon, 4,4'-Diamino-3,3'-Dinitro-benzophenon, 3,3'-Diamino-4,4'-dichlor-benzo-phenon, 4,4'- oder 3,3'-Diamino-diphenyl, 4,4'-Diamino-3,3'-dichlor-diphenyl, 4,4'-Diamino-3,3'-dimethoxy- oder -3,3'-dimethyl- oder -2,2'-dimethyl- oder -2,2'-dichlor- oder -3,3'-diethoxydiphenyl, 4,4'-Diamino-3,3'-dimethyl-6,6'-dinitro-diphenyl, 4,4'-Diamino-2,2'- oder 3,3'-disulfo-diphenyl, 4,4'-Diamino-3,3'-dimethyl- oder -3,3'-dimethoxy-oder -2,2'-dimethoxy-6,6'-disulfo-diphenyl, 4,4'-Diamino-2,2',5,5'-tetrachlor-diphenyl, 4,4'-Diamino-3,3'-dinitro-diphenyl, 4,4'-Diamino-2,2'-dichlor-5,5'-dimethoxy-diphenyl, 4,4'-Diamino-2,2'- oder -3,3'-dicarbonsäure, 4,4'-Diamino-3,3'-dimethyl-diphenyl-5,5'-disulfonsäure, 4,4'-Diamino-2-nitro-diphenyl, 4,4'-Diamino-3-ethoxy- oder -3-sulfo- diphenyl, 4,4'-Diamino-3,3'-dimethyl-5-sulfo-diphenyl, 4,4'-Diamino-diphenylmethan, 4,4'-Diamino-3,3'-dimethyldiphenylmethan, 4,4'-Diamino-2,2',3,3'-tetramethyl-diphenylmethan, 4,4'-Diamino-diphenylethan, 4,4'-Diaminostilben oder4,4'-Diamino-diphenylmethan-3,3'-dicarbonsäure.

Aromatische Reste D der Diazokomponente der Anilin- und Aminonaphthalinreihe, die einen faserreaktiven Rest tragen können, leiten sich beispielsweise von Aminen der Formel V ac ab: 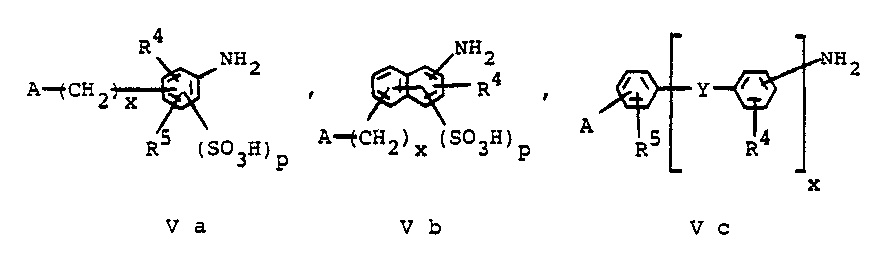 worin
R4, R5, p, x, Y und A die angegebene Bedeutung haben.

Die aromatischen, den faserreaktiven Rest A tragenden Verbindungen entsprechend den Formeln V a - c, stammen im einzelnen beispielsweise von folgenden Diaminen ab: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disul-fonsäure, 1,4-Diamino-2-methyl-benzol, 1,4-Diamino-2-methoxy-benzol, 1,3-Diamino-4-methyl-benzol, 1,4-Diamino-benzol-2,6-disulfonsäure, 1,5-Diamino-4-methylbenzol-2-sulfonsäure, 1,5-Diamino-4-methoxybenzol-2-sulfonsäure, 1,6-Diamino-2-naphthol-4-sulfonsäure, 1,6-Diamino-naphthalin-4-sulfonsäure, 2,6-Diamino-4,8-disulfonaphthalin, 2,6-Di-amino-1-naphthol-4,8-disulfonsäure, 1,3-Diaminobenzol-5-sulfonsäure, 1,3-Diamino-5-methylbenzol, 2,6-Diaminophenol-4-sulfonsäure, 5-(ω-Aminomethyl)-2-aminonapthalin-1-sulfonsäure, 5-(w-N-Methylaminomethyl)-2-aminonaphthalin-1-sulfonsäure, 4,4'-Diaminostilben-3,3'-dicarbonsäure, 4-(ω-N-Methylamino-methyl)-anilin-2-sulfonsäure oder 3-(oo-N-Methylamino-methyl)-anilin-6-sulfonsäure.

Bevorzugte faserreaktive Reste A tragende Amine sind dabei die Kondensationsprodukte aus 1,3- und 1,4-Diaminobenzol, 1,3-Diaminobenzol-4-sulfonsäure, 1,4-Diaminobenzol-2-sulfonsäure, 1,3-Diaminobenzol-4,6- disulfonsäure, 2,6-Diamino-4,8-disulfonaphthalin, 5-(ω-Aminomethyl)-2-aminonaphthalin-1-sulfonsäure oder 4-(ω-N-Methylamino-methyl)-anilin-2-sulfonsäure und beispielsweise Cyanurchlorid und -fluorid sowie deren Kondensationsprodukte mit Ammoniak, primären oder sekundären aliphatischen oder aromatischen Aminen, Methanol, Ethanol, Isopropanol oder Phenol; weiterhin beispielsweise: .Acryloylchlorid, β-Chlorpropionylchlorid, β-Brompropionylchlorid, Chloracetylchlorid, α,β-Dichlorpropionylchlorid, 2,3-Dichlorchinoxalin-5-carbonylchlorid, 2,3-Dichlorchinox-alin-6-carbonylchlorid, 2,3-Dichlorchinazolin-5- oder -6-sulfonylchlorid, 2,4-Dichlorchinazolin-6- oder -8-sulfonyl-chlorid, 2,4,7- oder 2,4,8-Trichlorchinazolin-6-sulfonyl- chlorid, 2,4-Dichlorchinazolin-6-carbonylchlorid, 2,6-Di-chlorpyrimidin-4- und -5-carbonylchlorid, 2,6-Dichlorpyri-midin-5-sulfonylchlorid, 2,4,6-Trichlorpyrimidin, 2,4,6-Trichlor -5-methylpyrimidin, 2,4,6-Tribrom-5- cyanpyrimidin, 2,4,5,6-Tetrachlorpyrimidin, 2,4,6-Trifluorpyrimidin, 2,4,6-Trifluor-5-chlorpyrimidin, 4,6-Difluor-5- chlorpyrimidin, 2-Methylsulfonyl-4-chlor-6-methylpyrimidin, 2-Methyl-sulfonyl-4,5-dichlor-6-methylpyrimidin, 2-Methylsulfonyl-4-chlorpyrimidin-5-carbonylchlorid, 2,4,6-Trichlor-5-methyl-sulfonylpyrimidin, 2,4,6-Trifluor-5-methylsulfonylpyrimidin, 2-Methyl-4,6-dichlor-5-methylsulfonylpyrimidin, 2,4,5-Tri-chlor-6-methylsulfonylpyrimidin, 2,4,6-Trichlorpyrimidin-5-carbonylchlorid, Tetrachlorpyridazin, Tetrafluorpyridazin, 3,6-Dichlorpyridazin-4-carbonylchlorid, p-(4,5-Dichlorpyri-dazonyl)-benzoylchlorid, β-(4,5-Dichlorpyridazonyl)-propionylchlorid, p-(4,5-Dichlorpyridazonyl)-benzolsulfochlo-rid, p-(4,5-Dichlorpyridazonyl)-benzolsulfochlorid, p-(4-Fluor-5-chlorpyridazonyl)-benzoylchlorid, p-(4-Fluor-5-chlorpyridazonyl)-benzolsulfochlorid, β-(4-Fluor-5- chlorpyridazonyl)-propionylchlorid oder 1,4-Dichlorphthalazin-6-carbonylchlorid, (-pyridazonyl = -pyridaz-6- onyl-1 ).

Die Reste K der Kupplungskomponente entstammen vorzugsweise der Anilin-, Naphthalin-, Pyrazol- Pyridin-, Pyrimidin-, Indol-, Acylacetarylid- oder Barbitursäurereihe und können auch faserreaktive Gruppen tragen. Sie können daher der Formel 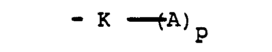 entsprechen, in der A, K und p die angegebene Bedeutung haben.

Kupplungskomponenten der Anilin- und Naphthalinreihe sind z. B. Aniline, N-monosubstituierte Aniline, m-Phenylendiaminderivate, Naphtholsulfosäuren, Aminonaphthaline, Naphthole, Hydroxynaphthoesäurederivate, Aminonaphthalinsulfosäuren oder Aminonaphtholsulfosäuren.

Faserreaktivgruppenfreie Kupplungskomponenten der Anilinund Naphthalinreihe entsprechen beispielsweise Verbindungen der Formel VI a - g: 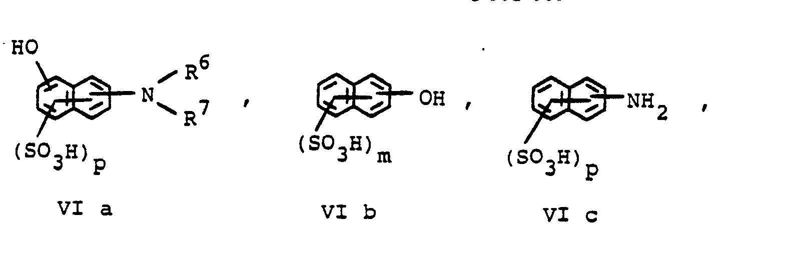 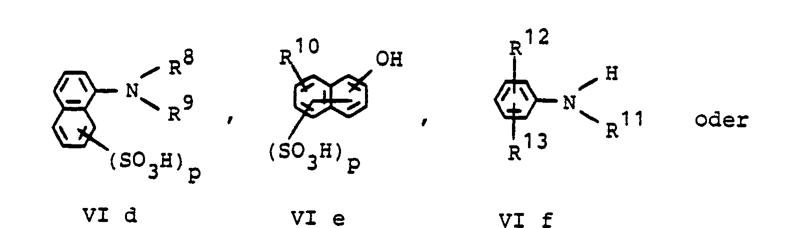 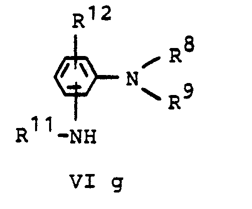 in denen
R⁶ für Wasserstoff oder einen C₁- bis C₄-Alkylrest,
R⁷ fur Wasserstoff, Cₗ- bis C₄-Alkyl oder einen Phenylrest, der durch 1 oder 2 Substituenten aus der Gruppe Cₗ- bis C₄-Alkyl, Cₗ- bis C₄-Alkoxy, Chlor, Brom oder Hydroxysulfonyl substituiert sein kann,
R⁸ für Wasserstoff oder eine C₁- bis C₄-Alkylgruppe, die durch Hydroxy, Cyan, Hydroxycarbonyl, Hydroxysulfonyl, Hydroxysulfonyloxy, Methoxycarbonyl, Ethoxycarbonyl oder Acetoxy substituiert sein kann,
R⁹ für Wasserstoff, eine C₁- bis C₄-Alkylgruppe die durch Hydroxy, Cyan, Hydroxycarbonyl, Hydroxysulfonyl, Hydroxysulfonyloxy, Methoxycarbonyl, Ethoxycarbonyl oder Acetoxy substituiert sein kann, eine Benzylgruppe oder einen Phenylrest der durch C₁- bis C₄-Alkyl, C₁- bis C₄-Alkoxy, Chlor und/oder Hydroxysulfonyl substituiert sein kann,
R¹⁰ für eine C₁- bis C₆-Alkylureido- oder Phenylureidogruppe, die durch Chlor, Methyl, Methoxy, Nitro, Hydroxysulfonyl und/oder Hydroxycarbonyl substituiert sein kann, eine C₁- bis C₆-Alkanoylamino-, z. B. Acetylamino-,Propionylamino- oder Cyclohexanoylamino- oder eine Benzoylaminogruppe, die durch Chlor, Methyl, Methoxy, Nitro, Hydroxylsulfonyl und/oder Hydroxycarbonyl substituiert sein kann oder eine Hydroxygruppe,
R¹¹ für Wasserstoff, eine C₁- bis C₆-Alkylgruppe, insbesondere C₁- bis C₄-Alkylgruppe, die durch einen Arylrest, z. B. einen Phenylrest, oder durch C₁- bis C₄-Alkoxy, Hydroxy, Phenoxy oder C₁- bis C₄-Alkanoyloxy substituiert sein kann, einen Cycloalkylrest, z. B. einen Cyclohexylrest oder einen Arylrest, z. B. einen Phenylrest, der eine Hydroxysulfonylgruppe enthalten kann,
R¹² für Wasserstoff, Methyl, Ethyl, Methoxy, Ethoxy, Chlor, Brom, Acetylamino, Amino, Ureido, Methylsulfonylamino, Ethylsulfonylamino, Dimethylaminosulfonylamino, Methylamino, Ethylamino, Dimethylamino oder Diethylamino,
R¹³ für Wasserstoff, Methyl, Ethyl, Methoxy, Ethoxy, Chlor oder Brom stehen und
p und m die angegebene Bedeutung haben.
Im einzelnen sind beispielsweise zu nennen: Anilin-N-ω-methansulfonat, o- und m-Toluidin, o- und m-Anisidin, Kresidin, 2,5-Dimethylanilin, 2,5-Dimethoxyanilin, m-Aminoacetanilid, 3-Amino-4-methoxyacetanilid, 3-Amino-4-methylacetanilid, m-Aminophenylharnstoff, N-Methylanilin, N-Methyl-m-toluidin, N-Ethylanilin, N-Ethyl-m-toluidin, N-ß-Hydroxyethylamin oder N-ß-Hydroxy-m-toluidin.

Naphtholsulfonsäuren sind beispielsweise: 1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-tri-sulfonsäure, 1,8-Dioxynaphthalin-3,6-disulfonsäure, 2,6-Di-oxynaphthalin-8-sulfonsäure oder 2,8-Dioxynaphthalin-6-sulfonsäure.

Weiterhin sind beispielsweise zu nennen: a-Naphthylamin, N-Phenyl-a-naphthylamin, N-Ethyl-α-naphthylamin, N-Phenyl-ß-naphthylamin, 1,5-Naphthylendiamin, 1,8-Naphthylendiamin, α-Naphthol, β-Naphthol, 1,5-Dioxynaphtha-lin, 1,6-Dioxynaphthalin, 1,7-Dioxynaphthalin, 2,7-Dioxy-naphthalin, 2-Hydroxynaphthalin-3-carbonsäure-N-phenylamid, 2-Hydroxynaphthalin-3-carbonsäure-N-(2'-methoxyphenyl)-amid oder 2-Hydroxynaphthalin-3-carbonsäure-N-(2',5'-dimethoxy-phenyl)-amid.

Aminonaphthalinsulfonsäuren sind beispielsweise: 1-Naphthylamin-6-sulfonsäure, 1-Naphthylamin-6/7-sulfonsäure, 1-Naphthylamin-7-sulfonsäure, 1-Naphthylamin-8-sulfon-säure, 2-Naphthylamin-3,6-disulfosäure, 2-Naphthylamin-5,7-disulfosäure oder 2-Naphthylamin-6,8-disulfosäure.

Als Aminonaphtholsulfonsäuren sind z. B. zu nennen: 1-Amino-5-hydroxynaphthalin-7-sulfonsäure, 1-Amino-8-hy-droxynaphthalin-4-sulfonsäure, 1-Amino-8-hydroxynaphthalin-2,4-disulfonsäure, 1 -Amino-8-hydroxynaphthalin-3,6-disulfonsäre, 1-Amino-8-hydroxynaphthalin-4,6-disulfonsäure, 2-Amino-5-hydroxynaphthalin-7-sulfonsäure, 2-Amino-8-hy-droxynaphthalin-6-sulfonsäure, 2-Amino-8-hydroxynaphthalin-3,6-disulfonsäure, 2-Amino-5-hydroxynaphthalin-1,7-disulfonsäure, 1-Acetylamino-8-hydroxynaphthalin-3,6- disulfonsäure, 1-Benzoylamino-8-hydroxynaphthalin-3,6-disulfonsäure, 1-Acetylamino-8-hydroxynaphthalin-4,6- disulfonsäure, 1-Benzoylamino-8-hydroxynaphthalin-4,6-disulfonsäure, 1-Acetylamino-5-hydroxynaphthalin-7-sulfonsäure, 2-Methylami-no-8-hydroxynaphthalin-6-sulfonsäure, 2-Methylamino-8-hydroxynaphthalin-6-sulfonsäure oder 2-(3'- und 4'-Sulfophenyl)-amino-8-hydroxynaphthalin-6-sulfonsäure.

Von besonderer Bedeutung sind sulfo- und/oder carboxylgruppenhaltige, gegebenenfalls Azogruppen tragende Kupplungskomponenten, die in o- oder p-Stellung zu einer Hydroxyund/oder Aminogruppe kuppeln.

Als Beispiele für solche Kupplungskomponenten seien beispielsweise genannt: 2-Acetylamino-5-hydroxynaphthalin-7-sulfonsäure, 2-Acetyl-amino-8-hydroxynaphthalin-6-sulfonsäure, 1-Acetylamino-8-hydroxynaphthalin-3,6-disulfonsäure, 1-Benzoylamino-8-hy-droxynaphthalin-3,6-disulfonsäure, 1-Acetylamino-8-hydroxy-naphthalin-4,6-disulfonsäure oder 1-Benzoylamino-8-hydroxy-naphthalin-4,6-disulfonsäure.

Als Kupplungskomponenten sind weiterhin besonders zu nennen:
1-Amino-8-hydroxynaphthalin-3,6- und 4,6-disulfonsäure sowie deren durch saure Kupplung erhaltene Arylazokupplungsprodukte der Formel: 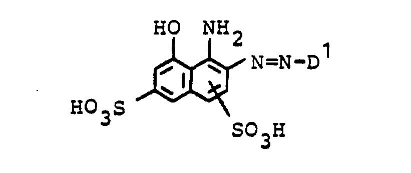 in der
   D^{l} der Rest einer Diazokomponente, beispielsweise ein Rest der Formeln 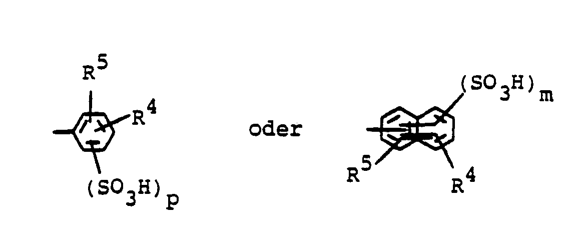
   sein kann, worin R⁴, R⁵, p und m die angegebene Bedeutung haben.

Einzelne Reste D¹ leiten sich beispielsweise von folgenden Aminen ab:
Anilin, Anilin-2-, -3- und -4-sulfonsäure, Anilin-2,4-, -2,5- und -3,5-disulfonsäure, 2-Naphthylamin-1,5- und -4,8- disulfonsäure, 2-Naphthylamin-3,6,8- und -4,6,8-trisulfonsäure, 1-Naphthylamin-3,6,8- und -4,6,8-trisulfonsäure, 1-Naphthylamin-4-sulfonsäure, 2-Naphthylamin-1-sulfonsäure, 3- und 4-Aminoacetanilid, 4- und 5-Acetamino-2-sulfoanilin, 4-Nitroanilin, 4-Nitroanilin-2-sulfonsäure und 2-Amino-6-acetamino-naphthalin-4,8-disulfonsäure.

Kupplungskomponenten der weiteren Reihen sind beispielsweise: Pyrazolone und Aminopyrazole, 2,6-Diaminopyridine, Pyridone, Hydroxy- und Aminopyrimidine, Indole, Barbitursäurederivate oder Acetoacetarylide.

Faserreaktivgruppenfreie Kupplungskomponenten dieser Reihen entsprechen dabei beispielsweise den Formeln VII a - f: 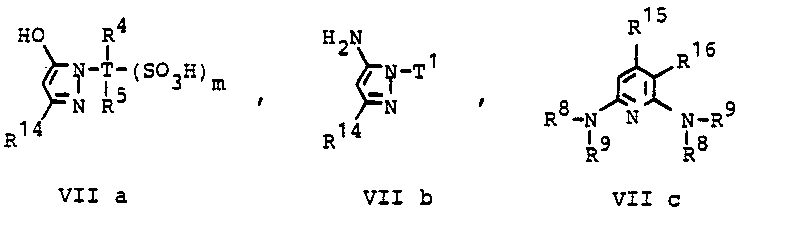 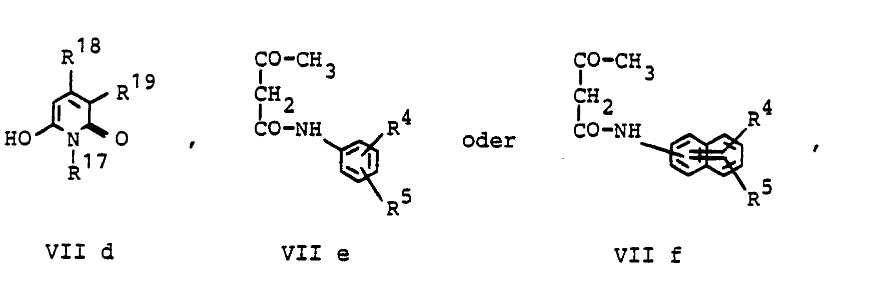 worin
T für einen Benzol- oder Naphthalinkern,
T¹ für eine C₁- bis C₄-Alkylgruppe,einenCyclohexyl- oder Benzylrest oder einen einfach oder mehrfach durch Fluor, Chlor, Brom, Methyl, Methoxy, Nitro, Hydroxysulfonyl, Hydroxycarbonyl, Acetyl, Acetylamino, Methylsulfonyl, Aminosulfonyl oder Aminocarbonyl substituierten Phenylrest,
R¹⁴ für eine Methyl-, Hydroxycarbonyl-, Methoxycarbonyl-, Ethoxycarbonylgruppe oder einen Phenylrest,
R¹⁵ für ein Wasserstoffatom, eine Methyl- oder Ethylgruppe oder eine durch Methoxy, Ethoxy oder Cyan substituierte C₁- bis C₄-Alkylgruppe,
R¹⁶ für ein Wasserstoffatom, eine Methyl-, Sulfomethylen-, Hydroxysulfonyl-, Cyan- oder Aminocarbonylgruppe,
R₁₇ für ein Wasserstoffatom, eine Cₗ- bis C₄-Alkylgruppe, die durch Phenyl oder Sulfophenyl substituiert sein kann, eine durch Hydroxy, Amino, Methoxy, Ethoxy oder durch eine Hydroxycarbonyl-, Hydroxysulfonyl-, Acetylamino-, Benzoylamino- oder Cyangruppe substituierte Cₗ-bis C₄-Alkylgruppe, eine Cyclohexylgruppe, die Phenylgruppe oder eine durch Hydroxycarbonyl, Hydroxysulfonyl, Benzoylamino, Acetylamino, Methyl, Methoxy, Cyan oder Chlor substituierte Phenylgruppe oder eine Aminogruppe, die durch Phenyl, Cₗ- bis C₄-Alkyl, Acetyl oder Benzoyl substituiert ist,
R¹⁸ für eine C₁- bis C₄-Alkyl-, Phenyl-, Hydroxy-, Cyan-, Acetyl-, Benzoyl-, Hydroxycarbonyl-, Methoxycarbonyl-, Aminocarbonyl- oder Sulfomethylengruppe,
R¹⁹ für ein Wasserstoff-, Chlor- oder Bromatom oder einen Acetylamino-, Amino-, Nitro-, Hydroxysulfonyl-, Aminosulfonyl-, Methylsulfonyl-, Phenylsulfonyl-, Hydroxycarbonyl-, Methoxycarbonyl-, Acetyl-, Benzoyl-, Aminocarbonyl-, Cyan- oder Sulfomethylenrest stehen und
R4, R5, R8, R⁹ und m die angegebene Bedeutung haben.

Als Pyrazolon-Kupplungskomponenten sind beispielsweise 3-Methyl-, 3-Carboxy- und 3-Alkoxycarbonyl-5-pyrazolone zu nennen, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Hydroxysulfonyl, Benzoyl, Acetyl, Acetylamino, Nitro, Hydroxyl, Carboxyl, Carbamoyl oder Sulfamoyl substituierte Phenylreste oder durch Hydroxysulfonyl substituierte a- oder β-Naphthylreste tragen können, beispielsweise also: 1-Phenyl-, 1-(2'-Chlorphenyl)-, 1-(2'-Methoxyphenyl)-, 1-(2'-Methylphenyl)-, 1-(2',5'-Dichlorphenyl)-, 1-(2',6'-Dichlor-phenyl)-, 1-(2'-Methyl-6'-chlorphenyl)-, 1-(2'-Methoxy-5'-methylphenyl)-, 1-(2'-Chlor-5'-sulfophenyl)-, 1-(2'-Methoxy-5'-sulfophenyl)-, 1-(2'-Methyl-4'-sulfophenyl)-, 1-(2',5'-Dichlor-4,-sulfophenyl)-, 1-(2',5,-Disulfophenyl)-, 1-(2'-Carboxyphenyl)-, 1-(3'-Sulfophenyl)-, 1-(4'-Sulfophenyl)-, 1-(3'-sulfamylphenyl)-3-carboxy-5-pyrazolon, 1-(3'-oder 4'-Sulfophenyl)-, 1-(2'-Chlorphenyl)-, 1-(2'-Chlor-4'- oder -5'-sulfophenyl)-, 1-(2'-Methyl-4'-sulfophenyl)-, 1-(2',5'-Dichlorphenyl)-, 1-(4',8'-Disulfo-ß-naphthyl)-, 1-(6'-Sulfo-α-naphthyl)-3-methyl-5-pyrazolon, 1-Phenyl-5-pyrazolon-3-carbonsäureethylester, 5-Pyrazolon-3-carbonsäureethylester oder 5-Pyrazolon-3-carbonsäure.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4'-Chlorphenyl)-, 1-(4'-Methylphenyl)-5-aminopyrazol oder 1-Phenyl-3-methyl-5-aminopyrazol.

Acetoacetanilide sind vor allem Acetessiganilid und dessen im Phenylkern durch Chlor, Methyl, Ethyl, Methoxy, Ethoxy, Acetylamino, Hydroxysulfonyl, Hydroxycarbonyl, Aminocarbonyl oder Aminosulfonyl ein-oder mehrfach substituierte Derivate.

Vom Pyridin abgeleitete Kupplungskomponenten sind beispielsweise die in der DE-OS 22 60 827 beschriebenen Derivate.

Als Pyrimidinkupplungskomponenten sind z. B. die in den DE-OS 22 02 820, 23 08 663 und 31 19 349 aufgeführten Verbindungen geeignet. Weiterhin sind Barbitursäure und deren N-Substitutionsprodukte zu nennen. Als N-Substituenten sind dabei insbesondere Cₗ- bis C₄-Alkyl und gegebenenfalls substituiertes Phenyl anzuführen.

Als Indolkupplungskomponenten sind beispielsweise zu nennen: 2-Methylindol, 2-Phenylindol, 2-Phenylindol-5-sulfonsäure, 1-Methyl-2-phenylindol, 1-(2'-Hydroxyethyl)-, 1-(2'-Carboxy-ethyl)-, 1-(2'-Carbamoylethyl)-2-methylindol oder -2-phenylindol.

Als Pyridonkupplungskomponenten sind beispielsweise zu nennen: 1-Ethyl-2-hydroxy-4-methyl-5-carbonamidopyridon-6, 1-(2'-Hydroxyethyl)-2-hydroxy-4-methyl-5-carbonamidopyridon-6, 1-Phenyl-2-hydroxy-4-methyl-5-carbonamidopyridon-6, 1-Ethyl-2-hydroxy-4-methyl-5-cyanpyridon-6, 1-Ethyl-2-hydroxy-4-sulfomethyl-5-carbonamidopyridon-6, 1-Ethyl-2-hydroxy-4-methyl-5-sulfomethylpyridon-6, l-Methyt-2-hydroxy-4-methyl-5-cyanpyridon-6, 1-Methylhydroxy-5-acetylpyridon-6, 1,4-Dimethyl-2-hydroxy-5-cyanpyridon-6, 1,4-Dimethylhydroxy-5-carbonamidopyridon-6, 2,6-Dihydroxy-4-ethyl-5-cyanpyridin, 2,6-Dihydroxy-4-ethyl-5-carbonamidopyridin, 1-Ethyl-2-hy-droxy-4-methyl-5-sulfomethylpyridon-6, 1-Methyl-2-hydroxy-4-methyl-5-methylsulfonylpyridon-6 oder 1-Carboxymethyl-2-hydroxy-4-ethyl-5-phenylsulfonylpyridon-6.

Faserreaktivgruppenhaltige Kupplungskomponenten der Anilinund Naphthalinreihe sind beispielsweise Verbindungen der Formel VIII a - e: 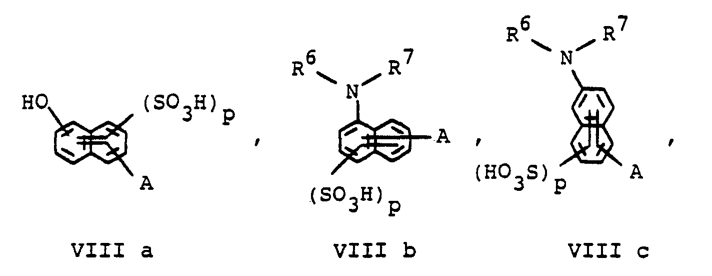 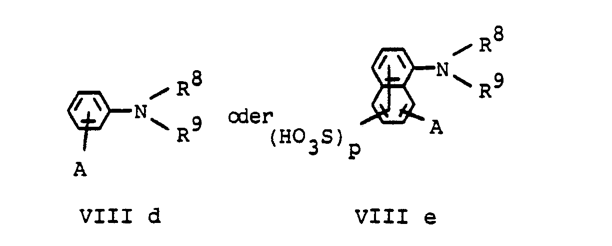 worin
R6, R⁷, R8, R9, A und p die angegebene Bedeutung haben.

Von besonderer Bedeutung sind dabei sulfo- und/oder carboxylgruppenhaltige, gegebenenfalls Azogruppen tragende Kupplungskomponenten, die in o- oder p-Stellung zu einer Hydroxy- und/oder Aminogruppe kuppeln und die eine faserreaktiven Rest A tragen, wie z. B:.

2-[(5'-Hydroxy-7'-sulfo)-naphthylamino-2']-4,6-dichlortriazin, 2-[(5'-Hydroxy-7'-sulfo)-naphthylmethylamino-2']-4,6-dichlortriazin, 2-[(8'-Hydroxy-6'-sulfo)-naphthylamino-2']-4,6-dichlortriazin, 2-[(8'-Hydroxy-6'-sulfo)-naphthylmethyl-amino-2']-4,6-dichlortriazin, 2-[(8'-Hydroxy-3',6'-disulfo)-naphthylamino-1'j-4,6-dichlortriazin oder 2-[(8'-Hydroxy-4', 6'-disulfo)-naphthylamino-1']-4,6-dichlortriazin sowie deren Monokondensationsprodukte mit primären und sekundären, aliphatischen und aromatischen Aminen, wie beispielsweise Ammoniak, Methyl- und Ethylamin, Taurin, Glyzin, Sarkosin, ß-Hydroxyethylamin, Dioxethylamin, Hydrazin, Anilin, N-Methylund N-Ethylanilin, Morpholin, Toluidin, Anisidin, Kresidin, Anilin-o-, -m- und -p-sulfonsäure, Anilin-2,4- und -2,5-disulfonsäure, o-, m- und p-Aminobenzoesäure, m-, p-Vinylsulfonylanilin, m-, p-Sulfatoethylsulfonylanilin, N-Methylanthranilsäure oder m-, p-Allylsulfonylanilin.

Daneben z. B. die sekundären Kondensationsprodukte von 1-Amino-8-hydroxynaphthalin-3,6- und -4,6- disulfonsäure, 2-Amino-8-hydroxynaphthalin-6-sulfonsäure, 2-Amino-5-hydroxy-naphthalin-7-sulfonsäure, 2-Methylamino-8-hydroxynaphthalin-6-sulfonsäure und 2-Methylamino-5-hydroxynaphthalin-7-sulfonsäure mit Cyanurfluorid und primären und sekundären aliphatischen und aromatischen Aminen.

Weiterhin z. B. die Monokondensationsprodukte von 1-Amino-8-hydroxy-naphthalin-3,6- und -4,6- disulfonsäure, 2-Amino-8-hydroxynaphthälin-6-sulfonsäure, 2-Amino-5-hydroxynaphthalin-7-sulfonsäure, 2-Methylamino-8-hydroxynaphthalin-6-sulfon-säure und 2-Methylamino-5-hydroxynaphthalin-7-sulfonsäure mit beispielsweise Acryloylchlorid, β-Chlorpropionylchlorid, β-Brompropionylchlorid, Chloracetylchlorid, α,β-Dichlorpropionylchlorid, 2,3-Dichlorchinoxalin-5-carbonylchlorid, 2,3-Dichlorchinoxalin-6-carbonylchlorid, 2,3-Dichlorchinazolin -5- oder -6-sulfonylchlorid, 2,4-Dichlorchinazolin-6-oder -7-sulfonylchlorid, 2,4,6-Trichlorchinazolin-7- oder -8-sulfonylchlorid, 2,4,7- oder 2,4,8-Trichlorchinazolin-6-sulfonylchlorid, 2,4-Dichlorchinazolin-6-carbonylchlorid, 2,6-Dichlorpyrimidin-4- und -5-carbonylchlorid, 2,6-Dichlorpyrimidin -5-sulfonylchlorid, 2,4,6-Trichlorpyrimidin, 2,4,6-Trichlor-5-methylpyrimidin, 2,4,6-Tribrom-5-cyanpyrimidin, 2,4,5,6-Tetrachlorpyrimidin, 2,4,6-Trifluorpyrimidin, 2,4,6-Trifluor-5-chlorpyrimidin, 4,6-Difluor-5-chlorpyrimidin, 2-Methylsulfonyl-4-chlor-6-methylpyrimidin, 2-Methylsulfonyl-4,5-dichlor-6-methylpyrimidin, 2-Methylsulfonyl-4-chlor-pyrimidin-5-carbonylchlorid, 2,4,6-Trichlor-5-methylsulfonylpyrimidin, 2,4,6-Trifluor-5-methylsulfonylpyrimidin, 2-Methyl-4,6-dichlor-5-methylsulfonylpyrimidin, 2,4,5-Trichlor-6-methylsulfonylpyrimidin, 2,4,6-Trichlorpyrimidin-5-carbonylchlorid, Tetrachlorpyridazin, Tetrafluorpyridazin, 3,6-Di-chlorpyridazin-4-carbonylchlrorid, p-(4,5-Dichlorpyridazonyl)-benzoylchlorid, β-(4,5-Dichlorpyridazonyl)-propionylchlorid, p-(4,5-Dichlorpyridazonyl)-benzolsulfochlorid, p-(4-Fluor-5-chlorpyridazonyl)-benzoylchlorid, p-(4-Fluor-5-chlorpy-ridazonyl)-benzolsulfochlorid, β-(4-Fluor-5-chlorpyridazonyl)-propionylchlorid oder 1,4-Dichlorphthalazin-6-carbonylchlo-rid. (-pyridazonyl = -pyridaz-6-onyl-1-).

Weiterhin sind besonders zu nennen die durch saure Kupplung erhaltenen Arylazokupplungsprodukte der 1-Amino-8-hydroxy-naphthalin-3,6-und -4,6-disulfonsäure der Formel 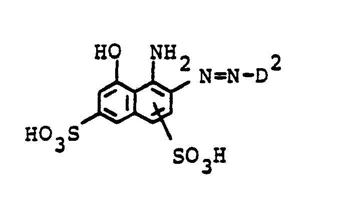 wobei D² ein reaktivgruppenhaltiger Diazokomponentenrest, beispielsweise ein Rest der Formeln 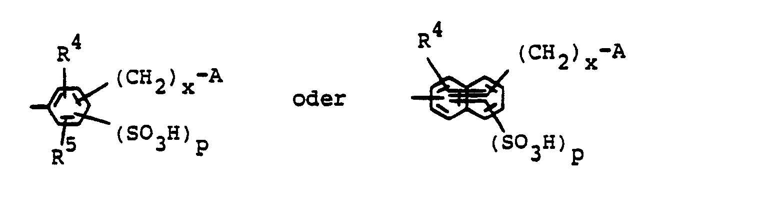 sein kann, worin R⁴, R⁵, x, p und A die angegebene Bedeutung haben.

Als aromatische Amine, von denen sich die faserreaktiven Reste A tragendenDiazokomponentenreste D² ableiten, sind im einzelnen beispielsweise zu nennen:
1,3-Diaminobenzol, 1,3-Diaminobenzol-4-sulfonsäure, 1,3-Diaminobenzol-4,6-disulfonsäure, 1.4-Diaminobenzol, 1,4-Diaminobenzol-2-sulfonsäure, 1,4-Diaminobenzol-2,5-disulfonsäure, 1,4-Diamino-2-methylbenzol, 1,4-Diamino-2-meth-oxy-benzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, 1,6-Diamino- naphthalin-4-sulfonsäure, 2,6-Diamino-4,8-disulfonaphthalin, 1,3-Diaminobenzol-5-sulfonsäure, 1,3-Diamino-5-methylbenzol, 5-(w-Aminomethyl)-2-aminonaphthalin-1-sulfonsäure, 5-(ω-N-Methylaminomethyl)-2-aminonaphthalin-1-sulfonsäure, 4,4'-Diaminostilben-3,3'-dicarbonsäure, 4-(ω-N-Methylamino-methyl)-anilin-2-sulfonsäure oder 3-(ω-N-Methylamino-methyl)-anilin-6-sulfonsäure, wobei in allen diesen Aminoverbindungen die eine primäre oder sekundäre Aminogruppe durch den faserreaktiven Acylrest A substituiert ist.

Einzelne faserreaktivgruppentragende Diazokomponentenreste D² sind z. B.:

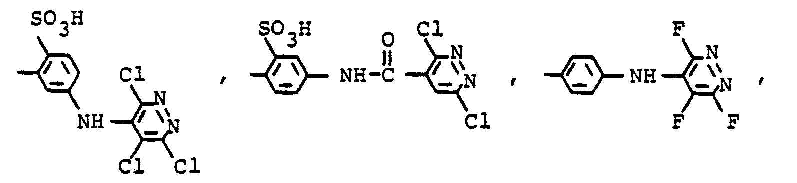

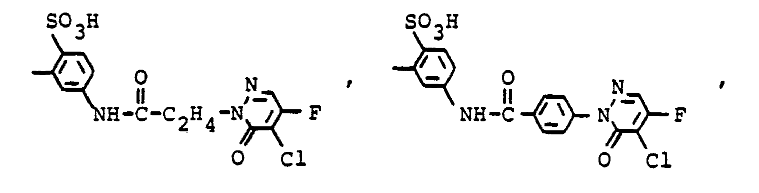

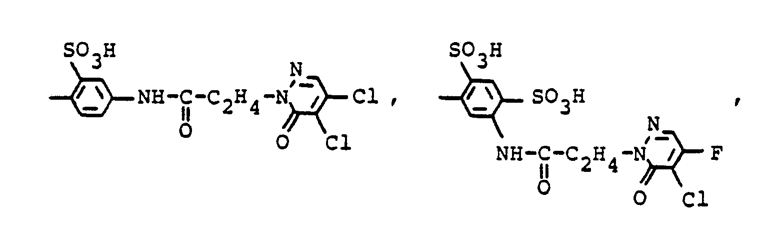

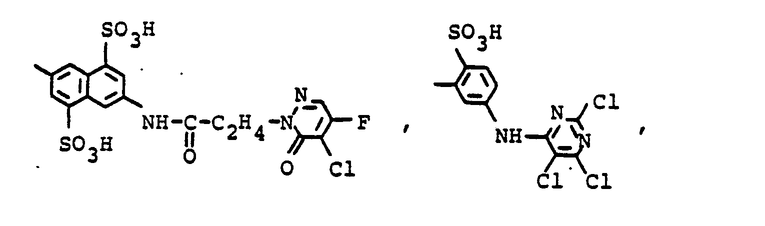

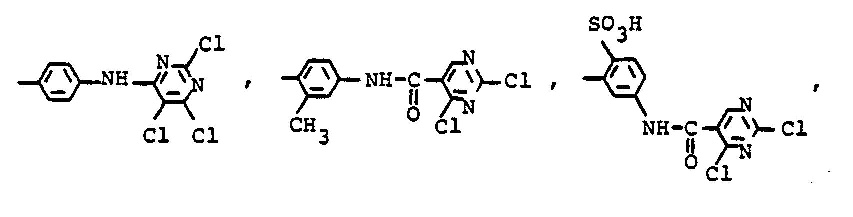

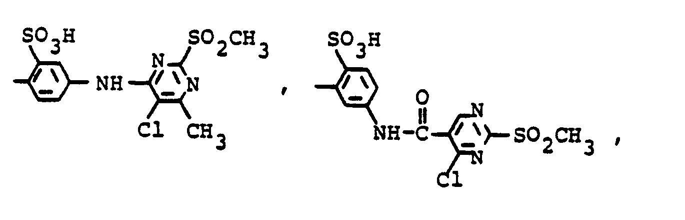

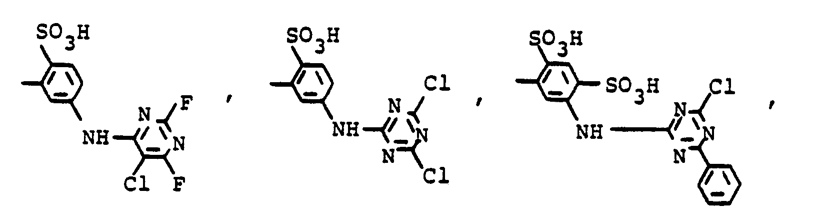

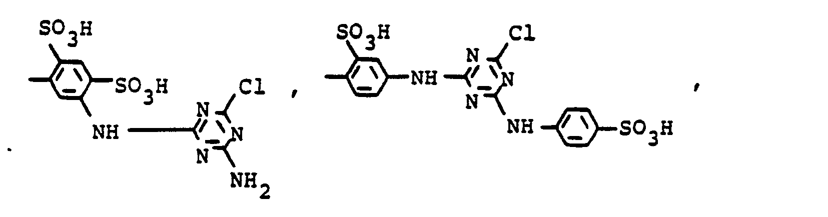

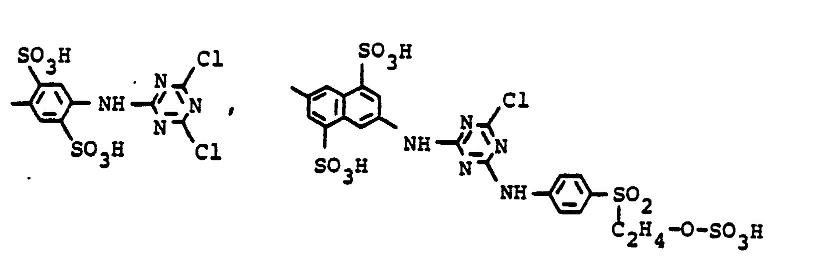

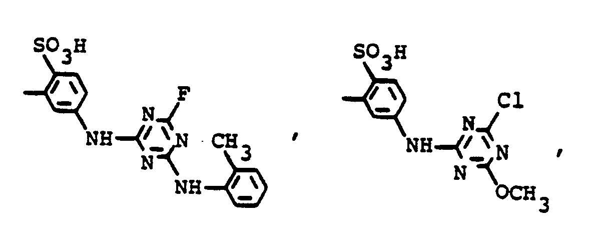

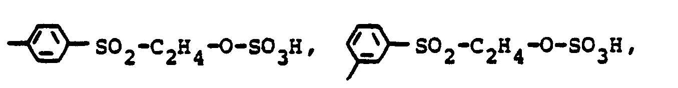

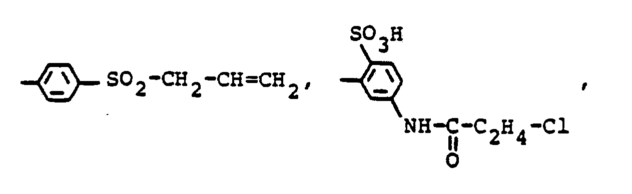

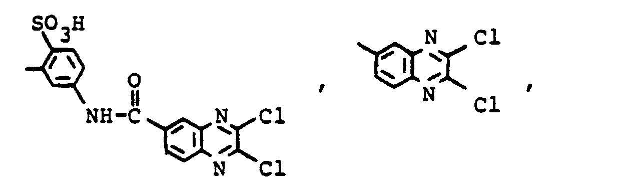

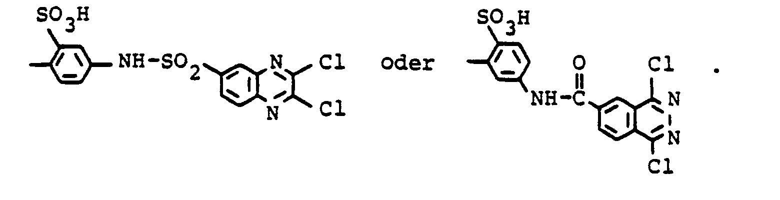

Faserreaktivgruppenhaltige Kupplungskomponenten der Pyrazolon-, Aminopyrazol-, 2,6-Diaminopyridin-, Pyridon-, Hydroxyoder Aminopyrimidin-, Indol-, Barbitursäure- oder Acetoacetarylidreihe entsprechen beispielsweise den Formeln IX a - f: 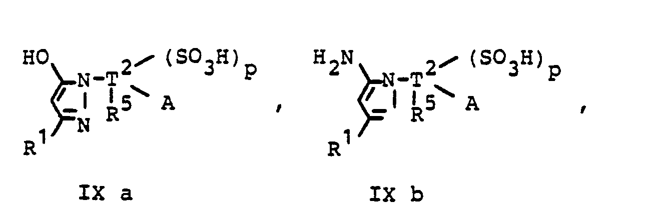 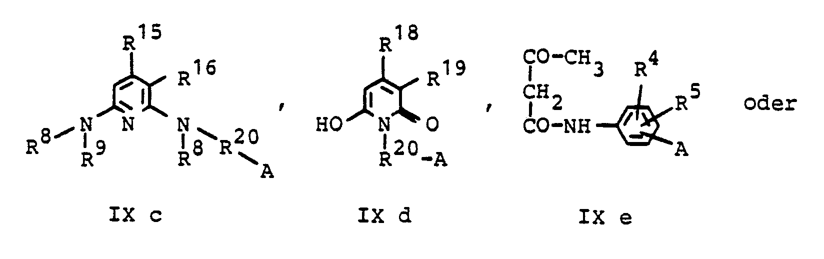 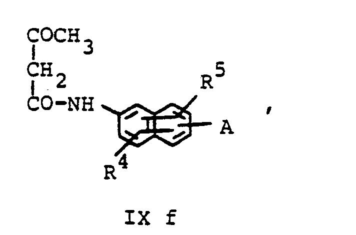 worin
T² für einen Benzol- oder Naphthalinkern und
R²⁰ für einen C₁- bis C₄-Alkyl-, Benzyl-, Phenylethyl- oder Phenylrest, wobei die Phenylkerne noch weiter durch Fluor, Chlor, Brom, Methyl, Methoxy, Cyan, Hydroxysulfonyl, Hydroxycarbonyl, Acetyl, Nitro, Aminocarbonyl oder Aminosulfonyl substituiert sein können, stehen und
R¹, R⁴, R⁵, R⁸, R⁹, R¹⁵, R¹⁶, R¹⁸, R¹⁹, p und A die angegebene Bedeutung haben.
Faserreaktive Reste A tragende Pyrazolonkupplungskomponenten leiten sich beispielsweise von folgenden Pyrazolonen ab: 1-(3'- oder 4'-Aminophenyl)-, 1-(2'-Sulfo-5'-aminophenyl)-, 1-(2'-Methoxy-5'-aminophenyl)-3-carboxy-5-pyrazolon, 1-(3'-oder 4'-Aminophenyl)-, 1-(3'- oder 4'-Nitrophenyl)-3-methyl-5-pyrazolon, 1-(3'- oder 4'-Nitrophenyl)-, 1-(6'-Nitro-4', 8'-disulfonaphthyl-2')- oder 1-(6'-Amino-4',8'-disulfonaphthyl -2')-3-carboxy-5-pyrazolon.

Einzelne faserreaktive Reste A tragende Pyrazolone sind beispielsweise: 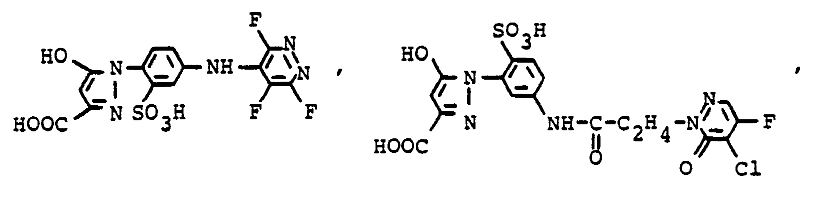 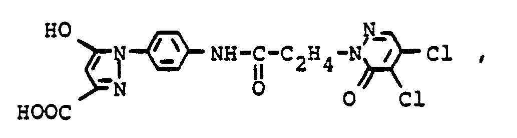 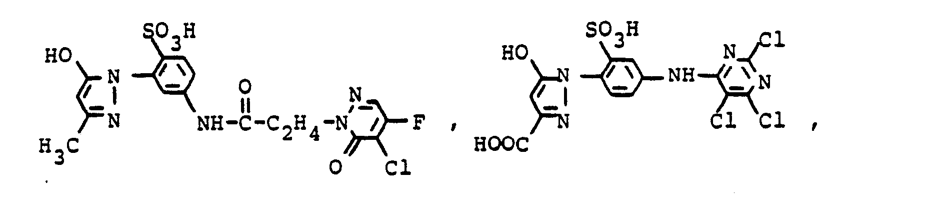 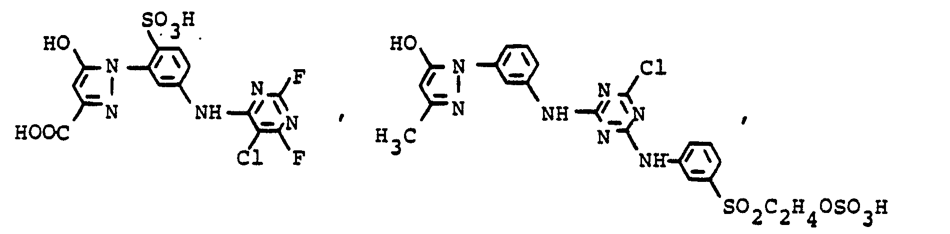 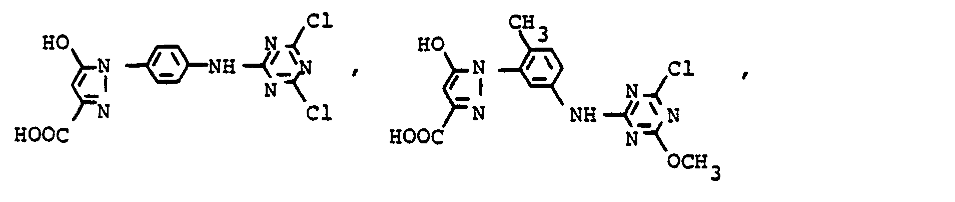 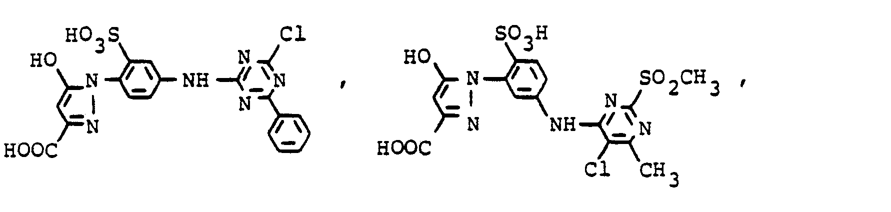 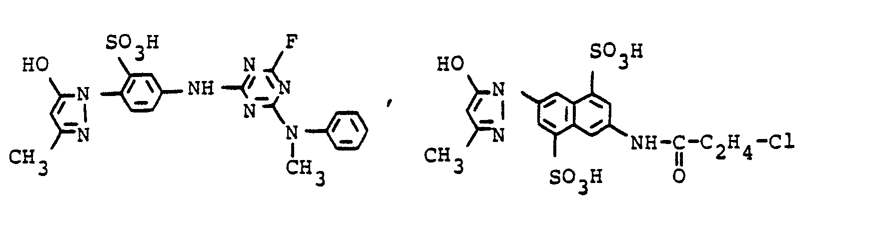 oder

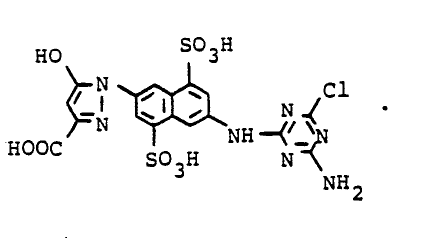

Daneben sind beispielsweise zu nennen:

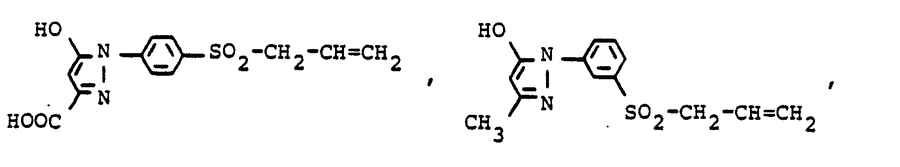

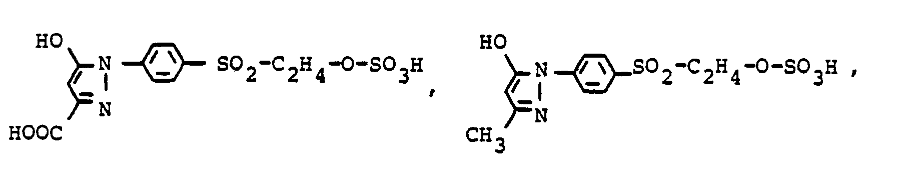

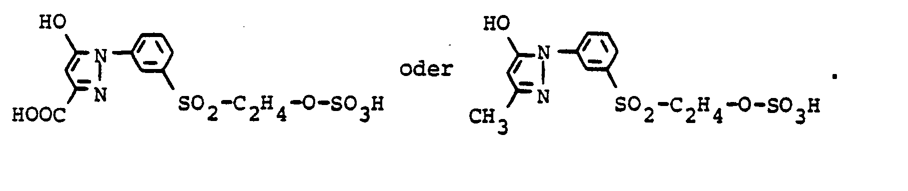

Einzelne faserreaktive Reste A tragende Pyridone sind beispielsweise: 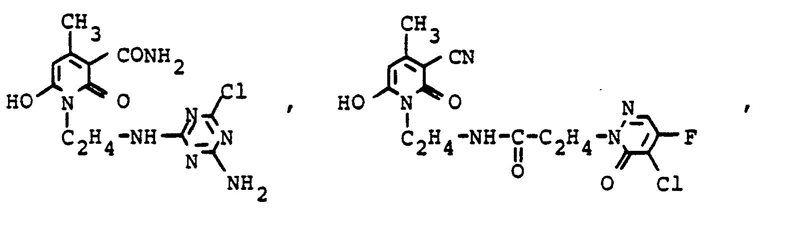 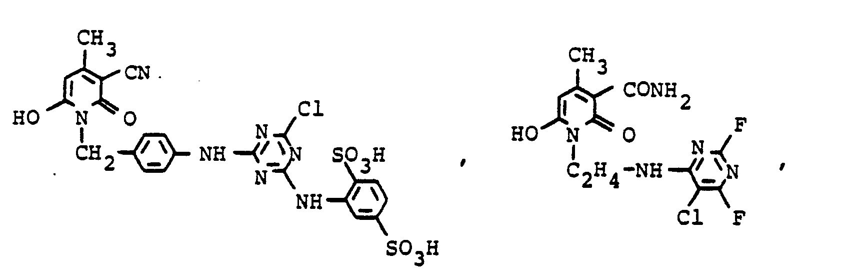 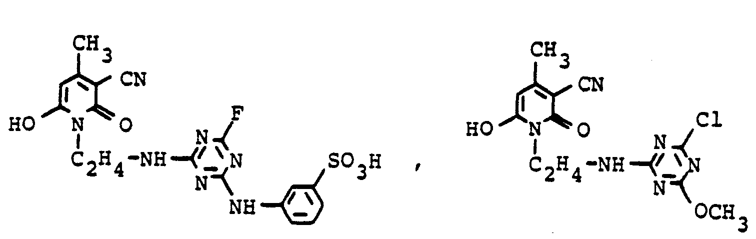 oder 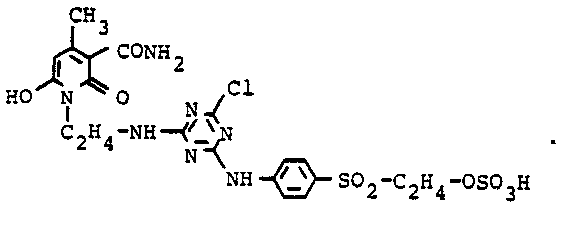 Reste der Formel 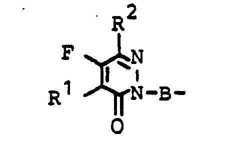 und ihre Herstellung sind in der DE-A-32 29 325 beschrieben. Zur Verknüpfung mit den Farbstoffresten X können alle üblichen aus der Reaktivfarbstoffchemie bekannten Methoden angewendet werden. Eine repräsentative Auswahl von Herstellungsmethoden für die Farbstoffe der Formel I ist in den Beispielen beschrieben, in denen sich Angaben über Teile und Prozente, sofern nicht anders vermerkt, auf das Gewicht beziehen.

Von besonderer technischer Bedeutung sind Verbindungen, die der allgemeinen Formel 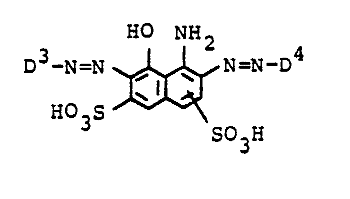 entsprechen, in der
D³ und D⁴ gleiche oder verschiedene Reste von Diazokomponenten sind, von denen mindestens eine einen Rest der Formel 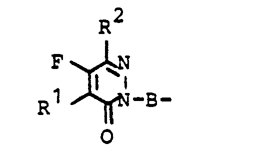 trägt.
Weiterhin sind wertvoll Verbindungen der Formel 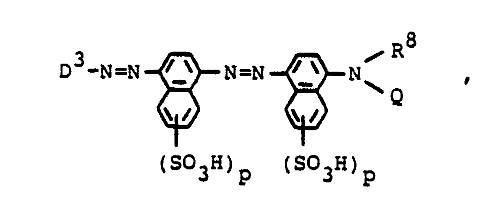 in der
Q ein gegebenenfalls einen reaktiven Rest enthaltender Acylrest ist und D³, p und R⁸ die angegebene Bedeutung haben.
Farbstoffreste X der Dioxazinreihe entsprechen der allgemeinen Formel 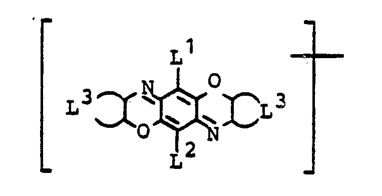 in der
L¹ und L² unabhängig voneinander Wasserstoff, Chlor, Brom, Cyan, gegebenenfalls substituiertes Alkyl, Aryl, Hetaryl, Alkoxy, Aroxy oder Acylamino und die Gruppen
L³ unabhängig voneinander Reste der Formeln 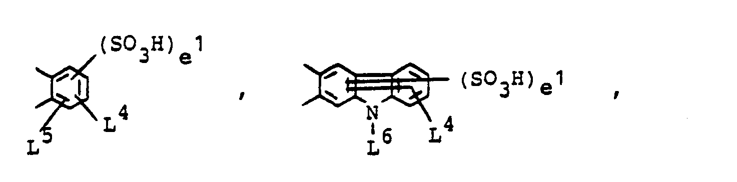 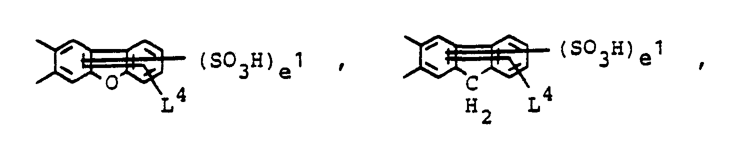 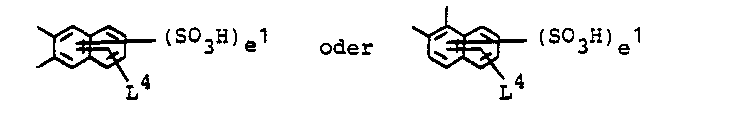 sind,
   wobei
   e¹ 0, 1 oder 2,
   L⁴ ein Brückenglied,
   L⁵ Wasserstoff, Alkoxy oder Acylamino und
   L⁶ Wasserstoff oder C₁- bis C₄-Alkyl sind.

Einzelne Reste L¹ und L² sind neben den bereits genannten z. B: CH₃, C₂H₅, C₃H₇, C₄H₉, C₆H₅, C₆H₄Cl, C₆H₃Cl₂, C₆H₄CH₃, C₆H₄OCH₃, C₆H₄NO₂, C₆H₃ClCH₃, 2-Thienyl, OCH₃, OC₂H₅, OC₃H₇, OC₄H₉, OC₆H₅, OC₆H₄Cl, OC₆H₄CH₃, NHCOCH₃, NHCOC₂H₅ oder NHCOC₃H₇.

Bevorzugt für L¹ und L² sind Wasserstoff und insbesondere Cl.

Einzelne Reste L⁵ sind z. B: Wasserstoff, Methoxy, Ethoxy, Propoxy, Butoxy, Acetylamino, Propionylamino und Butyrylamino.

Bevorzugte Reste L⁵ sind Wasserstoff, Methoxy und Acetylamino.

Brückenglieder L⁴ sind z. B: Sulfonyl, -NH-(alkylen)-NH-, -SO₂-NH-(alkylen)-NH-, -NH-(arylen)-NH-, -SO₂-NH-(arylen)-NH-, -NH-(alkylen)-0-(alkylen)-NH-, -S0₂-(alkylen)-0-(alky-len)-NH-, -0-(alkylen)-O-(arylen)-NH-, -NH-(alkylen)-NH(arylen)-NH-, -NH-(aralkylen)-NH-, -SO₂-NH-(aralkylen)-NH-, -CH₂-NH- oder -CH₂-NHCO-(alkylen)-NH-, wobei in den NH-Gruppen der Wasserstoff durch gegebenenfalls substituierte Alkyl-, Cycloalkyl- oder Arylgruppen ersetzt sein kann, welche miteinander auch unter Bildung eines heterocyclischen Ringes verbunden sein können.

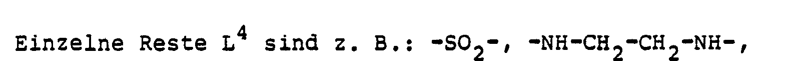

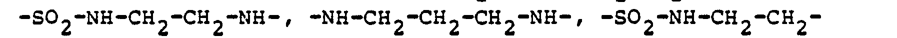

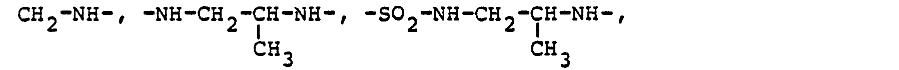

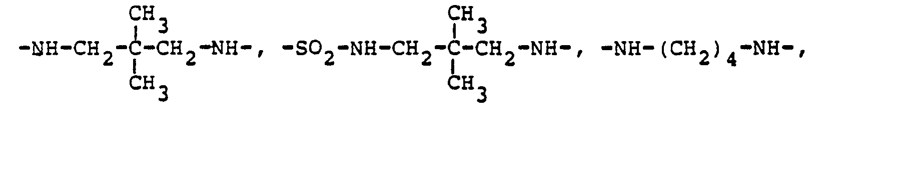

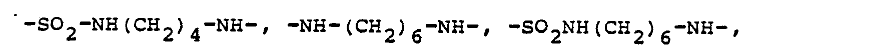

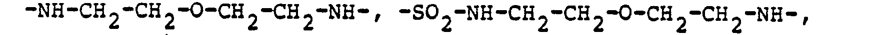

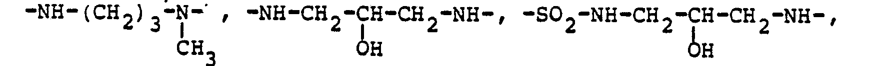

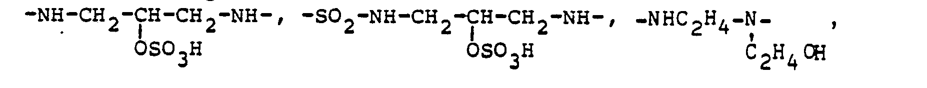

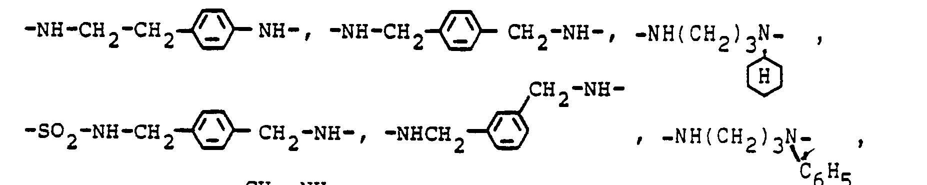

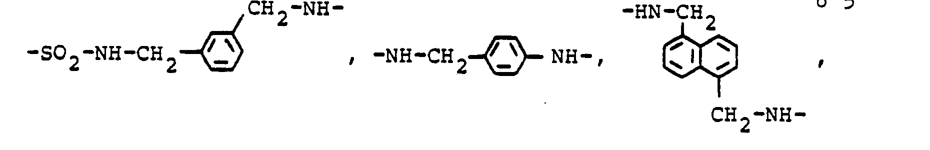

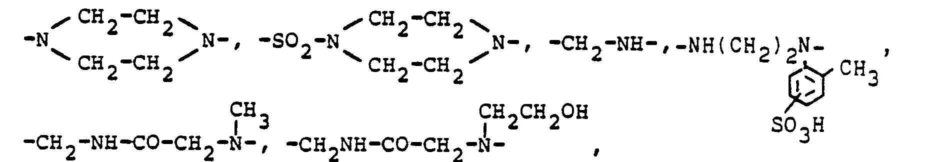

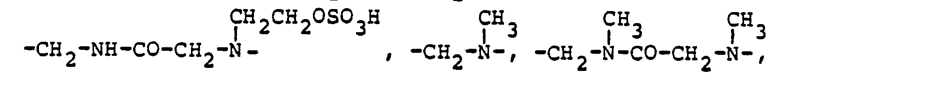

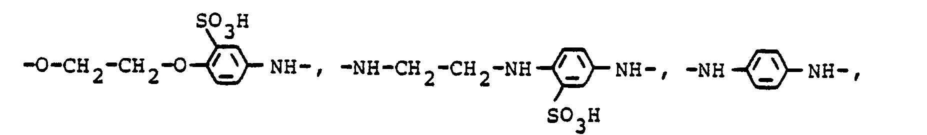

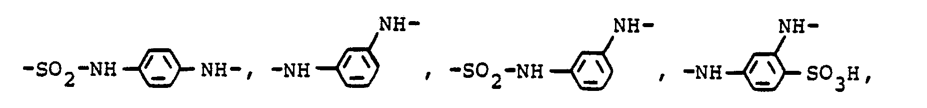

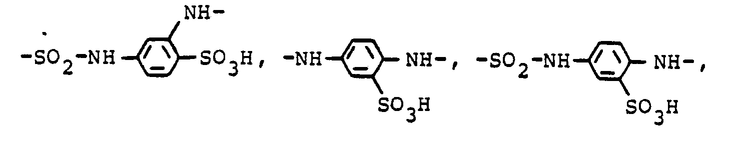

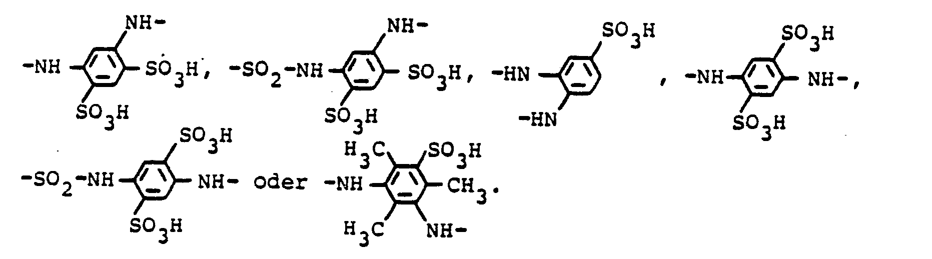

Bevorzugte Reste L⁴ sind z. B:. 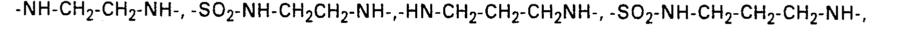 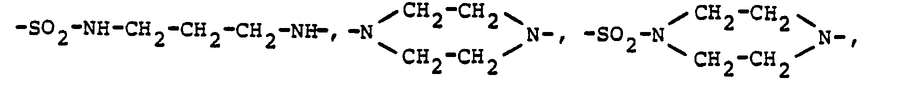 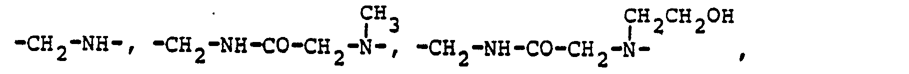 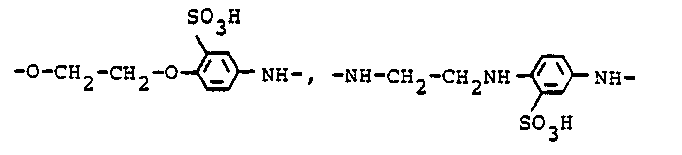 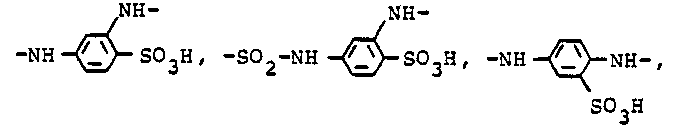 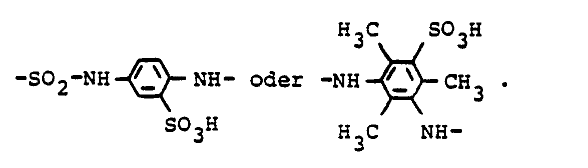 Anthrachinonreste X entsprechen z. B. der Formel 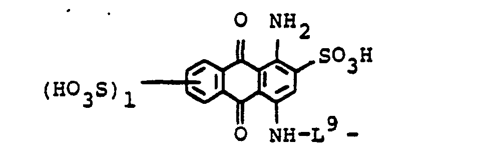 in der
I 0 oder 1 und
L⁹ eine direkte Bindung oder ein Brückenglied sind.

Brückenglieder sind z. B: gegebenenfalls durch CH₃, SO₃H, SO₂NH₂, Cl, Br, OCH₃ ein- oder mehrfach substituiertes lminophenylen, -alkylen, -cycloalkylen, -heteroarylen oder mehrkernige und eine weitere Reaktivgruppe enthaltende Reste.

Einzelne Brückenglieder L⁹ sind z. B: 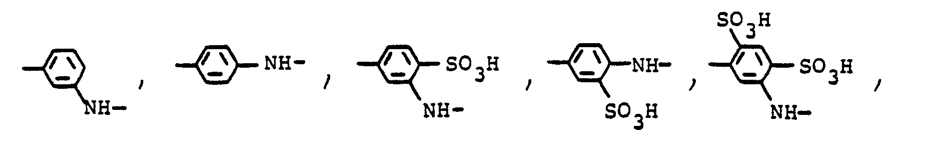 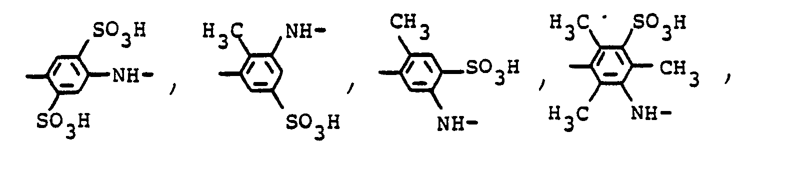 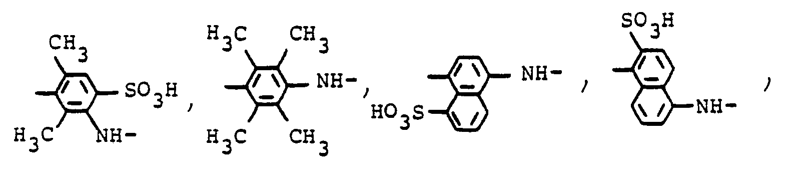 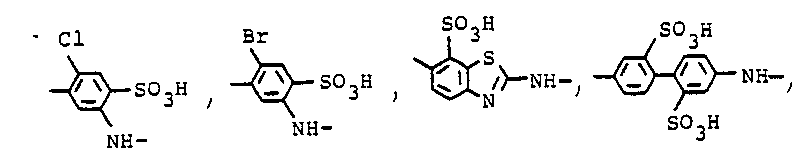 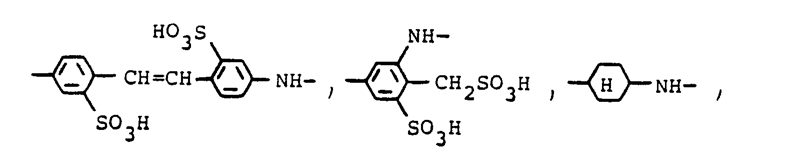 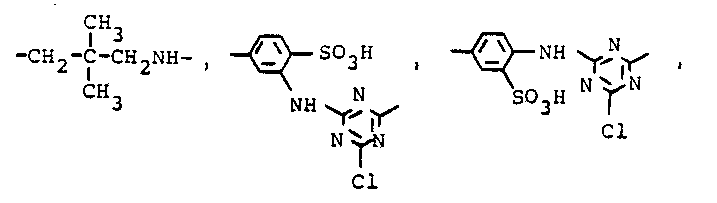 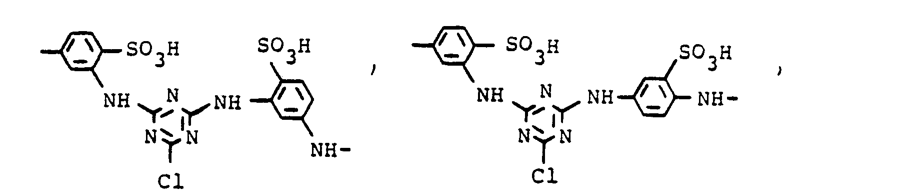 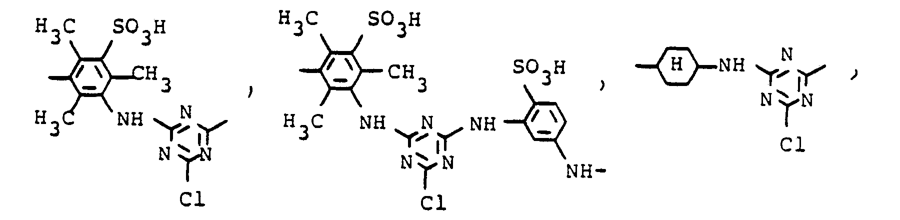 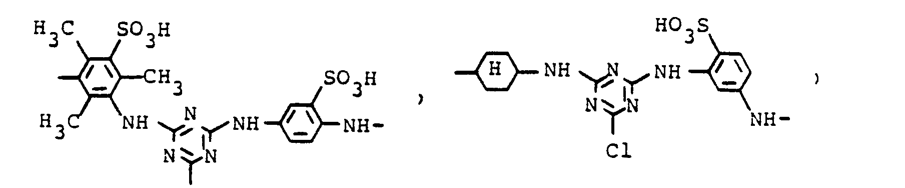 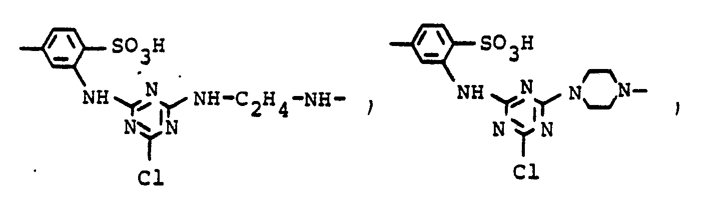 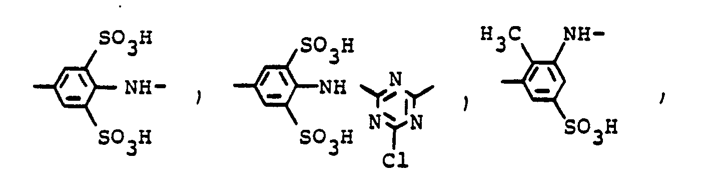 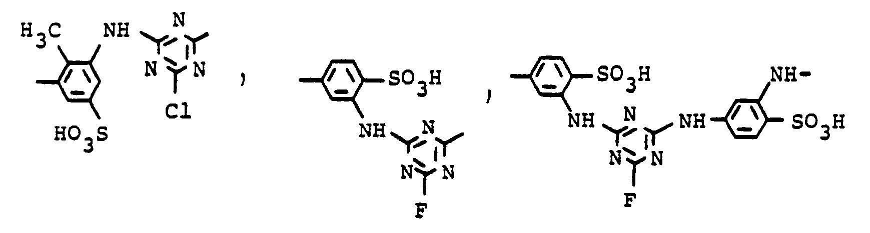 oder

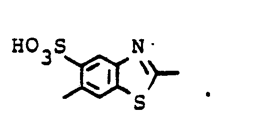

Bevorzugte Brückenglieder L⁹ sind beispielsweise: 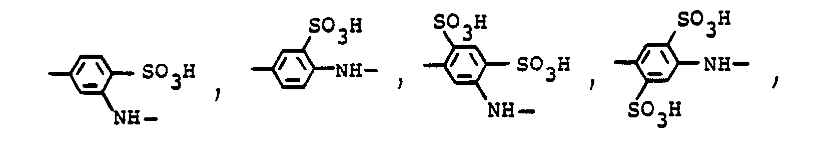 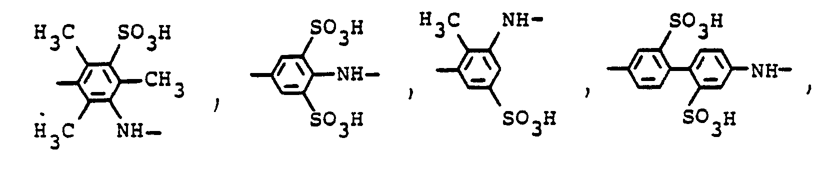 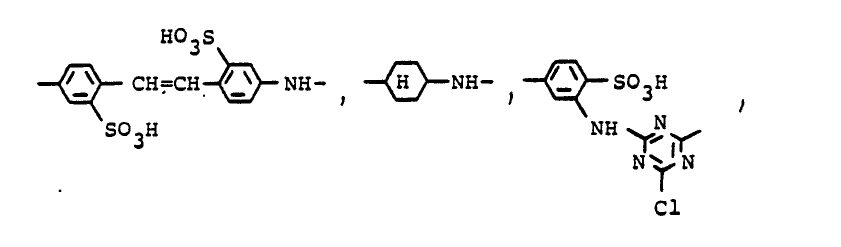 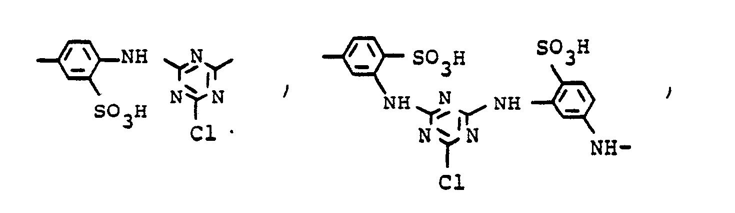 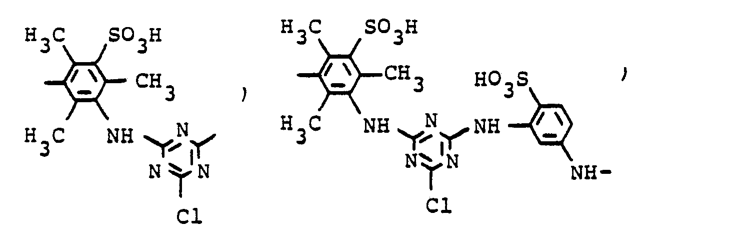 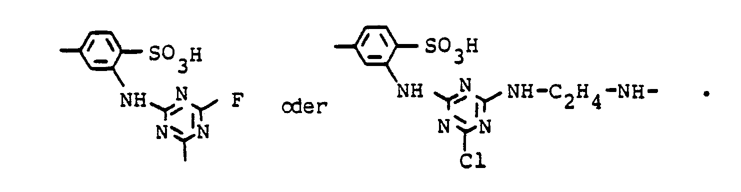 Phthalocyaninreste X entsprechen der Formel 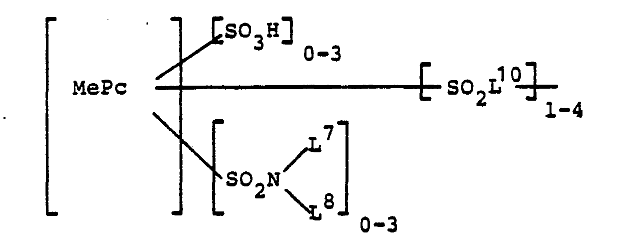 in der
Me Nickel oder Kupfer,
L7 und L⁸ unabhängig voneinander Wasserstoff oder gegebenenfalls substituiertes Alkyl, Aralkyl oder Aryl und
L¹⁰ ein Brückenglied oder eine direkte Bindung sind. Einzelne Reste L⁷ und L⁸ sind neben Wasserstoff z.B:.
Methyl, Ethyl, Propyl, Butyl, Hydroxyethyl oder Hydroxypropyl.

Brückenglieder L¹⁰ sind z.B: -HN-(alkylen)-NH-, -HN-(cycloalkylen)-NH-, -NH-aralkylen-NH-, -NH-(arylen)-NH-, -NH-(arylen)-N=N-(hetarylen)-NH-, -NH-(hetarylen)-N=N-(arylen)-NH- oder -NH-(arylen)-N=N-(arylen)-NH-, wobei die Wasserstoffatome der NH-Gruppen durch gegebenenfalls substituierte Alkyl-, Cycloalkyl- oder Arylgruppen ersetzt sein können, die miteinander auch verbunden sein und dadurch einen heterocyclischen Ring bilden können.

Einzelne Brückenglieder L¹⁰ sind beispielsweise: 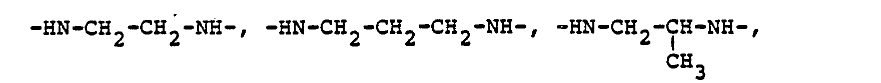 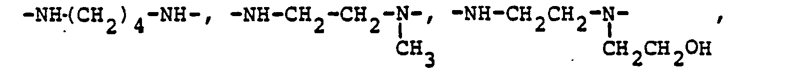 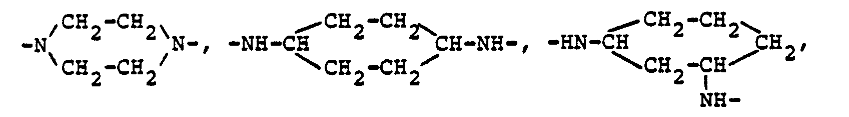 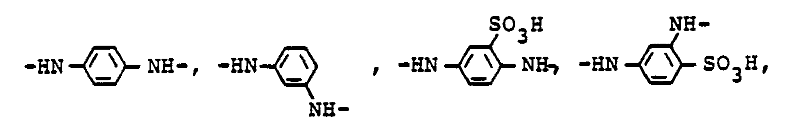 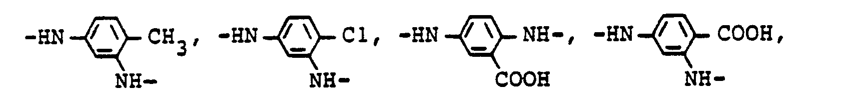 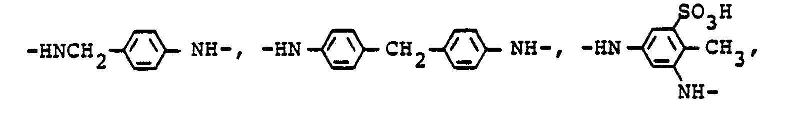 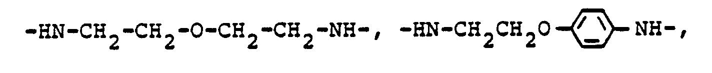 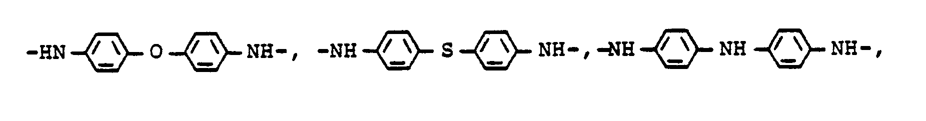 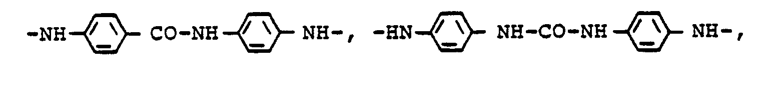 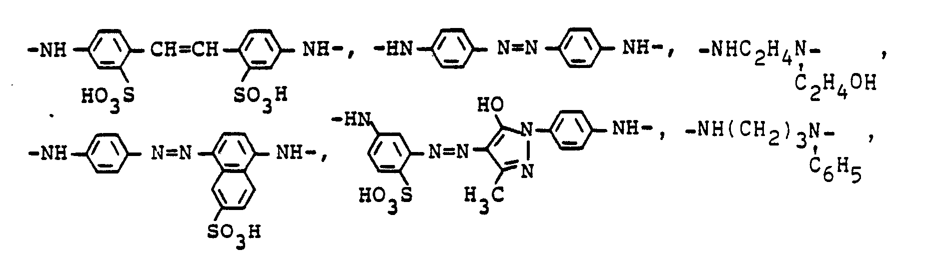 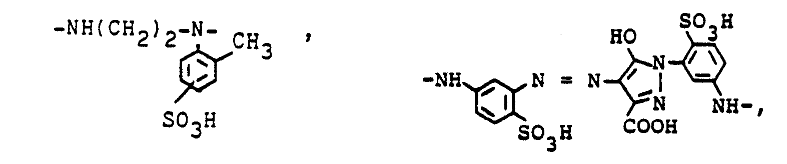 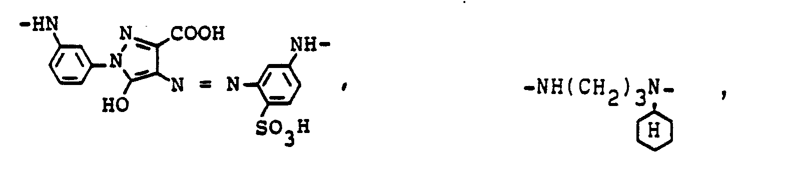 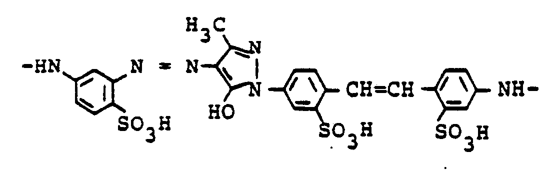 oder

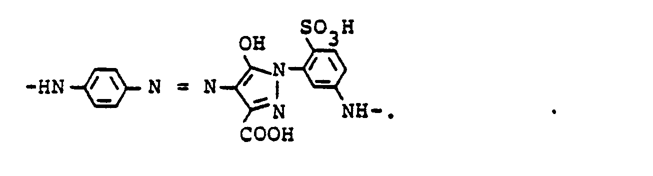

Bevorzugte Brückenglieder L¹⁰ sind z. B:. 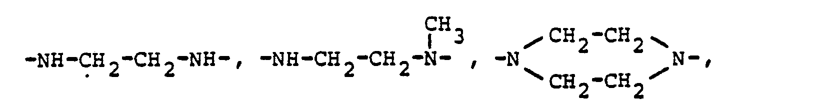 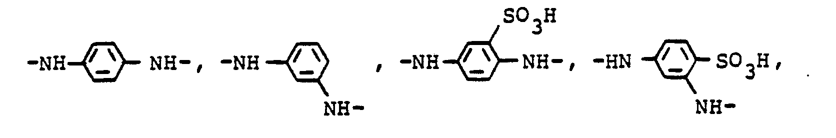 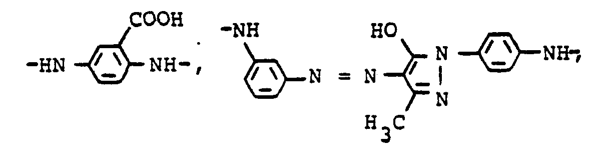 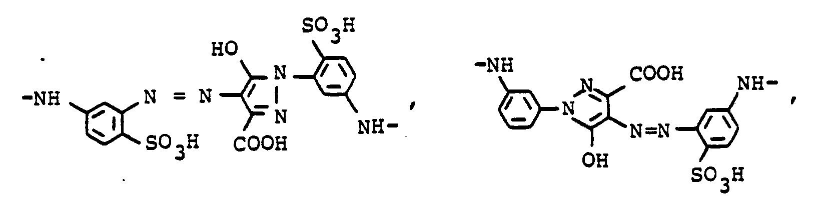 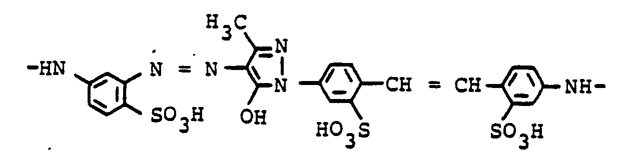 oder

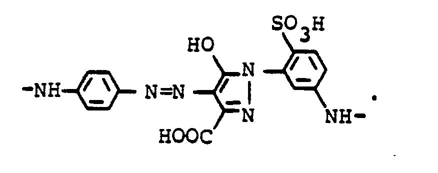

Anstelle der Azofarbstoffreste X können die Farbstoffe der Formel I auch entsprechende Metallkomplexfarbstoffreste enthalten, als komplexierende Metalle kommen dabei insbesondere Kupfer, Cobalt, Chrom, Nickel und Eisen in Betracht, wobei Kupfer, Cobalt und Chrom bevorzugt sind.

Die Metalle sind dabei in der Regel über-0- oder-COO- an die Farbstoffmoleküle gebunden.

Bei den Co- und Cr-Komplexen handelt es sich um 1:2 Komplexe während bei Einsatz von Cu ausschließlich 1:1 Komplexe entstehen.

Met ist bevorzugt Kupfer, Cobalt und Chrom. Die im folgenden genannten Farbstofftypen können zusätzlich durch in Reaktivfarbstoffen übliche Substituenten wie z.B. Cl, Br, OCH₃, NHCONH₂, NO₂, SO₃H, SO₂NH₂, COOH oder CONH₂ substituiert sein. Die Synthese der Farbstoffe erfolgt nach an sich bekannten Methoden.

Bevorzugte Komplextypen sind z. B: 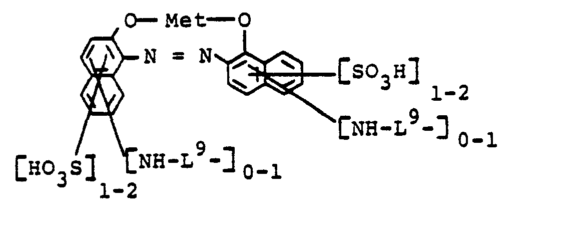 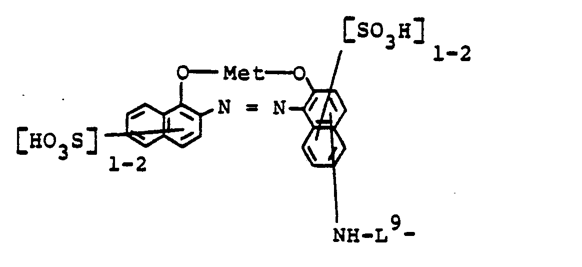 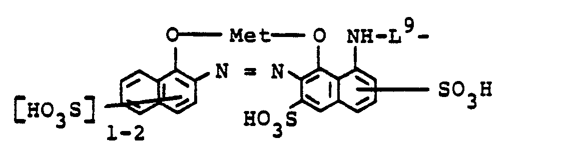 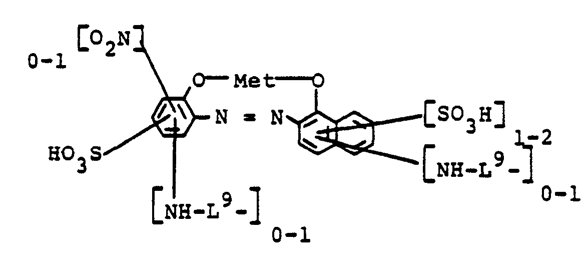 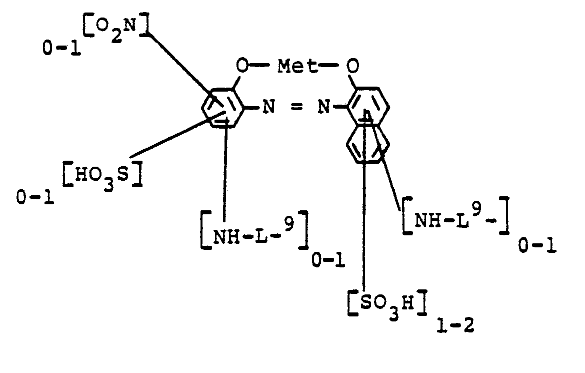 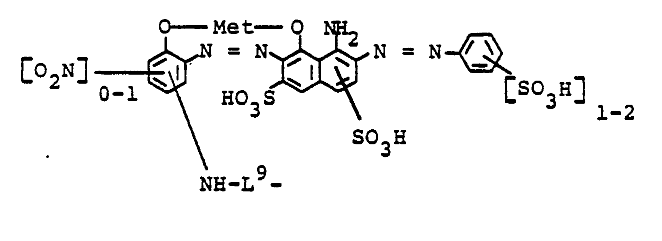 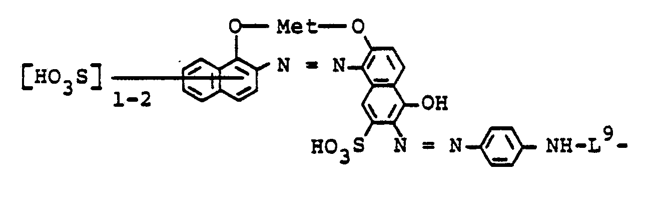 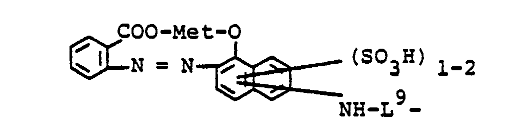 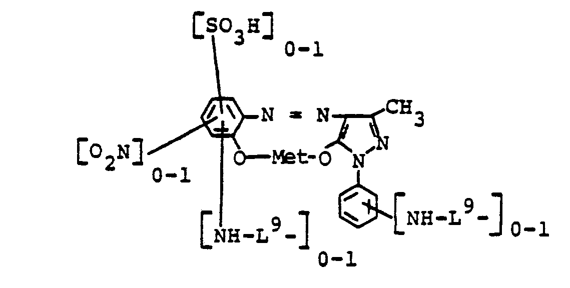 oder

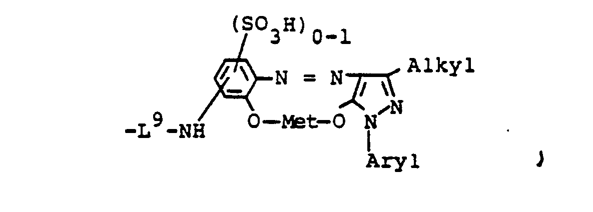

Aryl ist dabei ein durch beliebige Substituenten, insbesondere durch S0₃H, CI oder OCH₃ substituierter Phenyl- oder Naphthylrest und L⁹ hat die angegebene Bedeutung.

Auch unsymmetrische Co- oder Cr-Metallkomplexe vom 1:2 Typ sind herstellbar, wie beispielsweise:

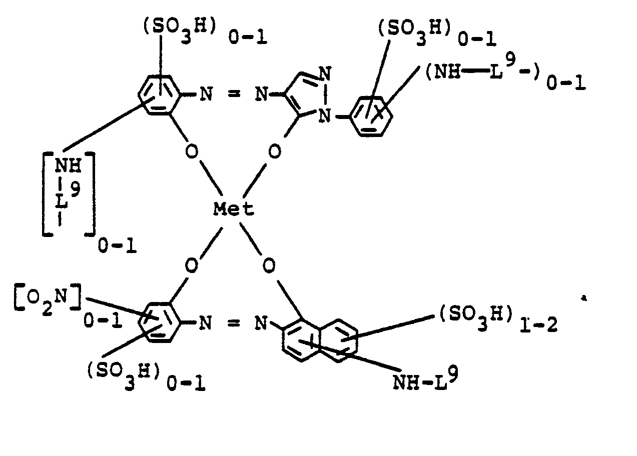

Besonders brilliante Blaufarbstoffe erhält man in der Reihe der Kupferformazankomplexfarbstoffe. Formazanreste X entsprechen dabei den allgemeinen Formeln 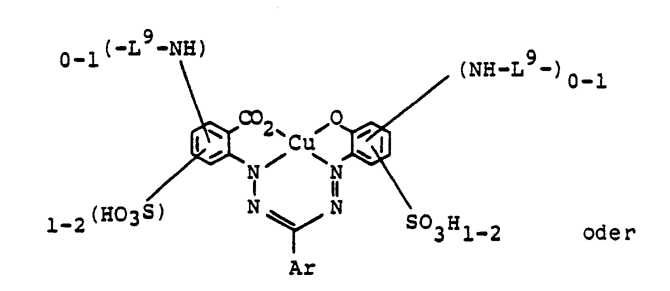 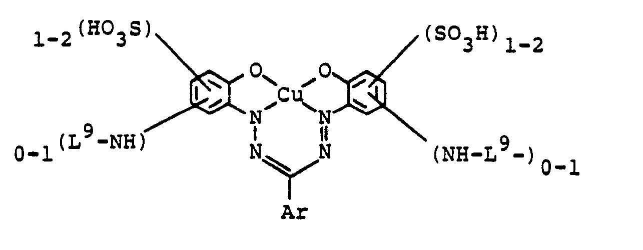 in denen Ar die auf Seite 56 angegebene Bedeutung hat.

Die Verbindungen der Formel eignen sich zum Färben von hydroxylgruppenhaltigen Substraten, Wolle und von Polyamiden und ergeben je nach Konstitution gelbe bis blaue Färbungen, die sich im allgemeinen durch gute Ausgiebigkeit und gute Echtheiten, wie Naß- und Lichtechtheit auszeichnen. Als Substrate sind insbesondere Baumwolle und Wolle zu nennen.

Als Färbeverfahren kommen je nach reaktivem Rest alle gebräuchlichen Verfahren in Betracht.

In den nachfolgenden Tabellenbeispielen sind erfindungsgemäße Farbstoffe entsprechend der allgemeinen Formel 1 beschrieben, wobei die Abkürzungen A¹ bis A8 folgende Bedeutung haben:

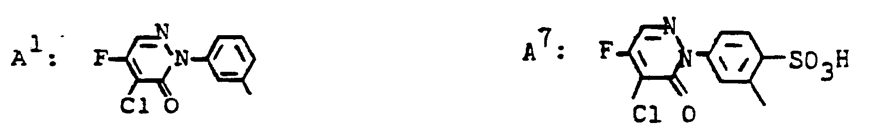

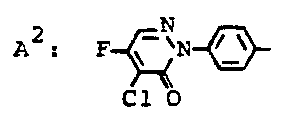

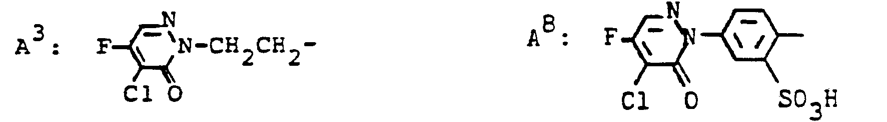

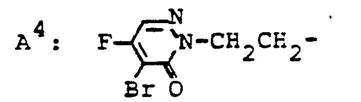

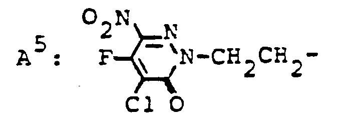

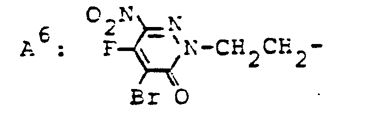

### Beispiel 1

Eine Suspension von 16 Teilen salzsauer wäßrig diazotiertem 1-(3'-Amino-4'-sulfophenyl)-5-chlor-4-Fluorpyridazon-6 wird mit 14,2 Teilen 1-(4'-Sulfophenyl)-3-carboxypyrazolon-5 versetzt. Durch Einstreuen von 25 Teilen Trinatriumphosphat wird ein pH-Wert von 6-7 eingestellt. Nach beendeter Kupplung wird der gebildete Farbstoff mit 70 Teilen Natriumchlorid ausgefällt und schonend getrocknet. Er färbt Baumwolle in lichtechten, grünstichig gelben Tönen.

Der in Beispiel 1 genannte Farbstoff entspricht der Formel

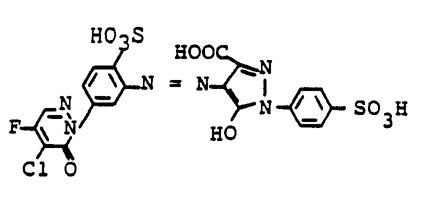

Weitere erfindungsgemäße Farbstoffe sind in der Tabelle 1 aufgeführt, wobei in der Spalte I der Rest der verwendeten Diazokomponente mit der angegebenen Bedeutung A¹ und A² steht, in der Spalte II die anstelle von 1-(4'-Sulfophenyl)-3-carboxypyrazolon-5 verwendete Kupplungskomponente, und in Spalte III die bei Färbung auf Baumwolle erzielte Nuance angegeben sind.

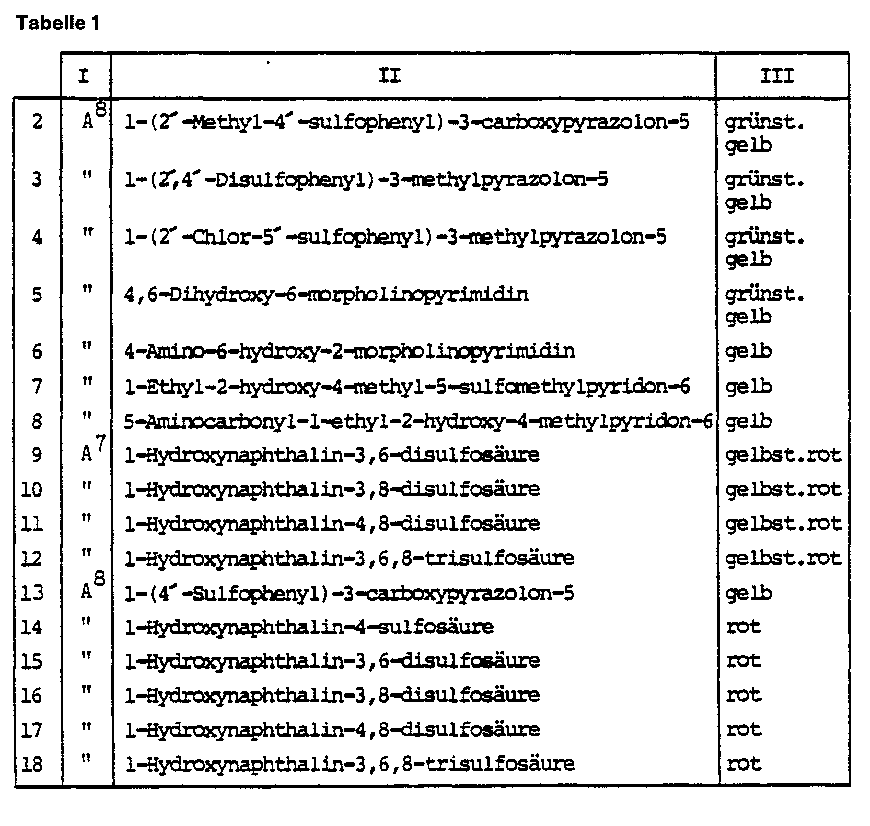

### Beispiel 19

39 Teile 1-Butyryl amino-8-hydroxynaphthalin-4,6-disulfonsäure werden in 500 Teilen Wasser bei 0°C neutral gelöst und mit 32 Teilen salzsauer diazotiertem 1-(4'Amino-3'-sulfophenyl-5-chlor-4-fluor-pyridazon-6 versetzt. Man kuppelt unter Zugabe von 10,5 Teilen Natriumbikarbonat bei pH 5-6 und fällt den Farbstoff mit Kaliumchlorid aus. Das Preßgut wird gefriergetrocknet. Man erhält ein dunkelrotes Pulver, das Baumwolle in brillanten roten Tönen mit guter Lichtechtheit färbt.

Der in Beispiel 19 genannte Farbstoff entspricht der Formel

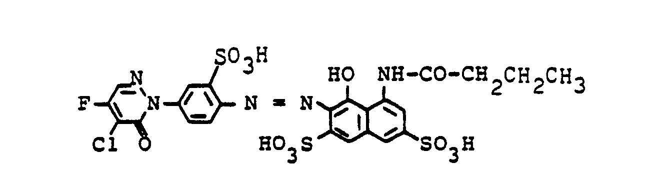

Weitere erfindungsgemäße Farbstoffe sind in Tabelle 2 zusammengefaßt, wobei in Spalte I der Rest der verwendeten Diazokomponente mit der angegebenen Abkürzung A^{l} und A², in Spalte II die verwendete Kupplungskomponente und in Spalte III der auf Baumwolle erzielte Farbton angegeben sind.

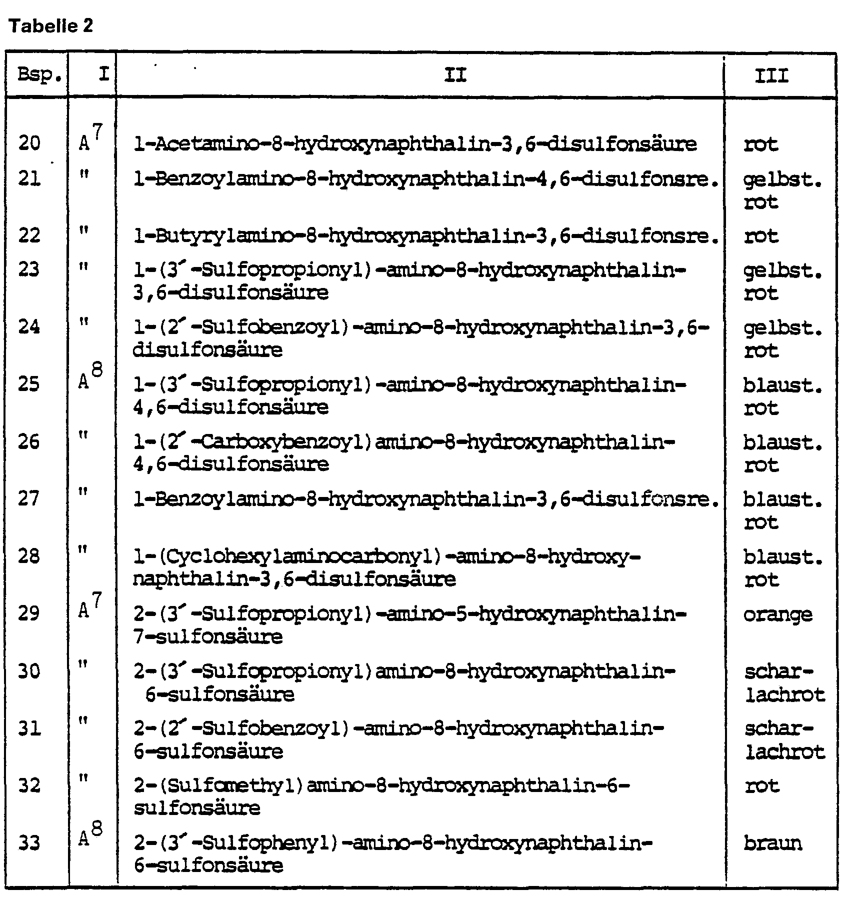

### Beispiel 34

25,3 Teile Anilin-2,5-disulfonsäure werden salzsauer diazotiert, dann wird eine Suspension von 31,6 Teilen 1-Amino-8-hydroxynaphthalin-3,6-disulfonsäure in 300 Teilen Wasser zugetropft. Man kuppelt über Nacht in stark salzsaurer Lösung aus. Danach werden 32 Teile salzsauer diazotiertes 1-(4'-Amino-3'-sulfophenyl)-5-chlor-4- fluorpyridazon-6 bei 5°C zugegeben und es wird drei Stunden bei pH 6,5-7 unter Zufügen von 18,8 Teilen Natriumcarbonat gerührt. Der Farbstoff wird aus neutraler Lösung mit Siedesalz gefällt und schonend getrocknet. Man erhält ein schwarzes Pulver, das Baumwolle in grünstichig marineblauen Tönen mit guter Lichtechtheit färbt.

Der in Beispiel 34 beschriebene Farbstoff entspricht der Formel

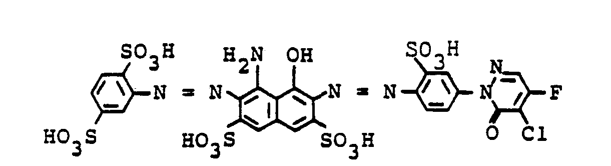

Weitere erfindungsgemäße Farbstoffe sind in Tabelle 3 zusammengefaßt, wobei in Spalte I der Rest der in saurem Medium aufgekuppelten und in Spalte II der Rest der in neutralem oder alkalischem Medium aufgekuppelten Diazokomponente und in Spalte III der auf Baumwolle erzielte Farbton aufgeführt sind.

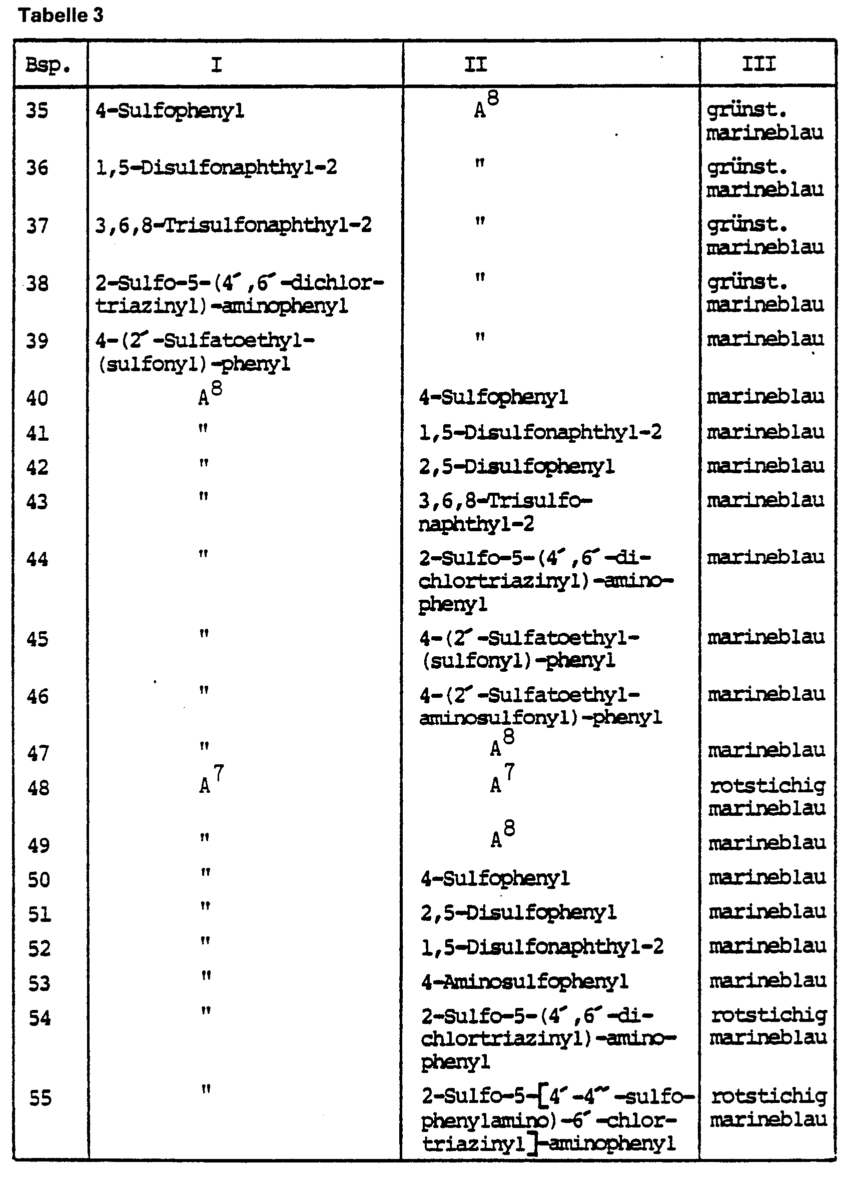

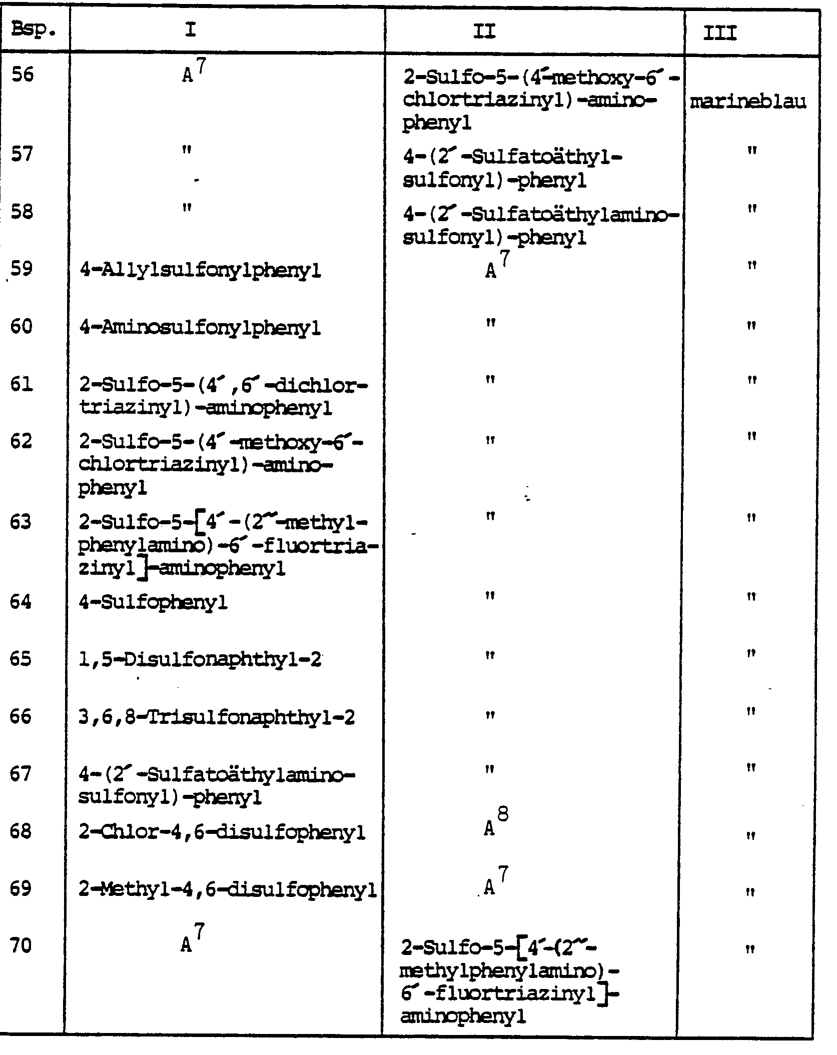

### Beispiel 71

Zu 61 Teilen des in 800 Teilen Wasser neutral gelösten sekundären Kondensationsproduktes aus Anilin-2,5- disulfonsäure, Cyanurchlorid und 2-Amino-5-hydroxynaphthalin-7-sulfonsäure werden bei 0°C 32 Teile salzsauer diazotiertes 1-(3'-Amino-4'-sulfophenyl)-5-chlor-4-fluorpyridazon-6 gegeben. Man kuppelt unter Zusatz von 14,6 Teilen Natriumbikarbonat schwach sauer aus und fällt den Farbstoff durch Zugabe von Siedesalz. Das Preßgut wird schonend getrocknet. Man erhält ein orangebraunes Pulver, das Baumwolle in brillanten orangefarbenen Tönen färbt. Der Farbstoff entspricht der Formel

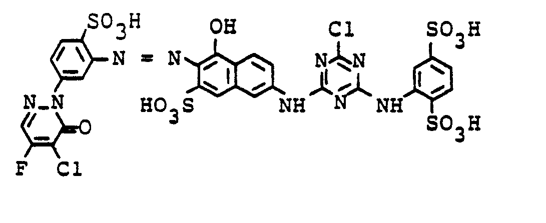

### Beispiel 72

In eine neutrale Lösung von 46,7 Teilen des primären Kondensationsproduktes aus Cyanurchlorid und 1-Amino-8-hydroxy-naphthalin-4,6-disulfonsäure in 800 Teilen Wasser werden 32 Teile salzsauer diazotiertes 1-(3'-Amino-4'-sulfophenyl)-5-chlor-4-fluorpyridazon-6 eingetragen. Man fügt während der Kupplung 23,5 Teile Trinatriumphosphat zu und isoliert den Farbstoff durch Zugabe von Siedesalz. Das Preßgut wird gefriergetrocknet. Man erhält ein rotes Pulver, das in wässriger Lösung Baumwolle in brillanten gelbstichig roten Tönen mit guter Lichtechtheit färbt. Der Farbstoff entspricht der Formel

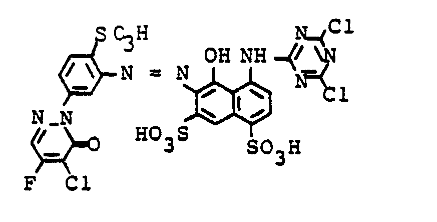

### Beispiel 73

58,7 Teile des sekundären Kondensationsproduktes aus Anilin-4-sulfonsäure, Cyanurfluorid und 1-Amino-8-hydroxynaphthalin-3,6-disulfonsäure werden bei 0°C neutral in 800 Teilen Wasser gelöst und mit 32 Teilen salzsauer diazotiertem 1-(3'-Amino-40-sulfo-Phenyl)-5-chlor-4-fluorpyridazon-6 versetzt. Durch Zugabe von 24,5 Teilen Trinatriumphopphat wird schwach sauer ausgekuppelt und mit Siedesalz der Farbstoff gefällt. Man erhält nach der Trocknung ein rotes Pulver, das in wäßriger Lösung Baumwolle in echten brillanten roten Tönen färbt. Der Farbstoff entspricht der Formel

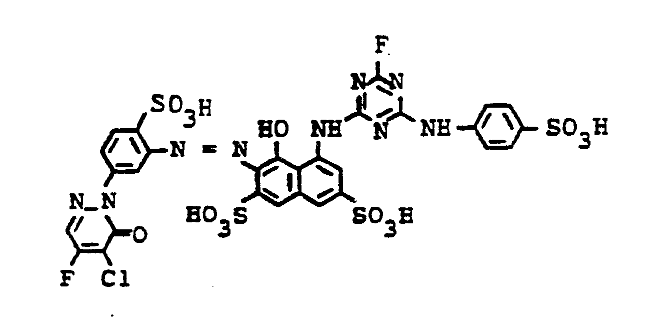

### Beispiel 74

71,2 Teile des sekundären Kondensationsproduktes aus 4-(2'-Sulfatoäthylsulfonyl)-anilin, Cyanurchlorid und 1-Amino-8-hydroxynaphthalin-3,6-disulfonsäure werden bei 5°C in 800 Teilen Wasser gelöst und 32 Teile salzsauer diazotiertes 1-(4'-Amino-3'-sulfophenyl-5-chlor-4-fluorpyridazon-6 zugefügt. Durch Zugabe von 18,4 Teilen Natriumbikarbonat hält man während der Kupplung den pH-Wert schwach sauer. Der Farbstoff wird durch Zusatz von Biedesalz gefällt und gefriergetrocknet. Man erhält ein schwarzrotes Pulver, das Baumwolle in wässriger Lösung in bordeauxroten Tönen färbt. Der Farbstoff entspricht der Formel

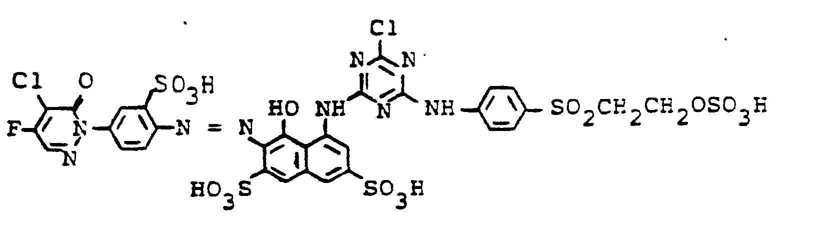

Weitere erfindungsgemäße Farbstoffe sind in Tabelle 4 aufgeführt, wobei in Spalte I der Rest der verwendeten Diazokomponente, in Spalte II die verwendete Kupplungskomponente, in Spalte III das verwendete primäre Triazin-Kondensationsprodukt und in Spalte IV der auf Baumwolle erzielte Farbton angegeben sind.

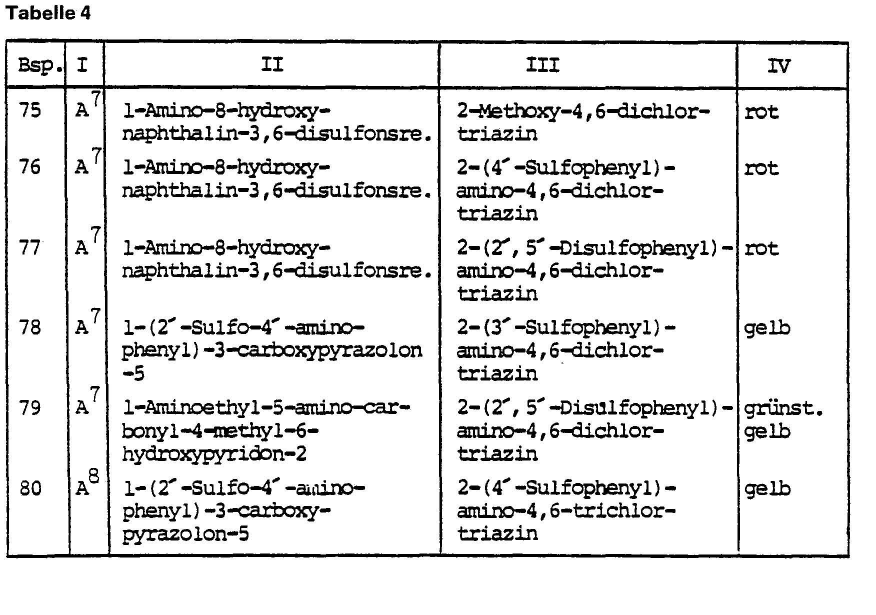

### Beispiel 81

63 Teile des Farbstoffes, der durch Kupplung von diazotierter 2-Amino-4-(4',6'-dichlor-1',3',5'-triazinyl)-aminobenzolsulfonsäure auf 1-(4'-Sulfophenyl)-3-carboxypyrazolon-5 erhalten wurde, werden in 950 Teilen Wasser gelöst mit 24 Teilen 1-(3= Aminophenyl)-5-chlor-4-fluorpyridazon-6 versetzt und 4 Stunden bei 35-C gerührt, wobei durch Zugabe von 2N-Sodalösung ein pH-Wert von 6,5 aufrecht erhalten wird. Nach beendeter Umsetzung wird der Farbstoff mit Natriumchlorid abgeschieden und schonend getrocknet. Er färbt Baumwolle in echten, grünstichiggelben Nuancen und entspricht der Formel

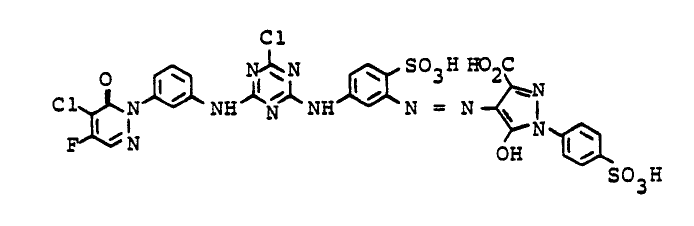

### Beispiel 82

54,9 Teile des Farbstoffnatriumsalzes das durch Kupplung von 2-Amino-5-acetylaminobenzolsulfonsäure auf 1-(4'-Sulfo-phenyl)-3-carboxypyrazolon-5 und anschließende Verseifung der Acetylaminogruppe erhalten wurde, werden in 750 Teilen Eiswasser gelöst und bei pH 6 mit 18,5 Teilen Cyanurchlorid umgesetzt. Sobald sich keine diazotierbaren Aminogruppen mehr nachweisen lassen, werden 24 Teile 1-(3'-Aminophenyl)-5-chlor-4-fluorpyridazon-6 zugegeben und 4 Stunden bei 30°C und pH 6,5 gerührt. Der mit Kaliumchlorid abgeschiedene und schonend getrocknete Farbstoff ergibt auf Baumwolle brillante rotstichig gelbe Färbungen und entspricht der Formel

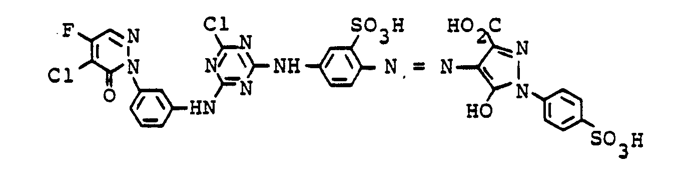

### Beispiel 83

Zu einer Suspension von 33,6 Teilen salzsauer diazotiertem primärem Kondensationsprodukt aus Cyanurchlorid und 1,3-phenylendiamin-4-sulfonsäure gibt man bei 5°C 36,1 Teile 1-Acetylamino-8-hydroxynaphthalin-4,6-disulfonsäure in 300 Teilen Wasser und kuppelt unter Zufügen von 17,9 Teilen Natriumbikarbonat bei pH 5 aus. 23,9 Teile 1-(4'-Aminophenyl)-5-chlor-4-fluorpyridazon-6 in 100 Teilen Dimethylformamid werden zugegeben und bei 35-40° C und unter Zusatz von 14,9 Teilen Natriumbikarbonat bei pH = 6 kondensiert. Der ausgefallene Farbstoff wird abgesaugt und getrocknet. Man erhält ein rotes Pulver, das Baumwolle in brillanten gelbstichig roten Tönen mit guter Lichtechtheit färbt. Der Farbstoff entspricht der Formel

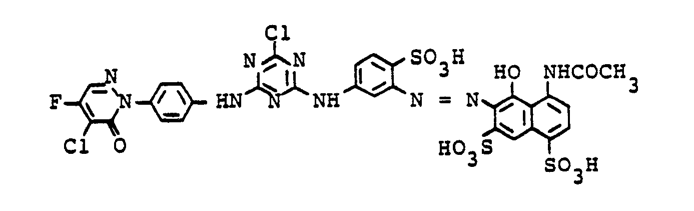

Weitere erfindungsgemäße Farbstoffe sind in der Tabelle 5 aufgeführt, wobei in Spalte die Art des im Triazinrest abspaltbaren Halogenatoms, in Spalte II der Rest des statt 1-(4'-Aminophenyl)-5-chlor-4- fluorpyridazon-6 verwendeten Amins, in Spalte 111 und IV die statt 1,3-Phenylendiamin-4-sulfonsäure bzw. 1-Acetylamino-8-hydroxynaphthalin-4,6-di-sulfonsäure verwendeten Verbindungen und in Spalte V der auf Baumwolle erzielte Farbton angegeben sind.

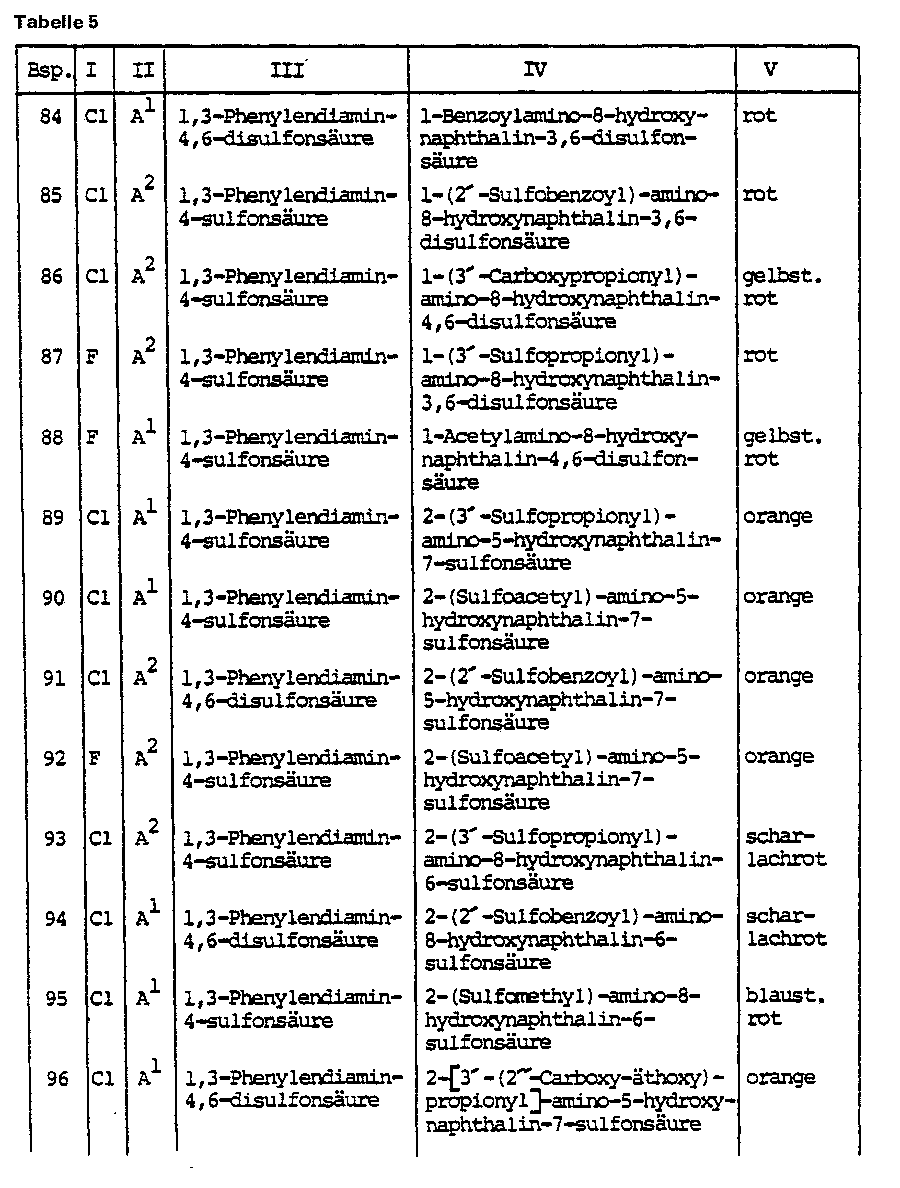

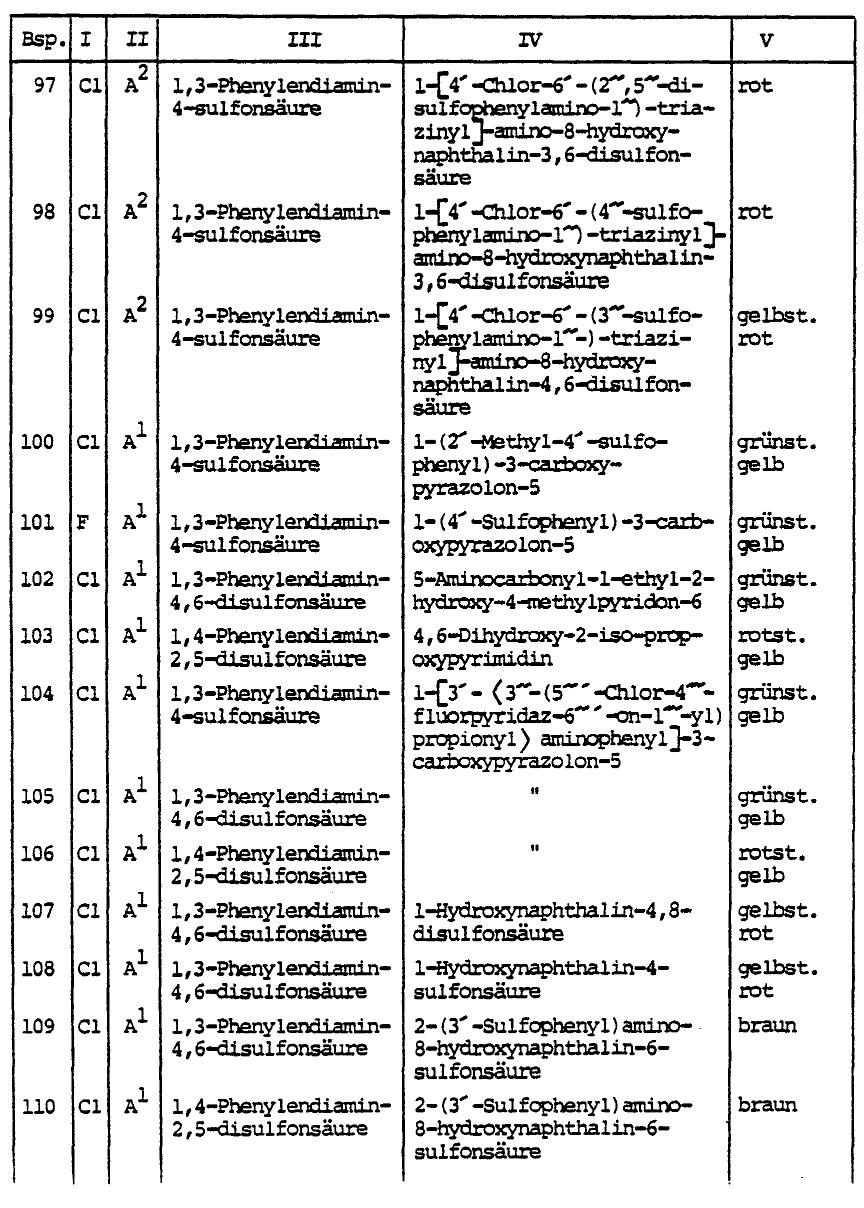

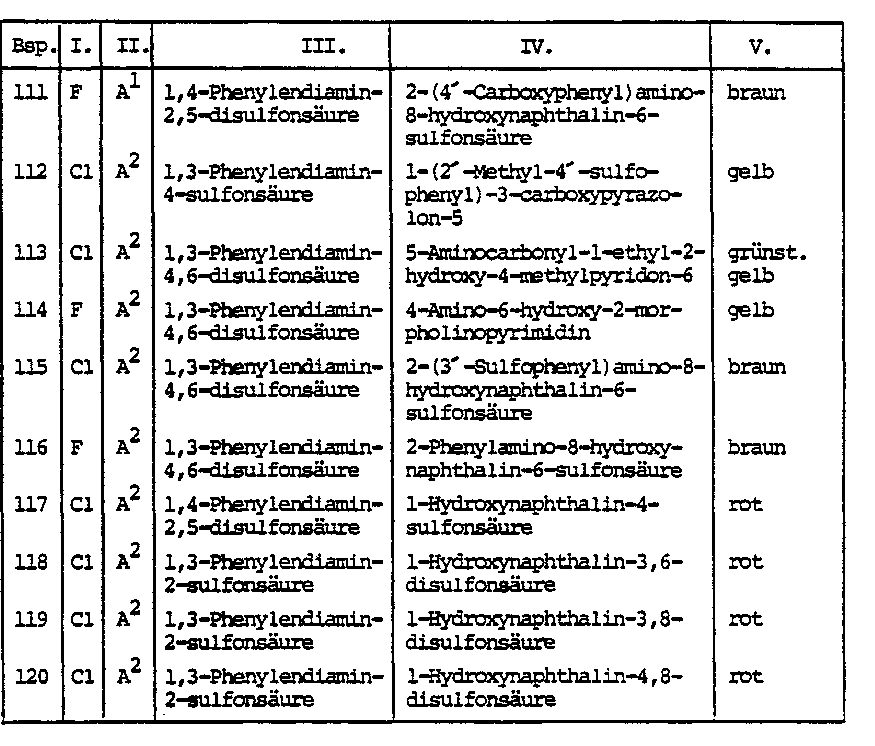

### Beispiel 121

54,5 Teile des durch Kupplung von diazotierter 2-Amino-naphthalin-3,6,8-trisulfosäure auf 3-Aminophenylharnstoff erhaltenen Farbstoffes werden in 500 Teilen Wasser neutral gelöst und mit 19 Teilen Cyanurchlorid bei pH 6 umgesetzt. Danach werden 24 Teile 1-(3'-Aminophenyl)-5-chlor-4-fluor-pyridazon-6 zugegeben und 4 Stunden bei 30-35°C gerührt. Der mit Kaliumchlorid abgeschiedene und schonend getrocknete Farbstoff färbt Baumwolle in echten, goldgelben Nuancen. Er entspricht der Formel

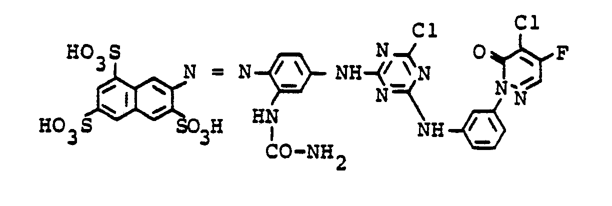

### Beispiel 122

47 Teile des primären Kondensationsproduktes aus Cyanurchlorid und 1-Amino-8-hydroxynaphthalin-3,6- disulfonsäure werden bei 0°C in 600 Teilen Wasser bei pH 6 gelöst und 23,9 Teile 1-(4'-Aminophenyl)-5-chlor-4- fluorpyridazon-6 in 80 Teilen Dimethylformamid zugegeben. Man erwärmt auf 35-40° C und hält den pH-Wert durch zufügen von 13,8 Teilen Natriumhydrogencarbonat bei 6. Nach 1 - 2 Stunden wird mit Eis auf 5°C gekühlt und 25,3 Teile salzsauer diazotierte Anilin-2,5-disulfonsäure zugesetzt. Durch Zugabe von 18,8 Teilen Natriumbikarbonat wird während der Kupplung ein pH-Wert von 5 - 6 gehalten. Man isoliert den Farbstoff durch Zusatz von Kaliumchlorid und trocknet. Das erhaltene dunkelrote Pulver färbt Baumwolle in wäßriger Lösung in brillanten blaustichig roten Tönen. Der Farbstoff entspricht der Formel

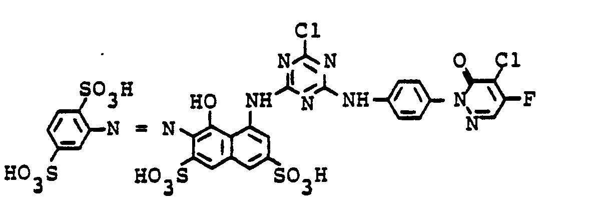

### Beispiel 123

Zu einer Lösung von 47 Teilen des primären Kondensationsproduktes aus Cyanurchlorid und 1-Amino-8-hydroxynaphthalin-3,6-disulfonsäure in 600 Teilen Wasser werden 25,3 Teile salzsauer diazotierte Anilin-2,5- disulfonsäure gegeben und bei 5°C und pH 5-6 durch Zugabe von 18,5 Teilen Natriumbikarbonat gekuppelt. Zum Reaktionsgemisch fügt man 23,9 Teile 1-(4'-Aminophenyl)-5-chlor-4-fluorpyridazon-6 in 100 Teilen Dimethylformamid, erhöht die Temperatur auf 35-40° C und hält während der Kondensation durch Zusatz von 12,8 Teilen Natriumbikarbonat den pH-Wert schwach sauer. Aus dem abgekühlten Reaktionsgemisch wird der Farbstoff mit Kaliumchlorid abgeschieden und getrocknet. Er entspricht in Konstitution und Eigenschaften dem in Beispiel 122 beschriebenen.

### Beispiel 124

Ersetzt man das in Beispiel 122 und 123 verwendete 1-(4'-Aminophenyl)-5-chlor-4-fluorpyridazon-6 durch 23,9 Teile 1-(3'-Aminophenyl)-5-chlor-4-fluorpyridazon-6, so erhält man einen Farbstoff mit ähnlichen Eigenschaften.

Weitere erfindungsgemäße Farbstoffe sind in Tabelle 6 aufgeführt, wobei in Spalte I und II die verwendete Diazo- und Kupplungskomponente, in Spalte 111 die Art des abspaltbaren Halogenatoms am Triazinrest, in Spalte IV der Rest des an den Triazinring gebundenen Amins und in Spalte V der auf Baumwolle erzielte Farbton genannt sind.

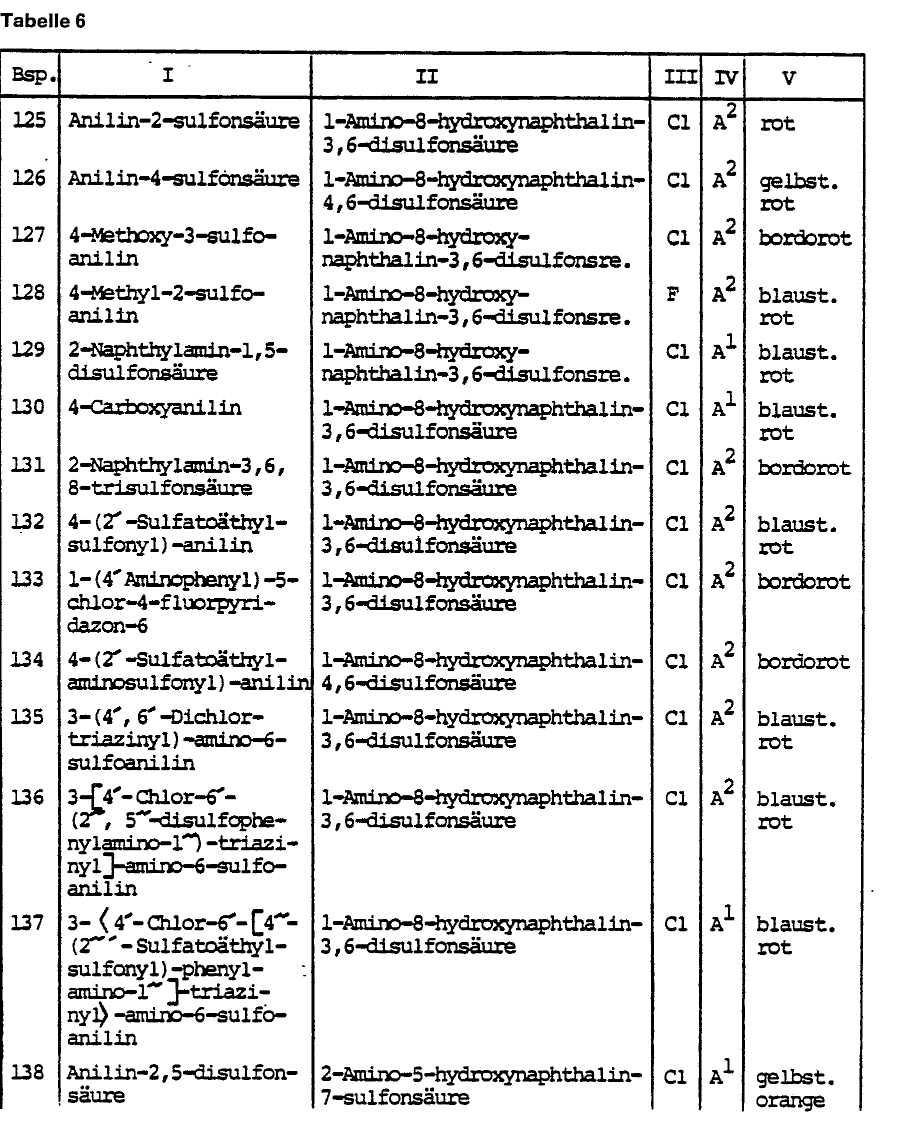

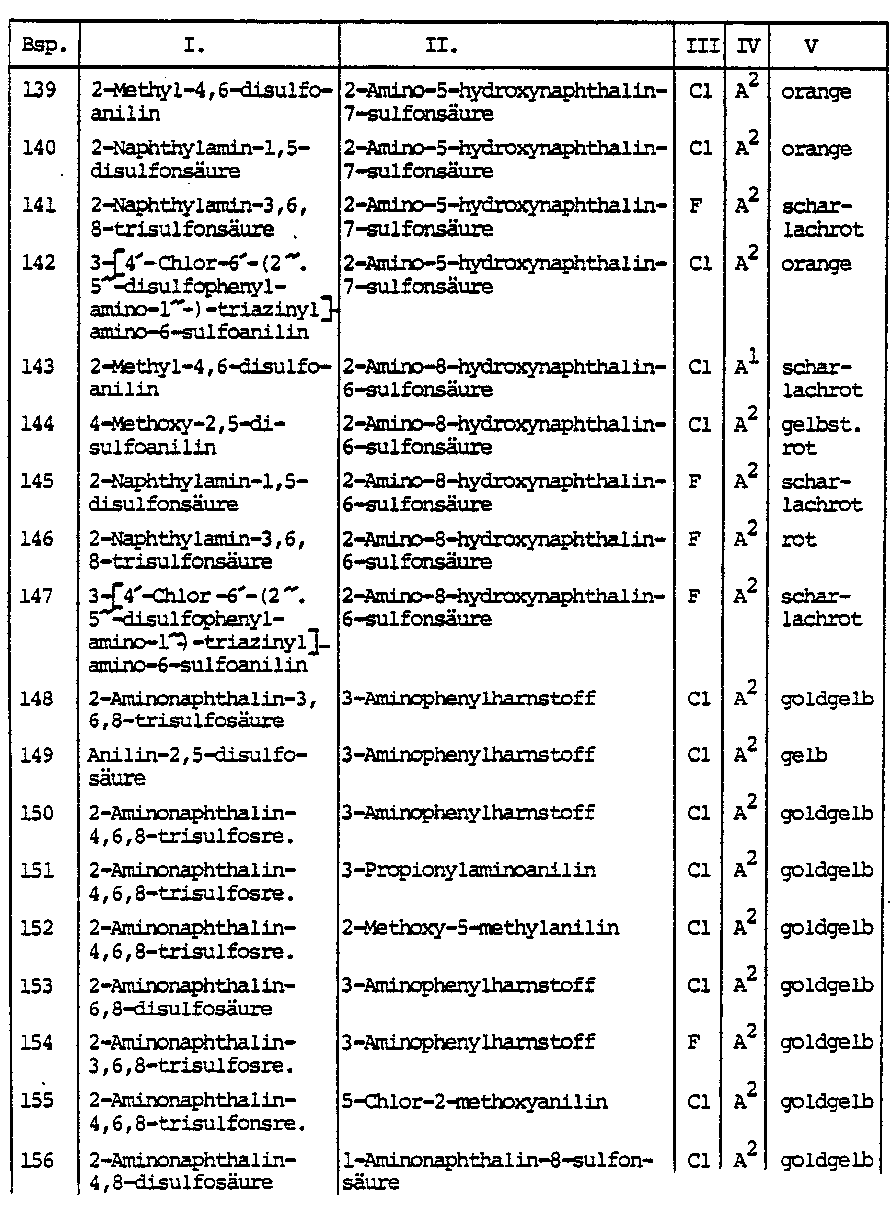

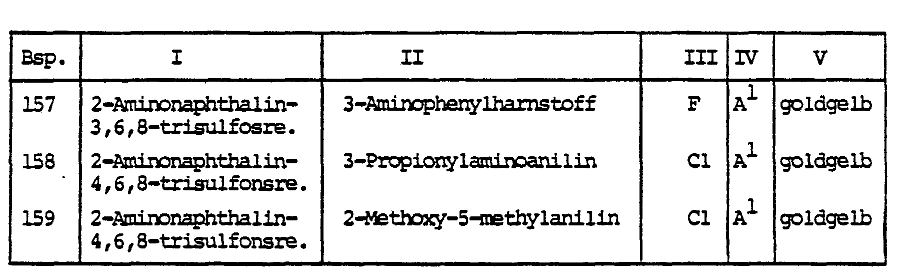

### Beispiel 160

Zu 17,3 Teilen salzsauer diazotierter Anilin-4-sulfonsäure werden bei 5°C 31,8 Teile einer Suspension von 1-Amino-8-hydroxy-naphthalin-3,6-disulfonsäure in 300 Teilen Wasser gegeben. Man kuppelt über Nacht bei pH 1-2 und fügt anschließend 38,6 Teile einer Suspension von salzsauer diazotiertem primärem Kondensationsprodukt aus Cyanurchlorid und 1,3-Phenylendiamin-4-sulfonsäure zu. Durch Zugabe von 17,8 Teilen Natriumcarbonat wird schwach sauer ausgekuppelt; anschließend wird eine Lösung von 23,9 Teilen 1-(4'-Aminophenyl)-5-chlor-4-fluorpyridazon-6 in 100 Teilen DMF zugesetzt. Man kondensiert bei 40°C unter Zugabe von 16,6 Teilen Natriumbikarbonat und fällt den Farbstoff mit Siedesalz aus. Man erhält nach dem Trocknen ein schwarzes Pulver, das Baumwolle in echten, marineblauen Tönen färbt. Der Farbstoff entspricht der Formel

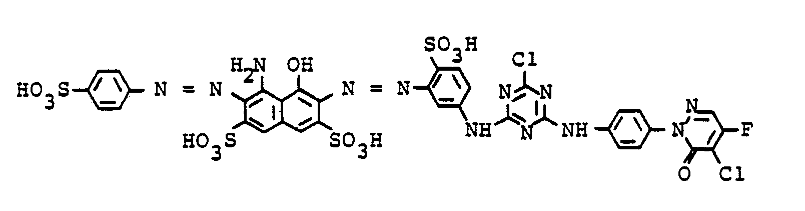

Weitere erfindungsgemäße Farbstoffe sind in Tabelle 7 zusammengefaßt, wobei in Spalte die zur sauren Kupplung verwendete Diazokomponente, in Spalte II die zur Kupplung in neutraler oder alkalischer Lösung verwendete Diazokomponente, in Spalte III die Art des abspaltbaren Halogenatoms am Triazinrest, in Spalte IV der Rest des am Triazin gebundenen Amins und in Spalte V der auf Baumwolle erzielte Farbton angegeben sind.

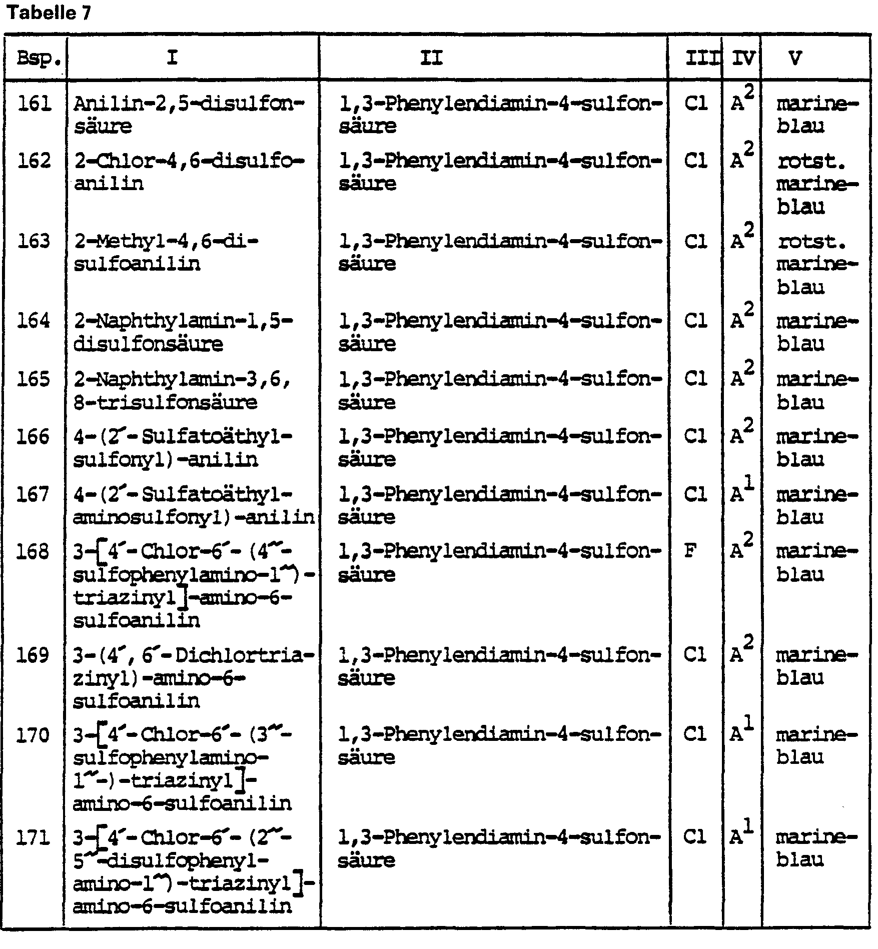

### Beispiel 172

38,6 Teile des primären Kondensationsproduktes aus Cyanurchlorid und 1,3-Phenylendiamin-4-sulfonsäure werden salzsauer diazotiert und mit einer Suspension von 31,8 Teilen 1-Amino-8-hydroxynaphthalin-3,6- disulfonsäure in 300 Teilen Wasser versetzt. Man kuppelt unter Zusatz von 14,8 Teilen Natriumacetat bei pH 3-4 aus. Man setzt 25,4 Teile salzsauer diazotierte Anilin-2,5-disulfonsäure zu und kuppelt unter Zugabe von 16,4 Teilen Natriumcarbonat schwach sauer aus. Dem Reaktionsgemisch werden 23,9 Teile 1-(4'-Aminophenyl-5-chlor-4-fluorpyridazon-6, gelöst in 100 Teilen Dimethylformamid, zugesetzt und der pH-Wert wird bei 40'C mit 16,5 Teilen Natriumbikarbonat bei 6-7 gehalten. Der Farbstoff wird mit Kaliumchlorid gefällt. Man erhält nach dem Trocknen ein schwarzes Pulver, das Baumwolle in echten marineblauen Tönen färbt. Der in Beispiel 172 genannte Farbstoff entspricht der Formel

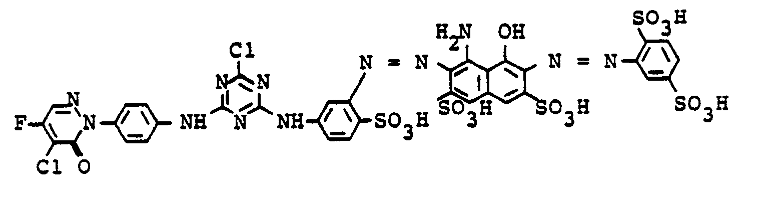

Weitere erfindungsgemäße Farbstoffe sind in Tabelle 8 zusammengefaßt, wobei in Spalte I die zur sauren Kupplung verwendete Diazokomponente, in Spalte II die zur Kupplung in neutraler oder alkalischer Lösung verwendete Diazokomponente, in Spalte III die Art des abspaltbaren Halogenatoms am Triazinrest, in Spalte IV der Rest des am Triazin gebundenen Amins und in Spalte V der auf Baumwolle erzielte Farbton angegeben sind.

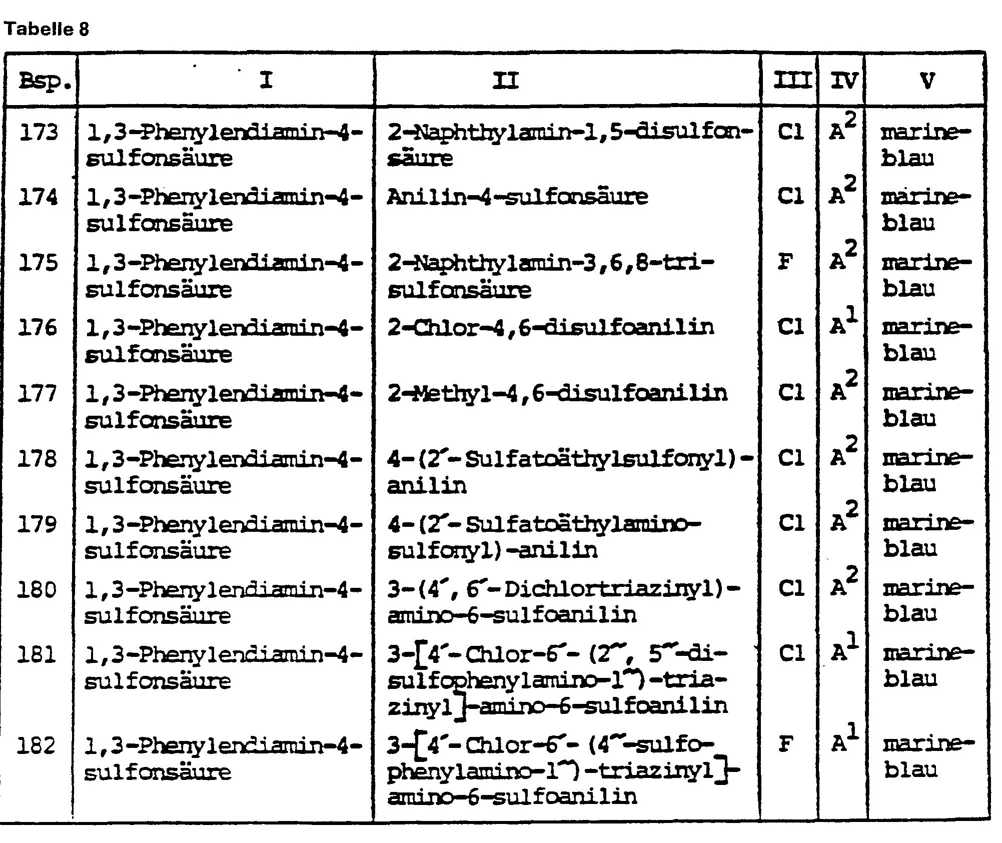

### Beispiel 183

53,7 Teile diazotierte 1-Amino-4-(4",8"disulfonaphthyl-2)-azonaphthalin-6-sulfonsäure werden bei essigsaurem pH auf 22,3 Teile 1-Aminonaphthalin-6/7-sulfonsäure gekuppelt. Dann wird mit 19 Teilen Cyanurchlorid bei pH 6-7 und 10-20° C umgesetzt und mit 24 Teilen 1-(3'-Aminophenyl)-5-chlor-4-fluorpyridazon-6 ein Chloratom des Triazinringes ausgetauscht. Der durch Aussalzen mit Kaliumchlorid isolierte und schonend getrocknete Farbstoff färbt Baumwolle in rotstichig braunen Tönen und entspricht der Formel

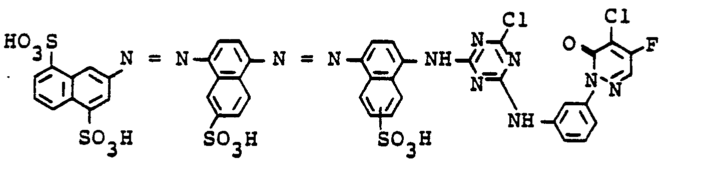

Weitere erfindungsgemäße Farbstoffe sind in Tabelle 9 aufgeführt, wobei in Spalte I die anstelle von 2-Aminonaphthalin-4,8-disulfonsäure verwendete Diazokomponente, in Spalte II bzw. III die statt 1-Aminonaphthalin-6- bzw. -6/7-sulfonsäure verwendete Kupplungskomponente, in Spalte IV der Rest des an den Triazinring gebundenen Amins, in Spalte V die Art des austauschbaren Halogenatoms im Triazinring und in Spalte VI der auf Baumwolle erzielte Farbton stehen.

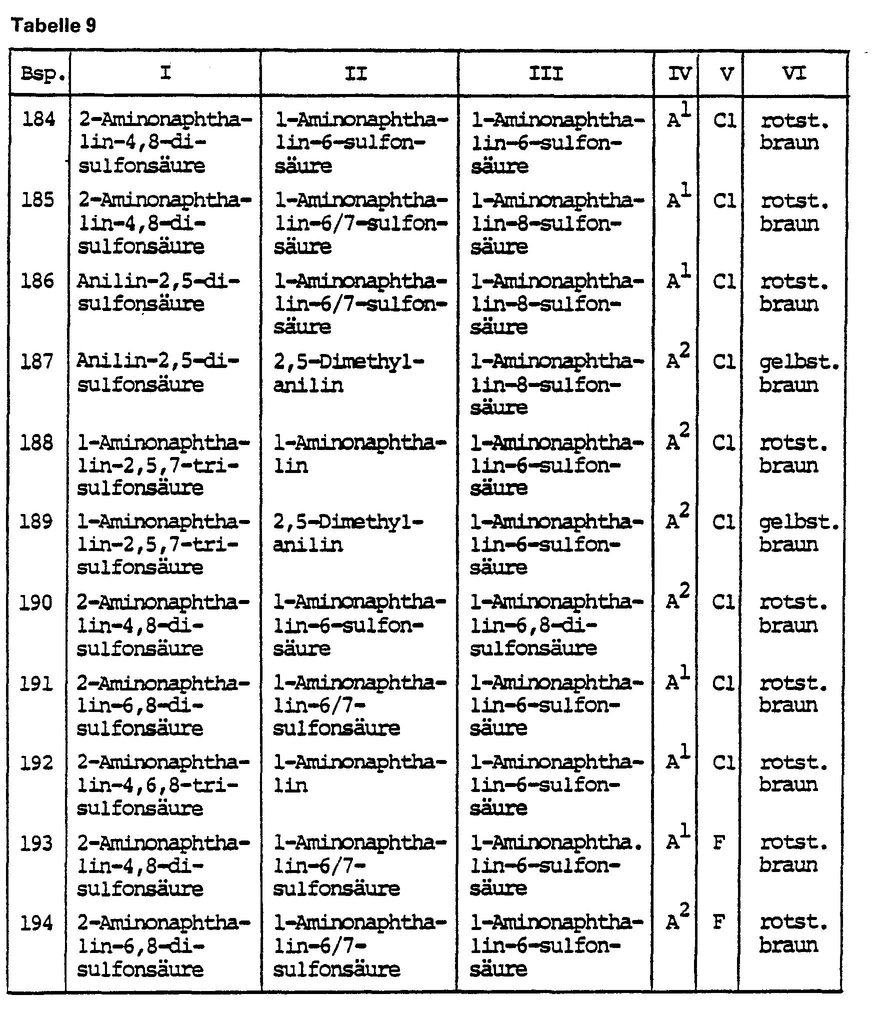

### Beispiel 195

6,1 Teile Farbstoff der Formel 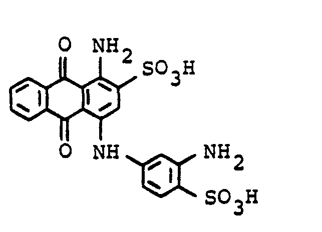 werden in 80 Teilen N-Methylpyrrolidon gelöst und mit 3,6 Teilen CICO-A³ bei 30-40° C versetzt. Nach 1- stündigem Nachrühren wird mit 100 Teilen einer gesättigten Kaliumchloridlösung der Farbstoff der Formel 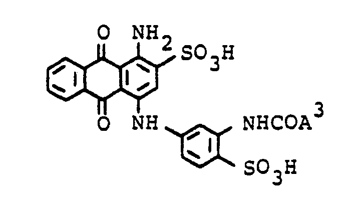 gewonnen.

Ausbeute: 20 Teile (Farbstoffgehalt: ca. 30 %)
In analoger Weise wurden folgende Farbstoffe der allgemeinen Formel 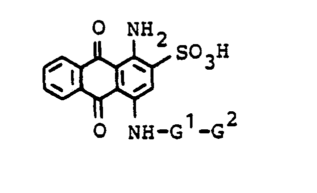 hergestellt. Die verwendeten Ausgangsprodukte sind bekannt.

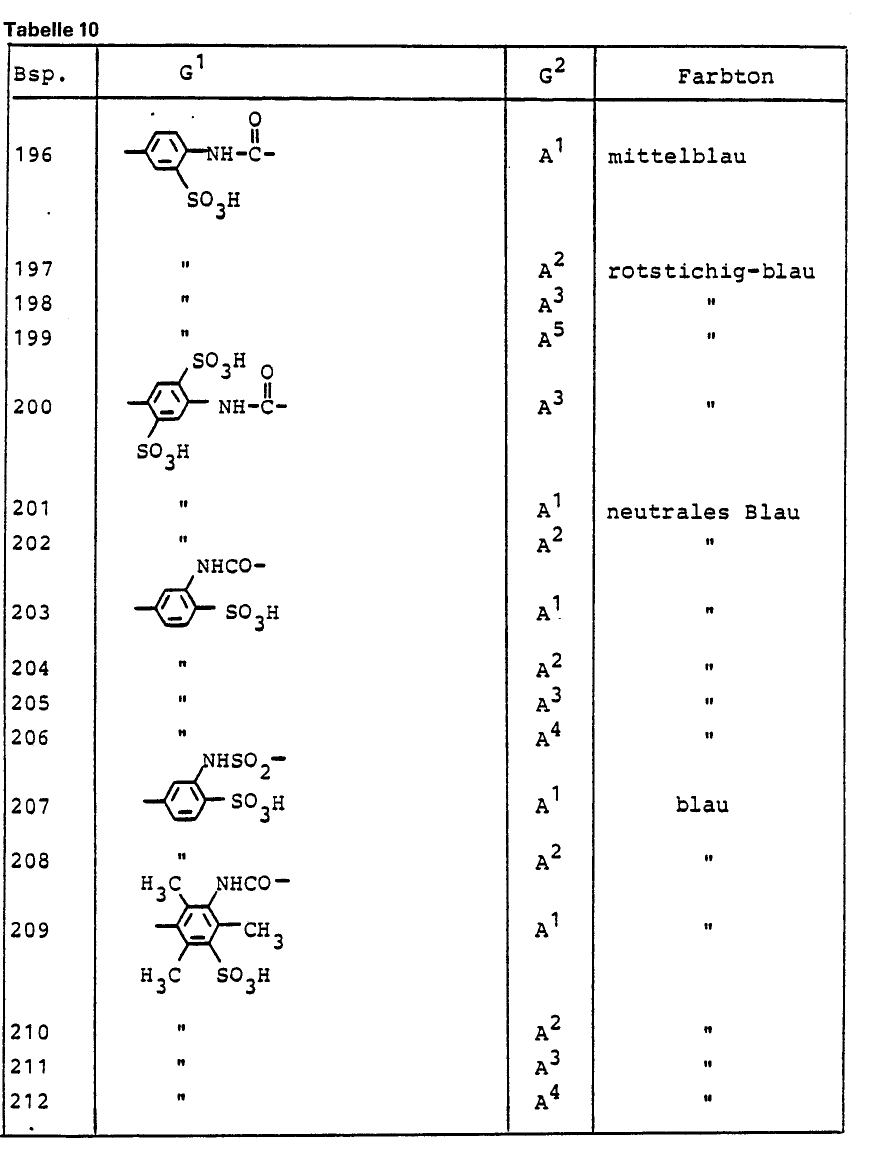

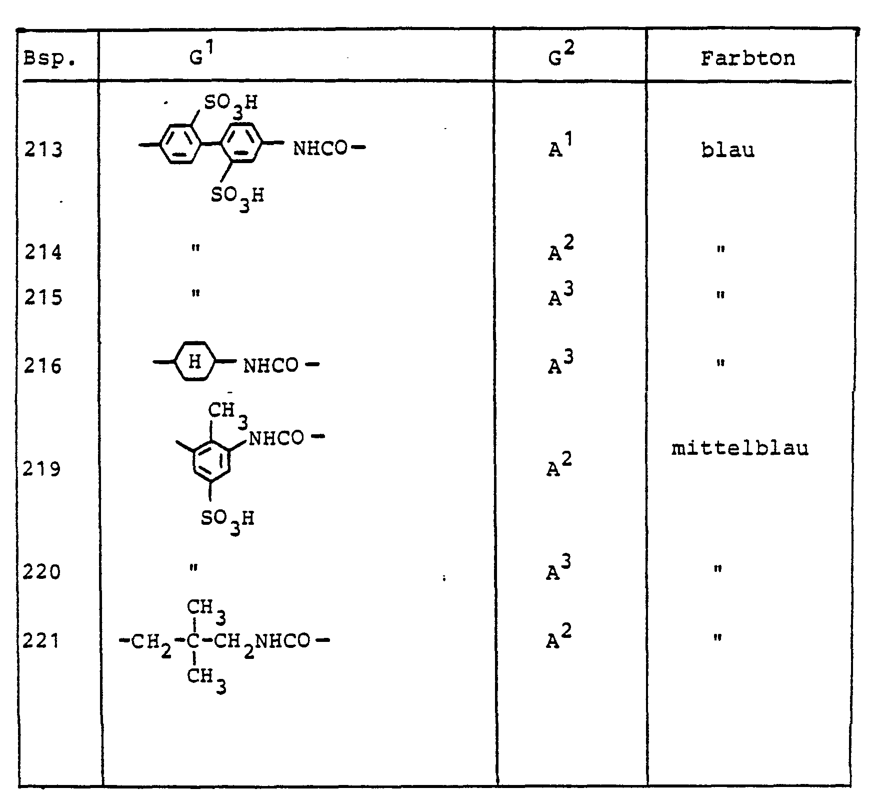

### Beispiel 224

69 Teile des Farbstoffs der Formel

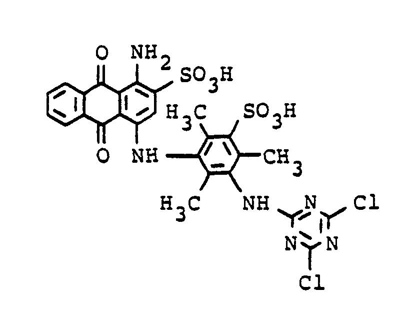

werden auf bekannte Weise hergestellt. Zur Reaktionslösung werden bei 20°C 23 Teile des Amins H₂N-A² gegeben und der pH-Wert durch langsame Zugabe von 10 %iger Sodalösung auf pH 7 gestellt. Durch Aussalzen mit NaClläßt sich der blaue Farbstoff der Formel 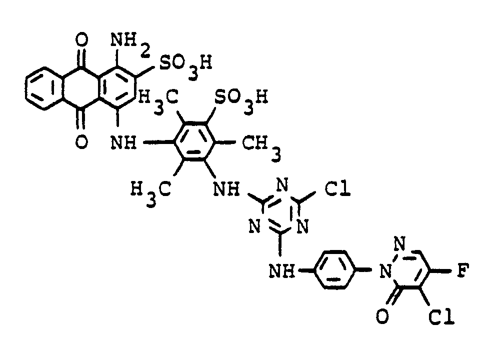 in einer Ausbeute von 74 Teilen erhalten.

Auf analoge Weise wurden folgende Farbstoffe synthetisiert:

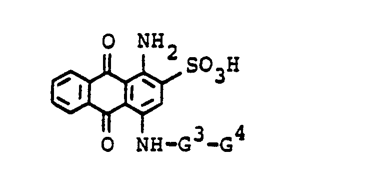

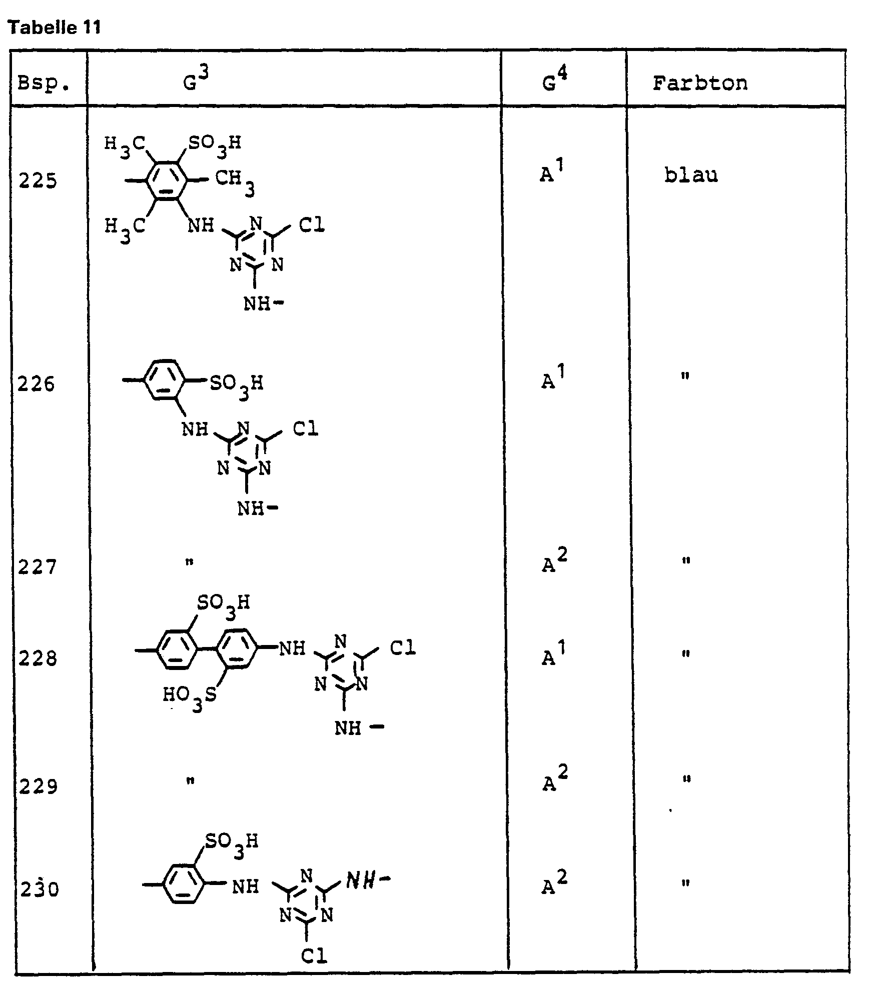

### Beispiel 231

Es wird analog Beispiel 224 gearbeitet, jedoch setzt man anstelle des Amins H₂N-A² ein Amin um, das man durch Acylierung von Metaminsäure mit dem Säurechlorid CICO-A³ erhält. Man gewinnt so 80 Teile des Farbstoffs der Formel 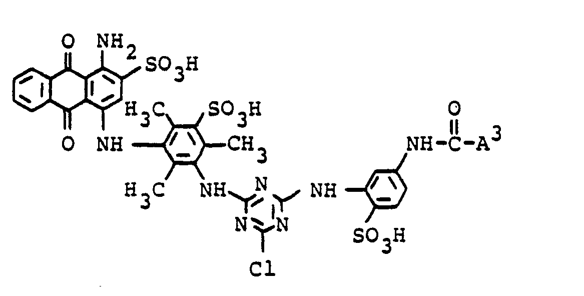 In analoger Weise wurden Farbstoffe der allgemeinen Formel 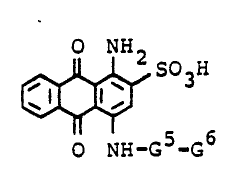 synthetisiert.

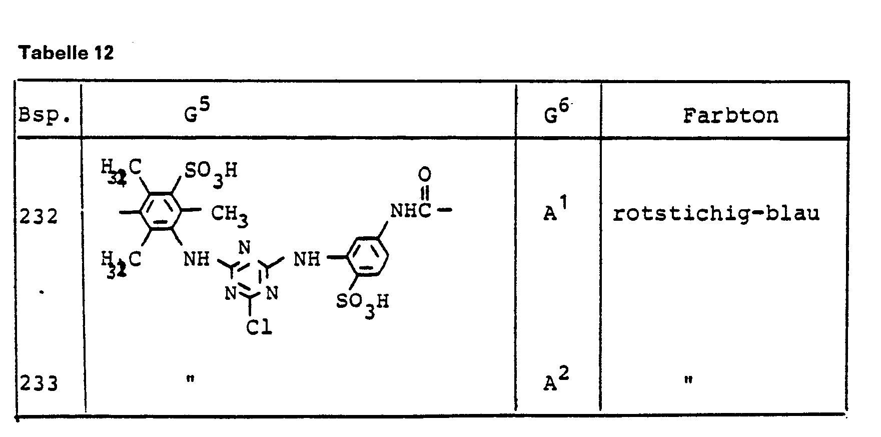

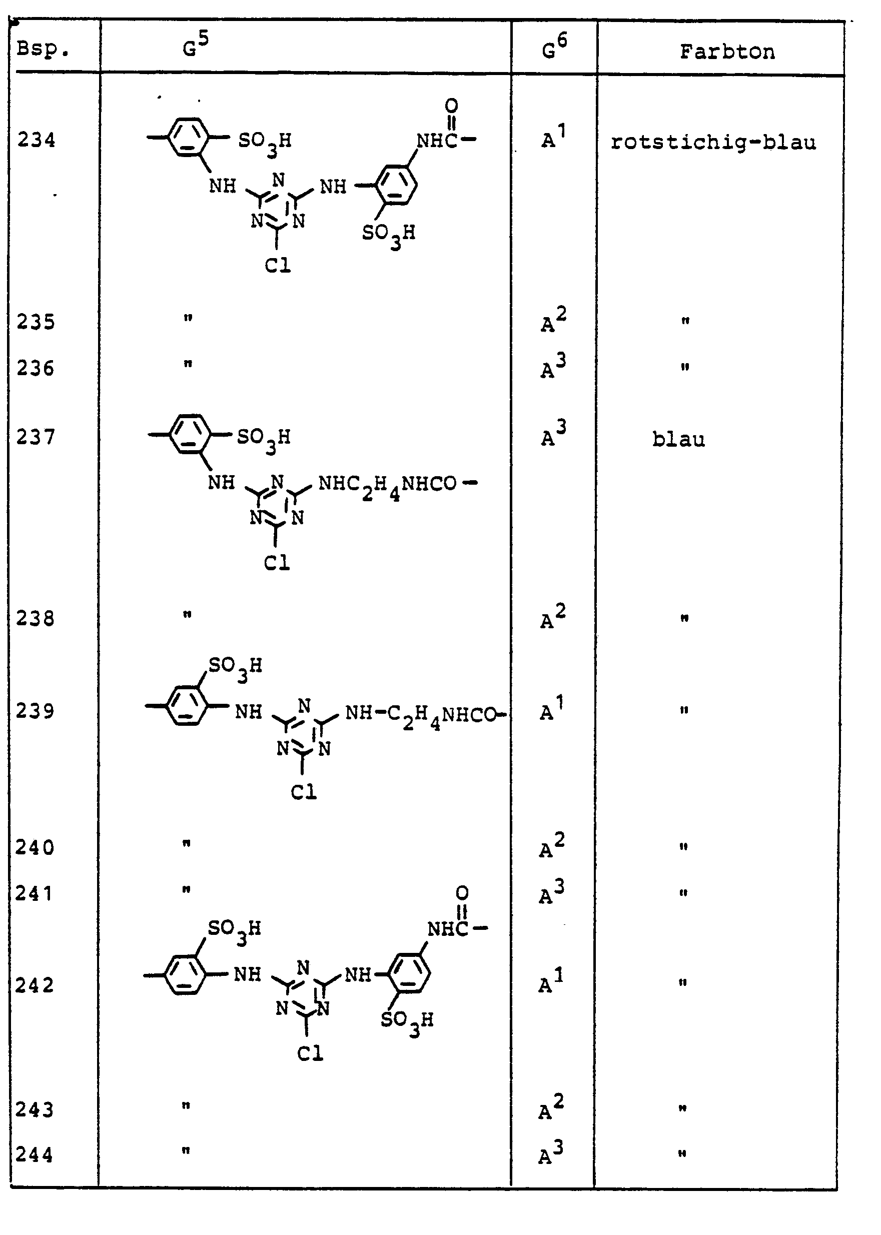

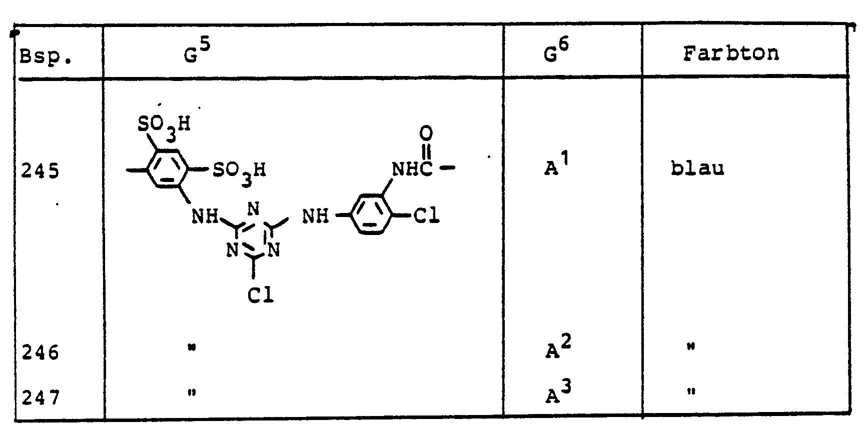

### Beispiel 248

15,8 Teile der Verbindung der Formel 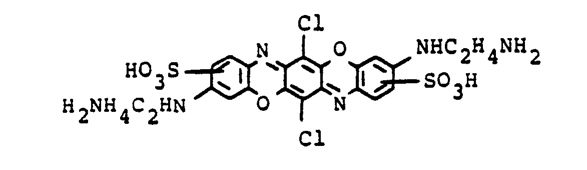 werden mit 1500 Teilen Wasser auf 45°C erwärmt, wobei mit Natronlauge pH 9 eingestellt wird. Dann kühlt man auf 0-5 °C ab und gibt, nachdem man den pH-Wert mit Salzsäure auf 7 herabgesetzt hat, eine feine Suspension von 9,7 Teilen Cyanurchlorid in 100 Teilen Eiswasser zu. Man rührt bei 0-5°C und hält mit Soda den pH-Wert zwischen 6,5 und 7, bis die Umsetzung beendet ist, was etwa 1 1/2 Stunden in Anspruch nimmt. Innerhalb von 10 Minuten läßt man nun eine Lösung von 12,7 Teilen 1-(3'-Aminophenyl)-5-chlor-4-fluor-pyridaz-6-on in 50 Teilen N-Methylpyrrolidon zutropfen. Man erhöht die Temperatur auf 40° C und rührt unter Aufrechterhaltung von pH 6,5, bis die Umsetzung beendet ist. Nun wird auf 20°C abgekühlt, mit 400 Teilen Natriumchlorid ausgesalzen, der ausgefallene Farbstoff abgesaugt und getrocknet. Er färbt Cellulosefasern in rotstichig-blauen Tönen mit guten Echtheitseigenschaften an und entspricht der Formel

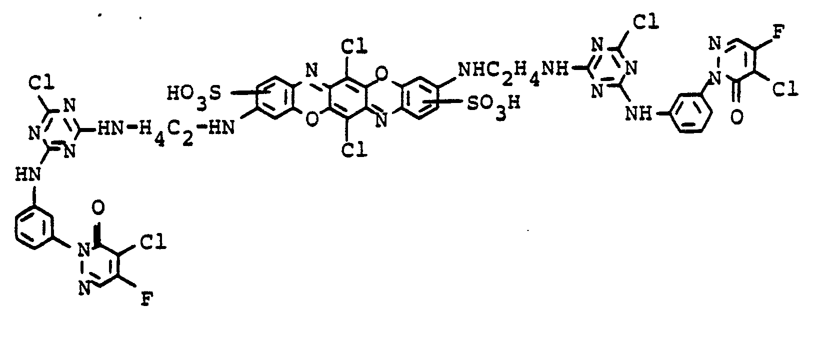

### Beispiel 249

23 Teile der Verbindung der ungefähren Formel 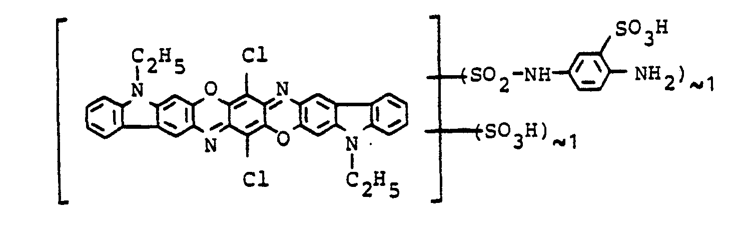 werden in 450 Teilen Wasser gelöst. Dazu läßt man bei 0-5°C eine Lösung von 6,1 Teilen 1-(2'-Chlorcarbonylethyl)-5-chlor-4-fluor-pyridaz-6-on in 25 Teilen Essigester tropfen. Man läßt dann die Temperatur unter gutem Rühren innerhalb von 1 1/2 Stunden auf 25°C steigen, wobei man den pH-Wert durch Zugabe von Natriumhydrogencarbonat bei 6 - 6,5 hält. Es wird bei der gleichen Temperatur gerührt, bis der pH-Wert konstant bleibt, anschließend mit Natriumchlorid ausgesalzen, der Farbstoff abgesaugt und getrocknet. Er färbt Cellulosefasern in rotstichig-blauen Tönen und entspricht der ungefähren Formel

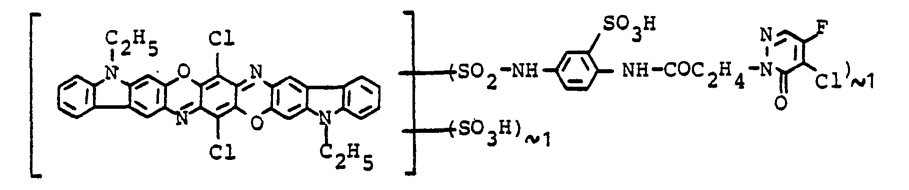

Die in der folgenden Tabelle aufgeführten Farbstoffe können analog hergestellt werden, der Rest 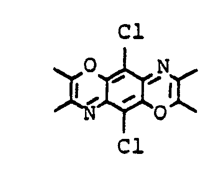 ist dabei mit 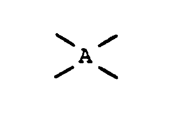 abgekürzt worden:

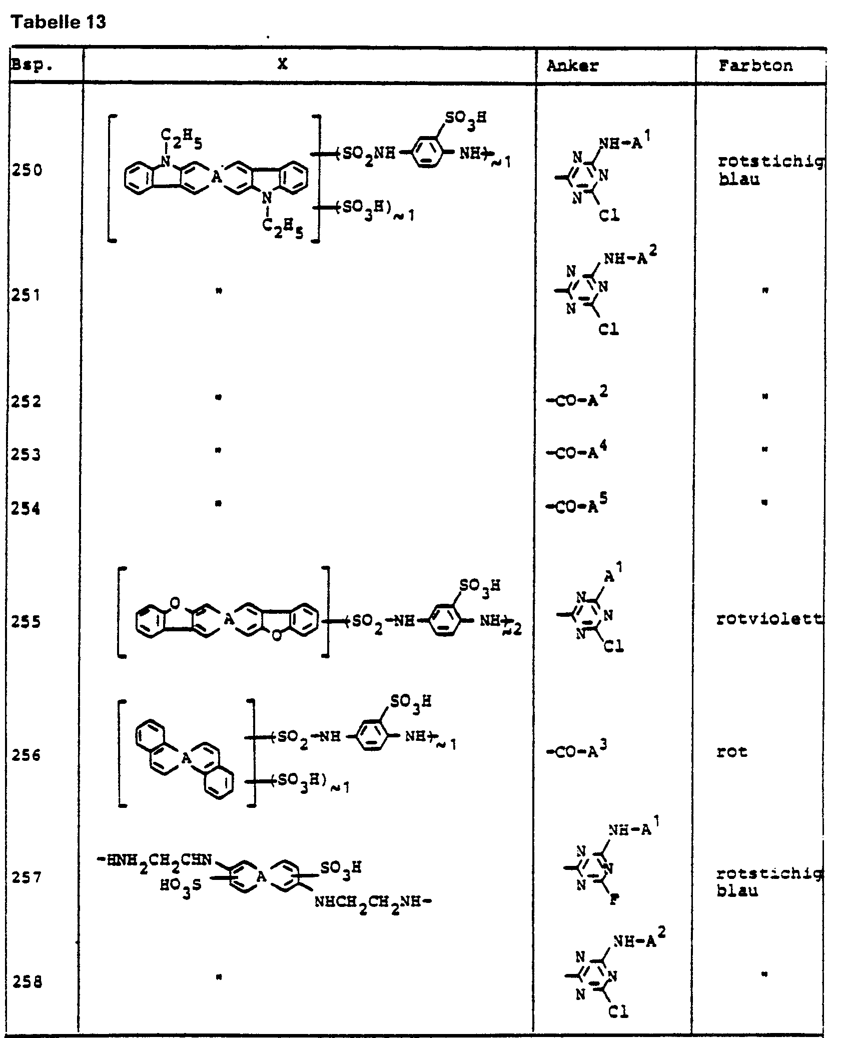

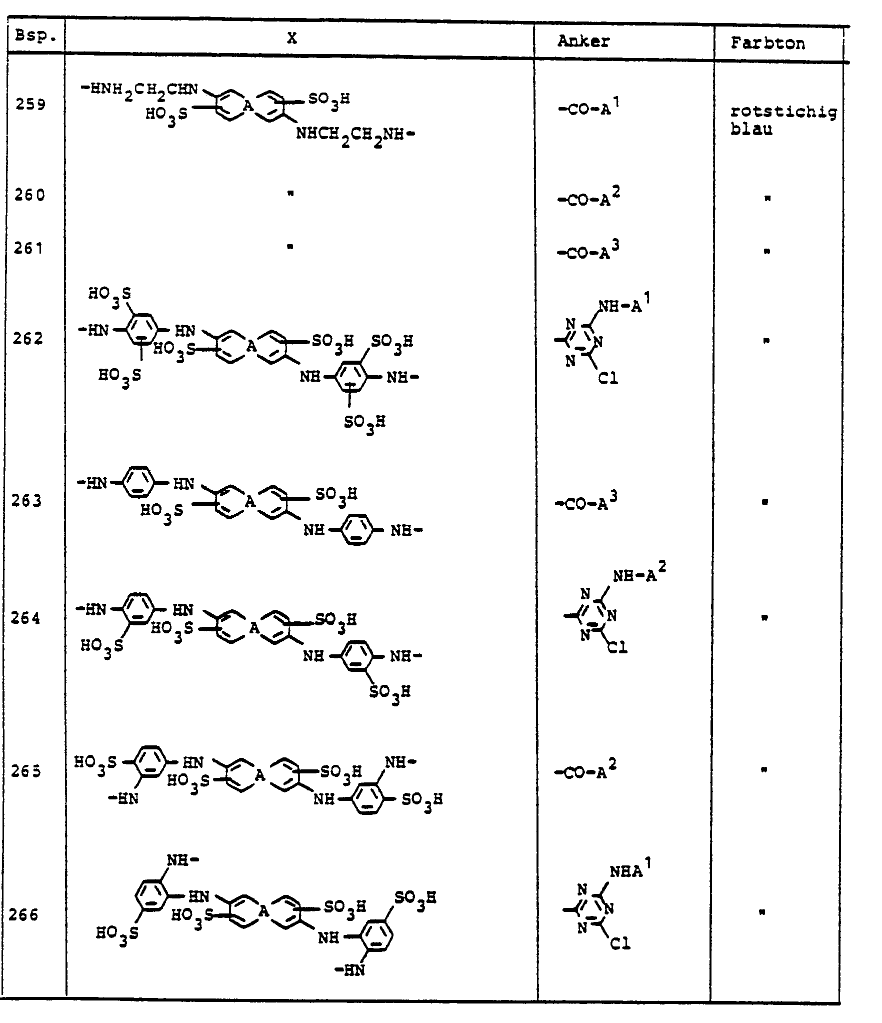

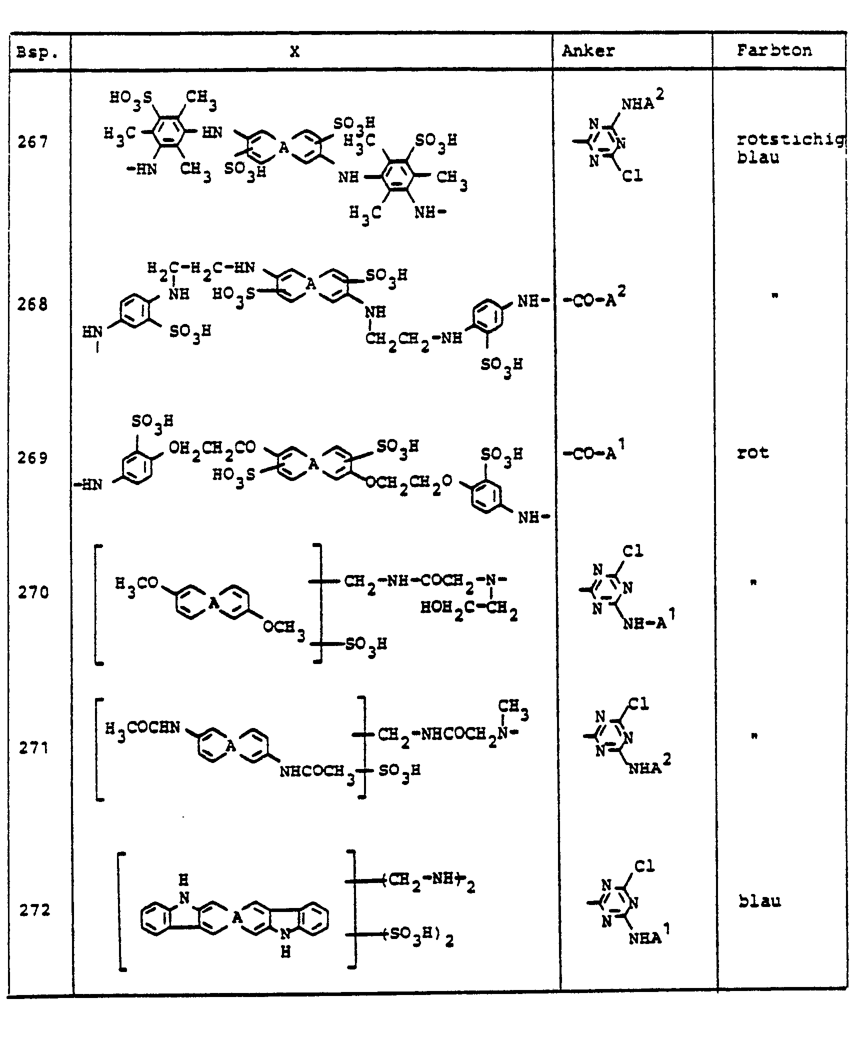

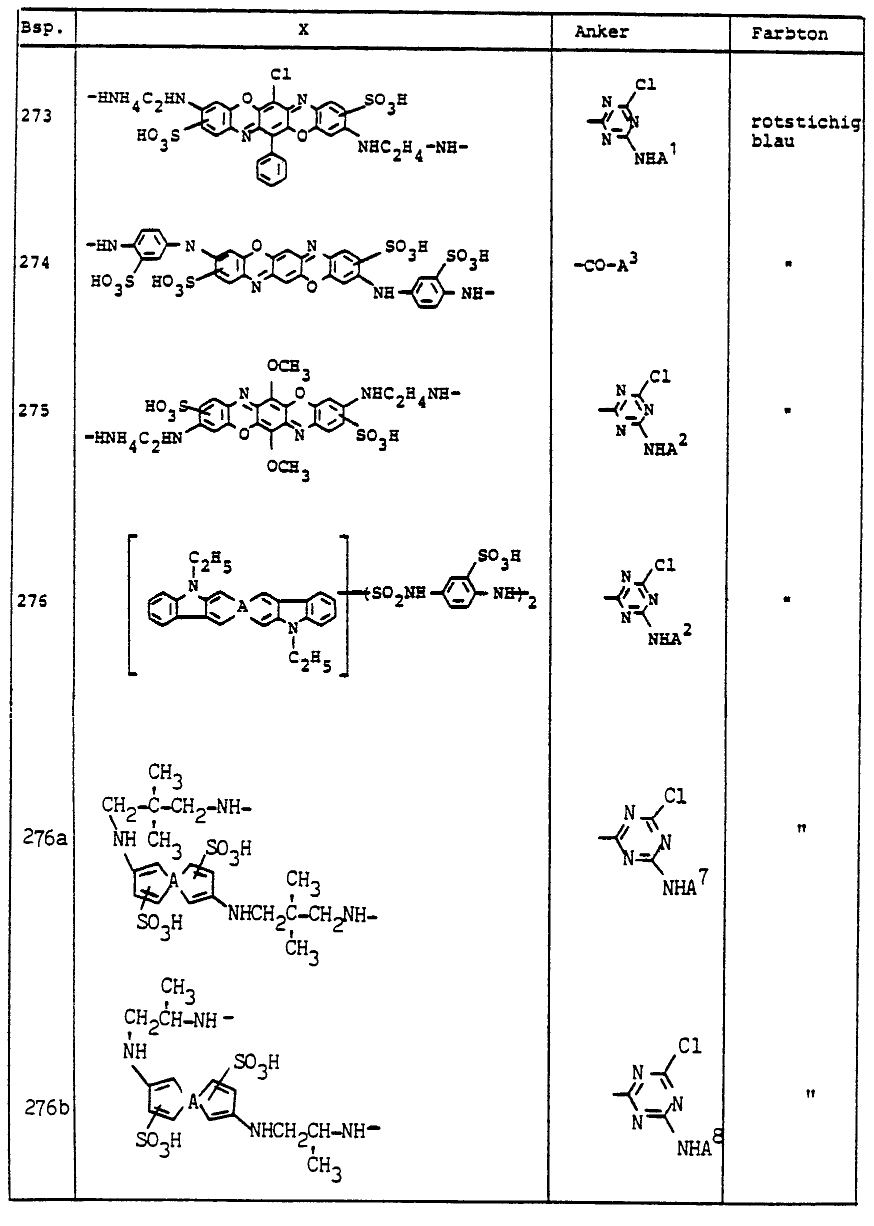

### Beispiel 277

48,5 Teile Kupferphthalocyanintetrasulfochlorid werden mit einer Mischung aus 125 Teilen Eis und 125 Teilen Wasser verrührt. Dazu läßt man bei 0-5°C eine Lösung von 14,4 Teilen 1-(4'-Aminophenyl)-5-chlor-4- fluorpyridaz-6-on in 50 Teilen Dimethylformamid zutropfen. Danach wird mit Natriumbicarbonat pH 6 eingestellt, innerhalb von 1 Stunde auf 30° C und innerhalb einer weiteren Stunde auf 40°C erwärmt und 3 Stunden bei dieser Temperatur gehalten, wobei ständig ein pH-Wert von 6 - 6,5 eingehalten wird. Anschließend wird mit Natriumchlorid ausgesalzen, der Farbstoff abgesaugt und getrocknet. Er entspricht der ungefähren Formel 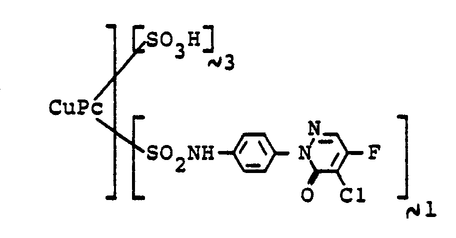 und färbt Cellulosematerial in türkisblauen Tönen.

### Beispiel 278

19,7 Teile der Verbindung der Formel 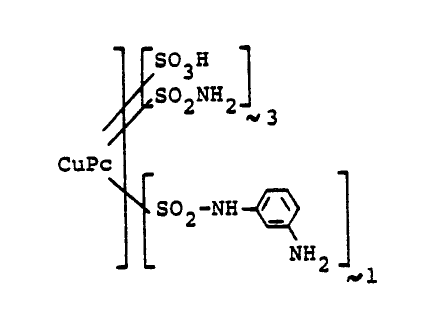 werden in einer Mischung aus 125 Teilen Eis und 125 Teilen Wasser homogen verrührt und mit Natronlauge wird pH 7 - 7,5 eingestellt. Bei einer Temperatur von 10°C läßt man eine Lö- sung von 5,7 Teilen 1-(2'-Chlorcarbonylethyl)-5-chlor-4-fluor pyridaz-6-on in 45 Teilen Chloroform innerhalb von 10 Minuten zutropfen. Man rührt nun bei 10-15°C und hält den pH-Wert durch Zugabe von Soda bei 6,5 - 7. Nach etwa 1 Stunde bleibt der pH-Wert konstant, man salzt den fertigen Farbstoff mit Natriumchlorid aus, saugt ihn ab und trocknet.

Er hat die ungefähre Formel 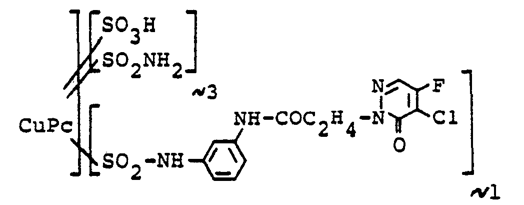 und färbt Cellulosematerial in türkisblauen Tönen von guten Echtheiten.

### Beispiel 279

58 Teile der Verbindung der ungefähren Formel 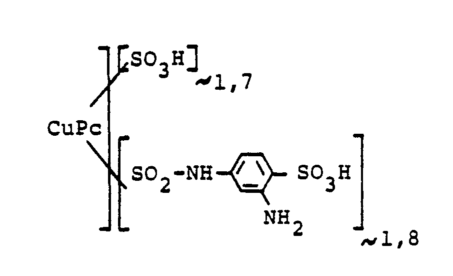 werden in einer Mischung aus 300 Teilen Wasser und 125 Teilen Eis homogen verrührt und mit Natronlauge auf pH 7 eingestellt. Bei 0-5°C gibt man nun eine feine Suspension von 16,6 Teilen Cyanurchlorid in 170 Teilen Eiswasser zu, wobei der pH-Wert mit 10 %iger Natronlauge bei 5,3 - 5,5 gehalten wird. Sobald die Umsetzung vollständig ist, läßt man eine Lösung von 21,6 Teilen 1-(4'-Aminophenyl)-5-chlor-4-fluorpyridaz -6-on in 60 Teilen Dimethylformamid zutropfen. Man erwärmt alsdann auf 35-40°C und hält 4 Stunden bei dieser Temperatur, wobei der pH-Wert mit Natriumhydrogencarbonat bei 6 gehalten wird. Anschließend wird abgekühlt, mit Natriumchlorid ausgesalzen, der Farbstoff abgesaugt und getrocknet. Er entspricht der ungefähren Formel

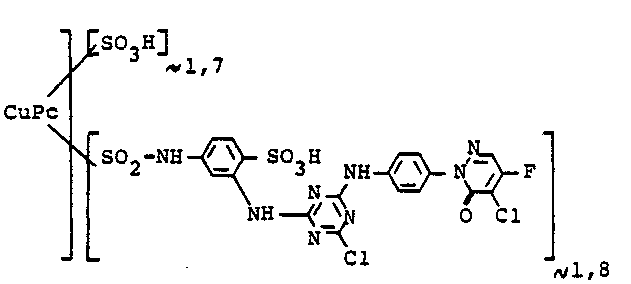

In analoger Weise lassen sich die in der folgenden Tabelle aufgeführten Farbstoffe herstellen. entsprechen der allgemeinen Formel 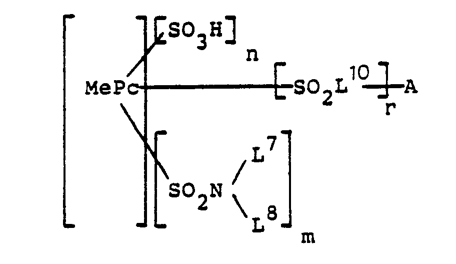 in der n und m Werte von 0 - 3 und r Werte von 1 - 4 bedeuten können.

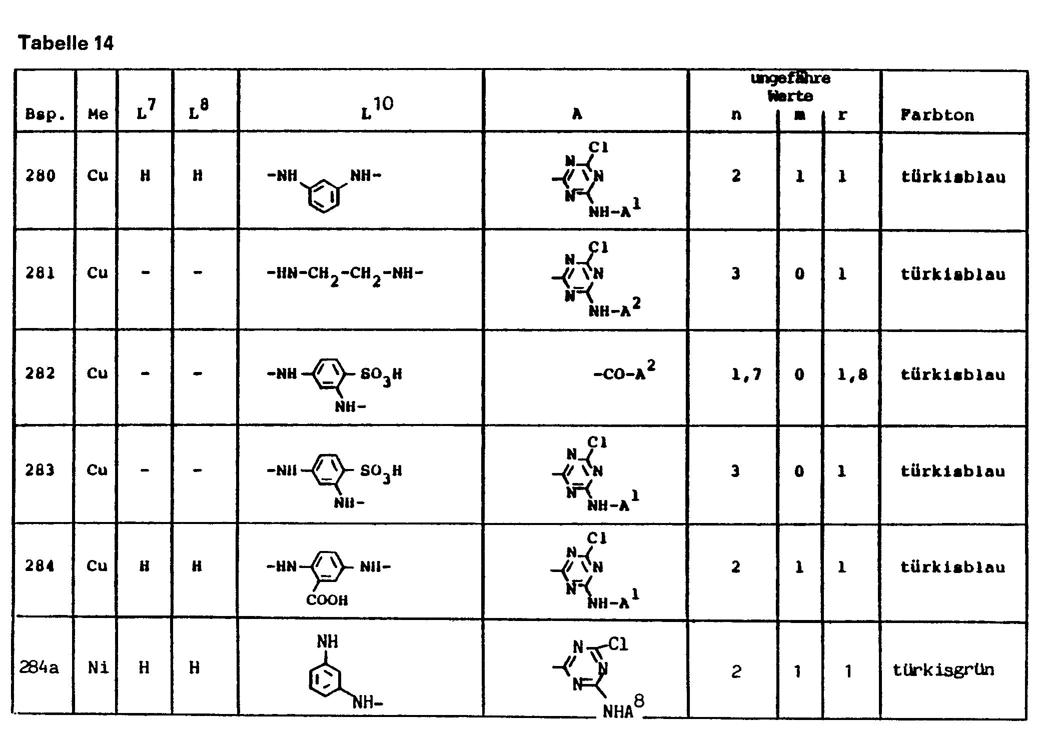

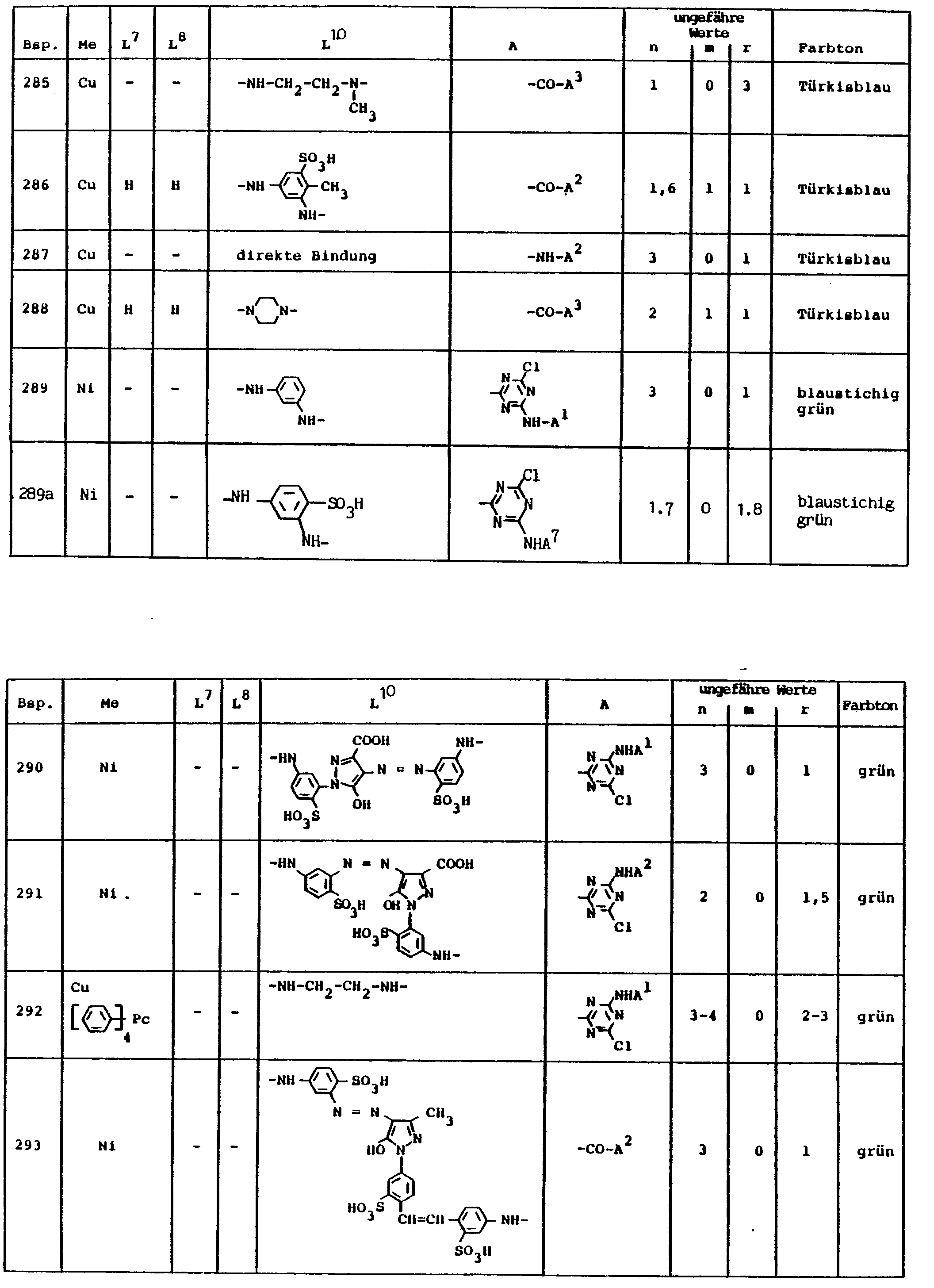

### Beispiel 294

64,8 Teile des bekannten Farbstoffs der Formel 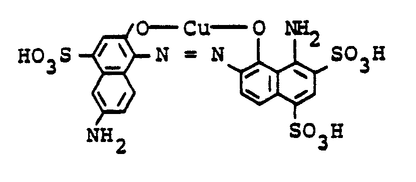 werden in 700 Teilen Wasser angerührt mit 1 Teil Netzmittel und 24 Teilen der Verbindung CICO-A³,in 100 Teilen Chloroform gelöst, versetzt. Durch Einstreuen von festem Natriumbicarbonat wird der pH-Wert im Verlauf von 2 Stunden auf 7 angehoben.

Der Farbstoff wird durch Sprühtrocknung der Lösung gewonnen. Die Ausbeute beträgt 73 Teile des Farbstoffs der Formel 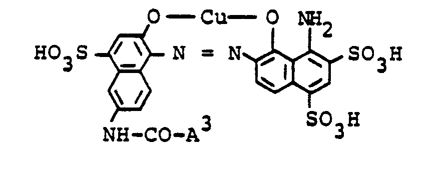 In analoger Weise und nach an sich bekannten Methoden wurden die Farbstoffe der allgemeinen Formel Chromophor-G⁷⁻G8

synthetisiert und in Tabelle 15 zusammengefaßt.

Die Chromophore sind entweder bekannt oder wurden in Analogie zu bekannten Verbindungen nach Standardverfahren hergestellt.

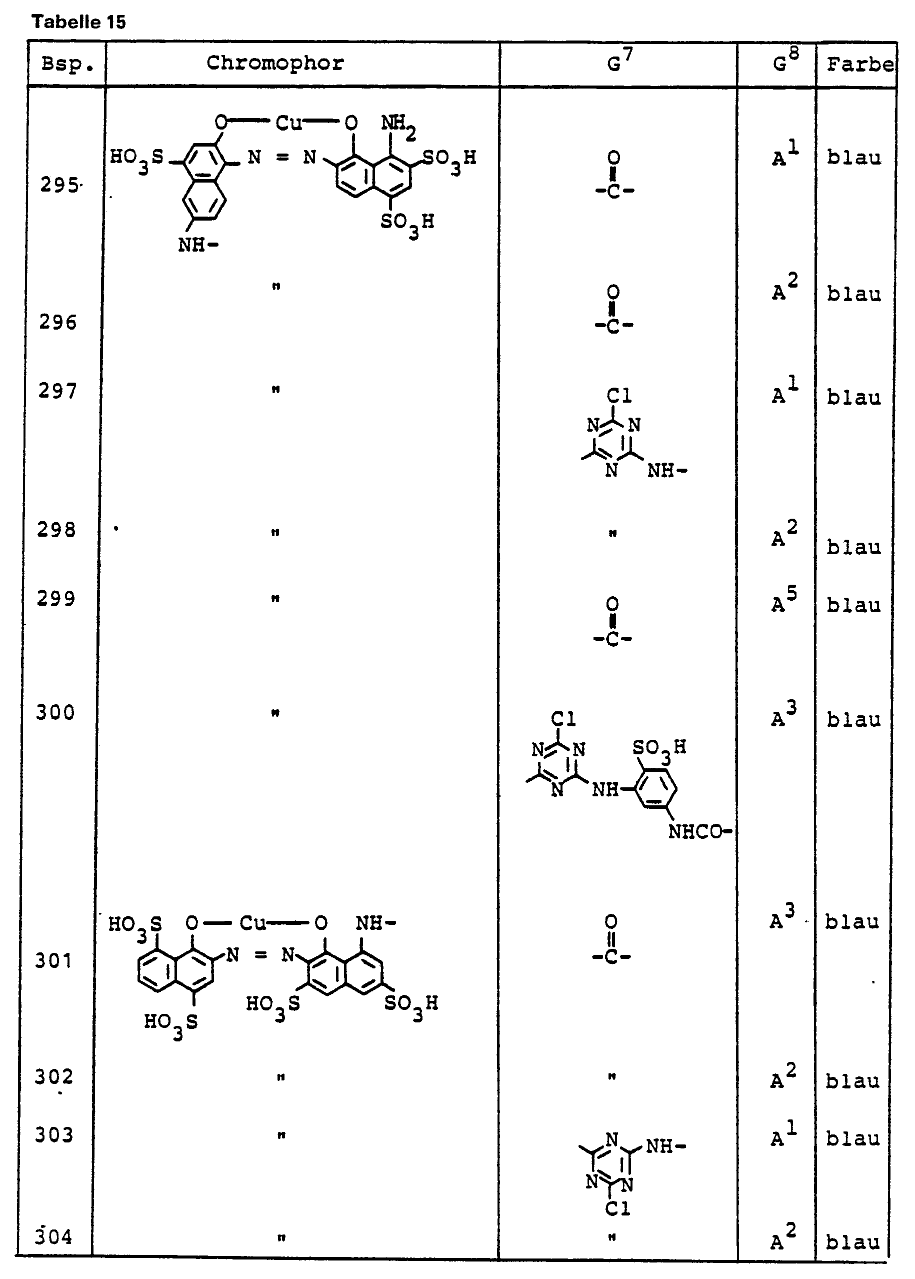

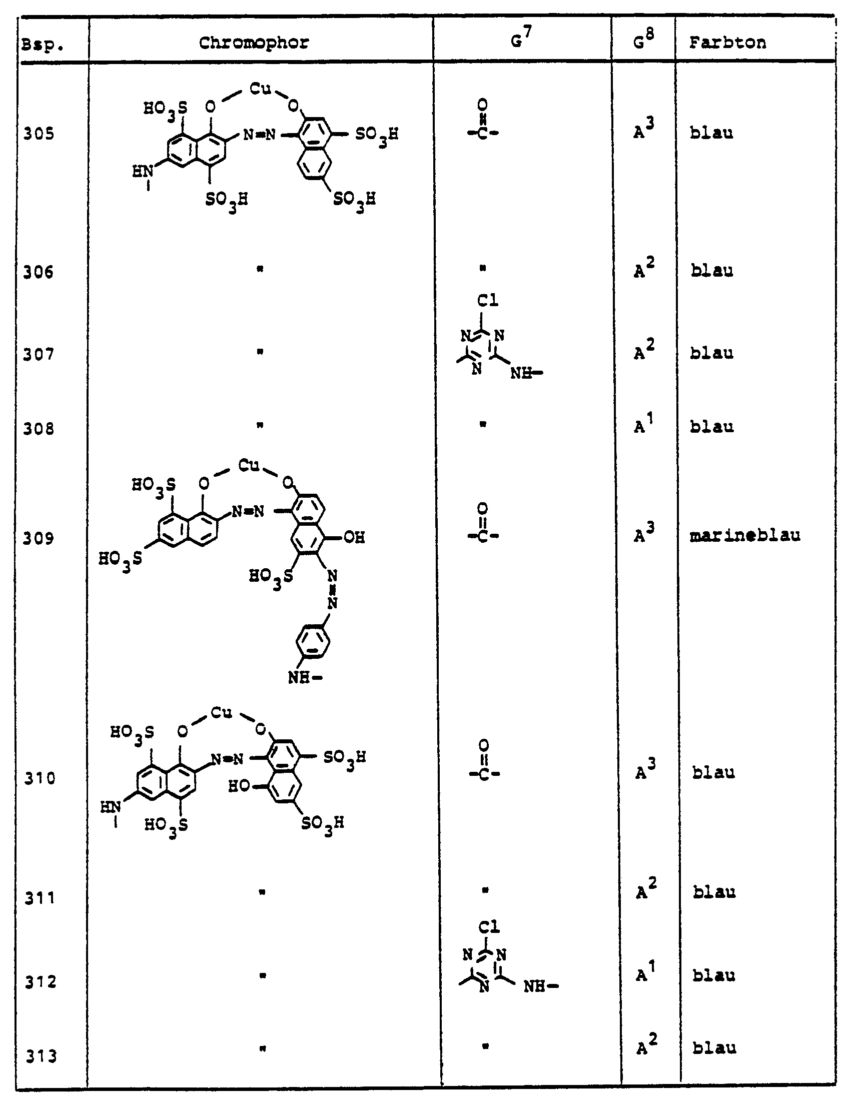

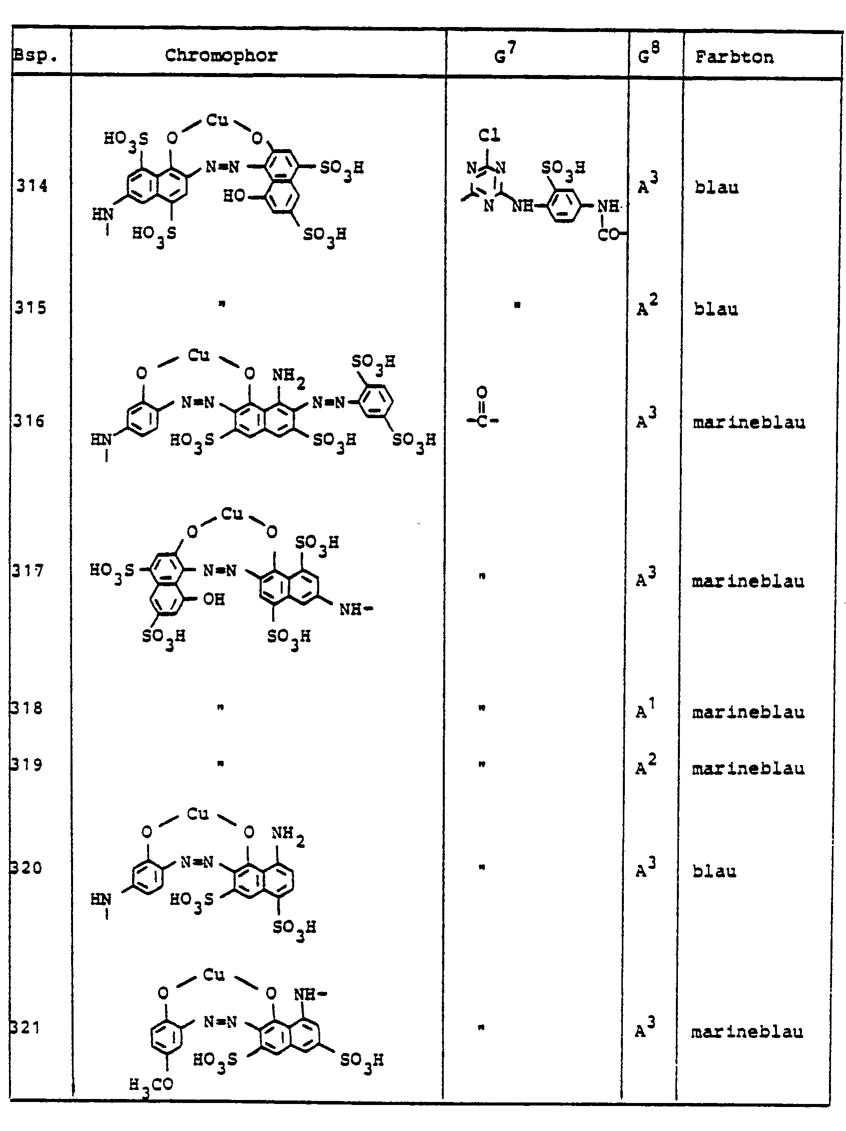

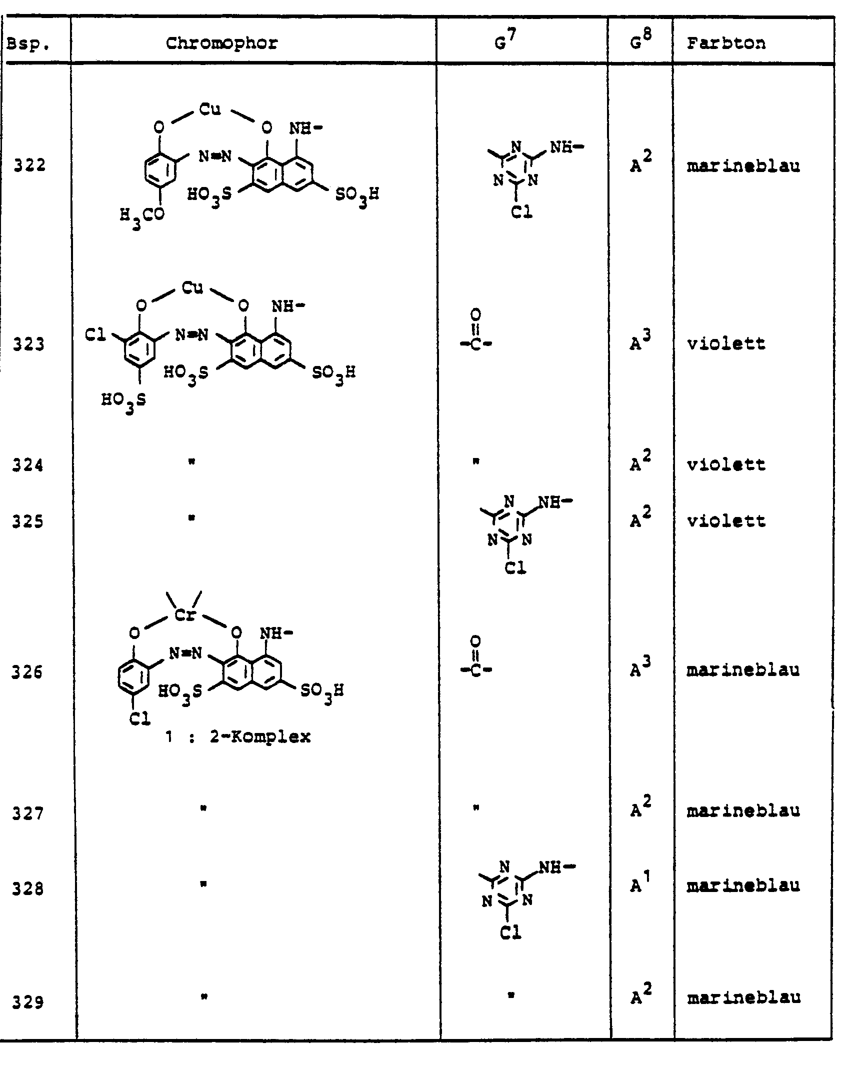

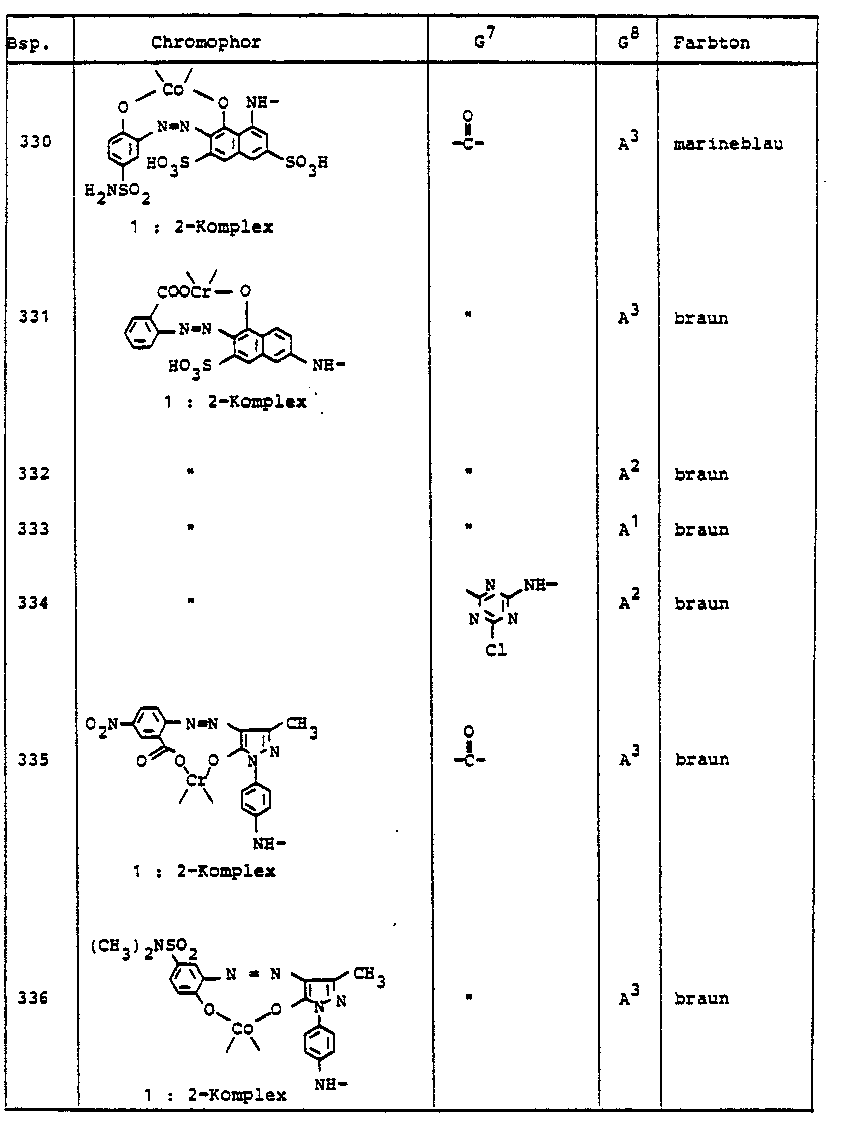

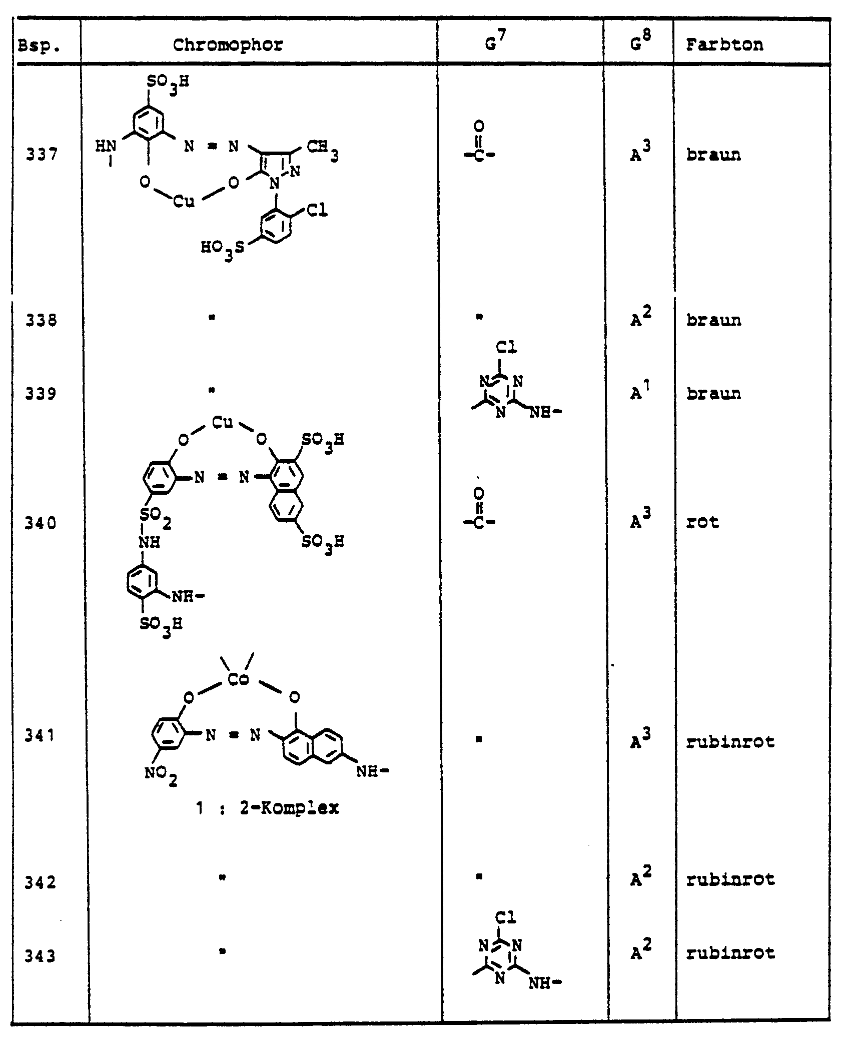

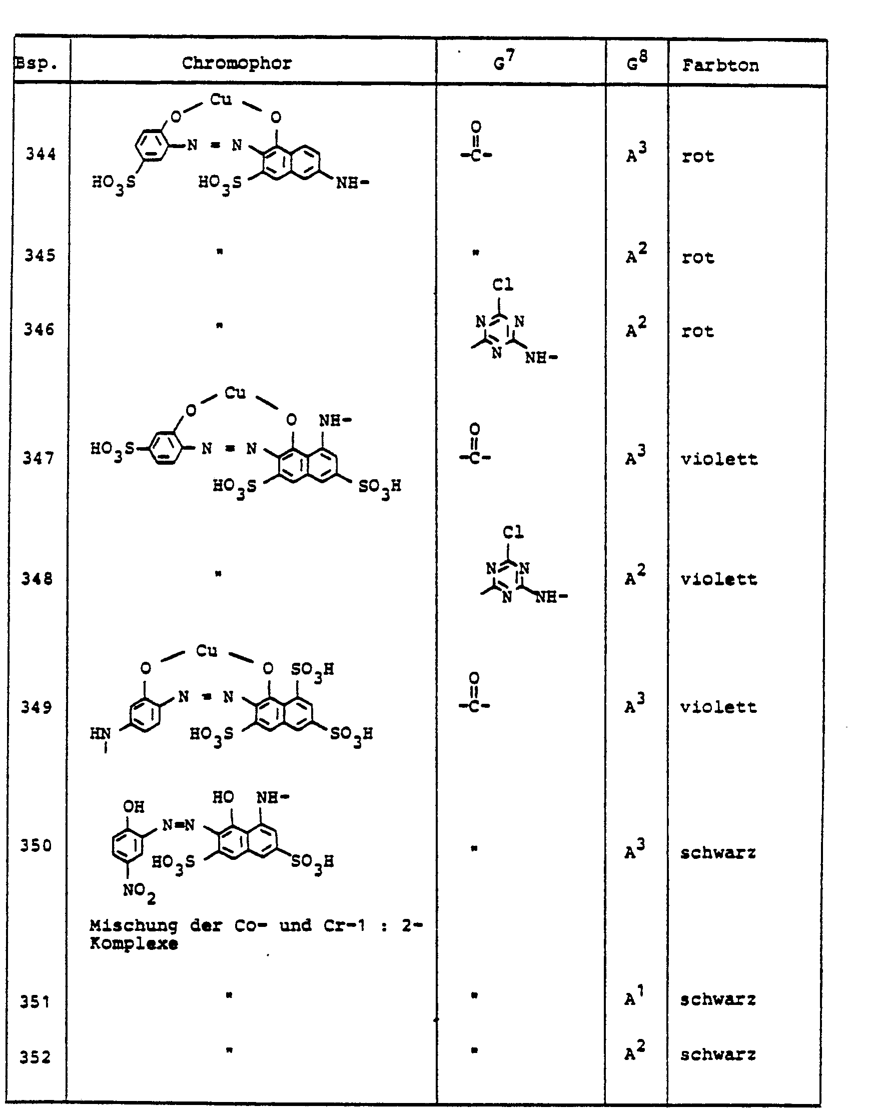

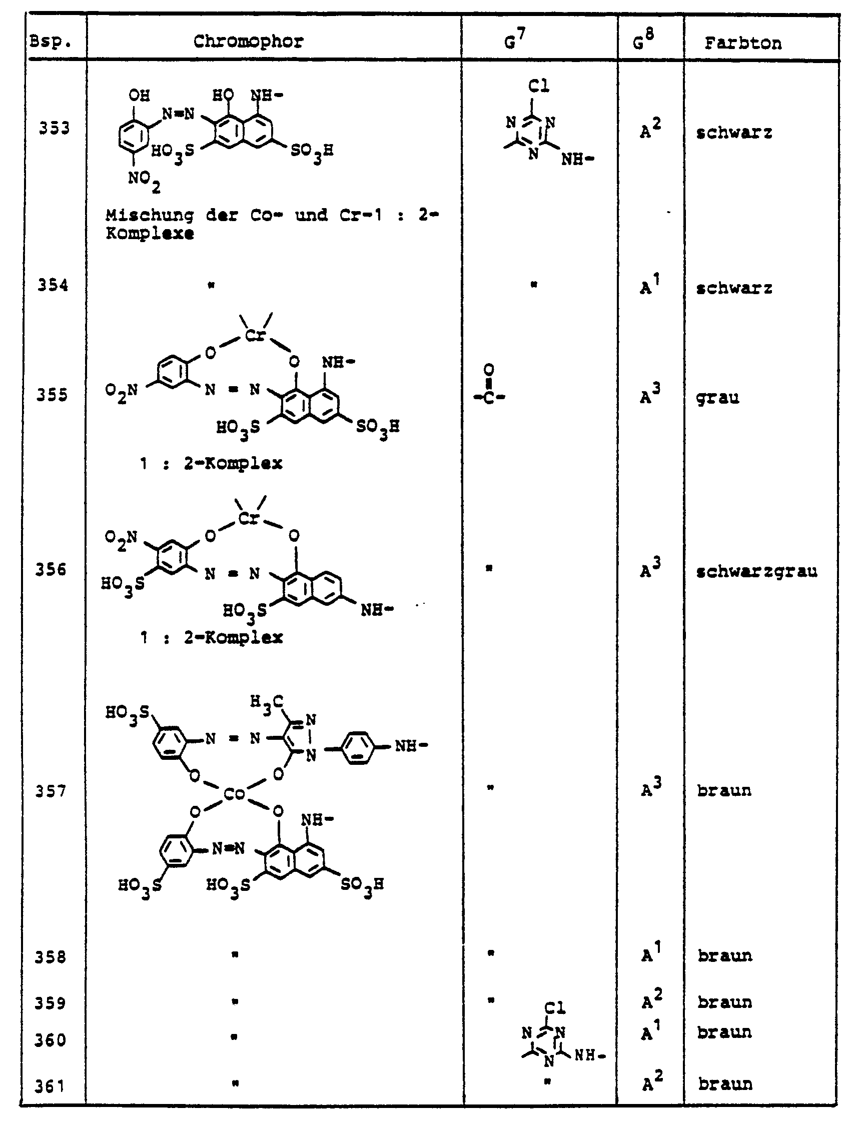

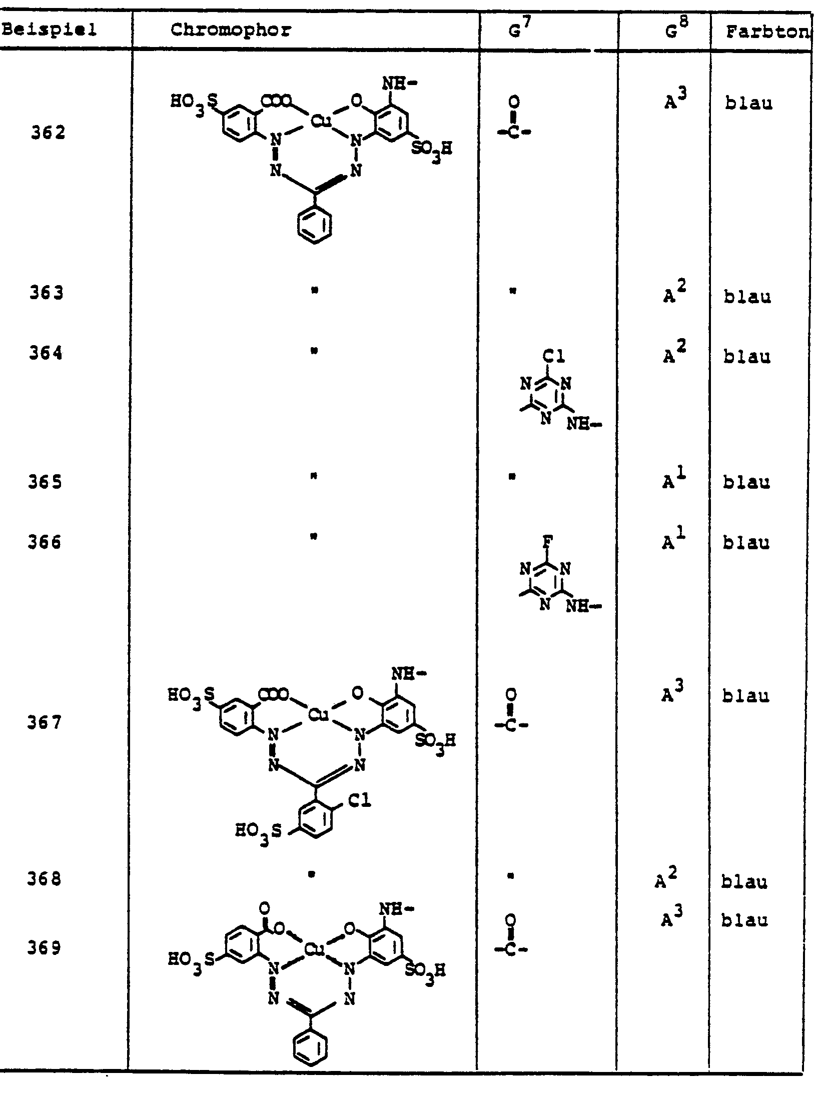

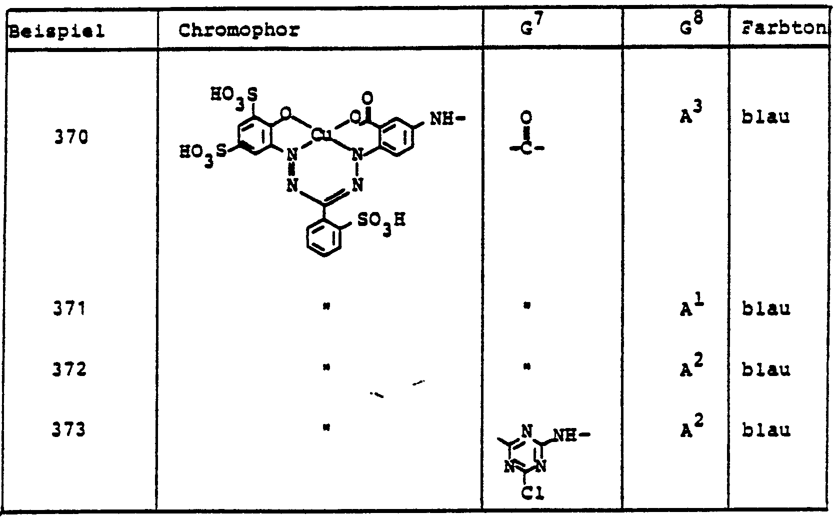

### Beispiel 374

18,8 Teile 1,3-Phenylendiamin-4-sulfonsäure werden in 200 Teilen Wasser neutral gelöst und eine Lösung von 32 Teilen 3-(5'-Chlor-4'-fluorpyridaz-6'-on-1'-yl)propionsäurechlorid in 80 Teilen Chloroform wird bei 10-C zugetropft. Dabei wird der pH-Wert durch Zugabe von 80 Teilen 1 molarer Sodalösung bei 7 gehalten. Nach 4 Stunden wird das Reaktionsgemisch salzsauer diazotiert und bei 5°C eine Lösung von 39 Teilen 1-Isobutyrylamino-8-hydroxynaphthalin-4,6-disulfonsäure in 300 Teilen Wasser zugesetzt. Man kuppelt durch Zugabe von 15,8 Teilen Natriumcarbonat schwach sauer aus und fällt den Farbstoff aus neutraler Lösung mit Kaliumchlorid aus. Das Preßgut wird gefriergetrocknet. Man erhält ein rotes Pulver, das Baumwolle in brillanten gelbstichig roten Tönen mit guter Echtheit färbt. Der Farbstoff entspricht der Formel:

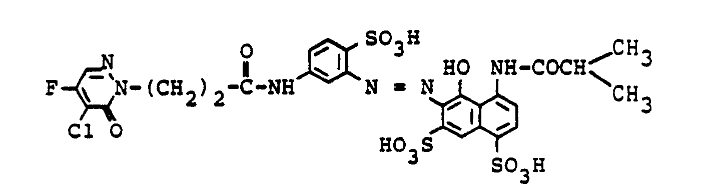

Weitere erfindungsgemäße Farbstoffe sind in Tabelle 16 aufgeführt, wobei in Spalte I der Rest des verwendeten Carbonsäurechlorids, in Spalte II und III die anstelle von 1,3-Phenylen-diamin-4-sulfonsäure und 1-Isobutyrylamino-8-hydroxynaphthalin-4,6-disulfonsäure verwendeten Verbindungen und in Spalte IV der auf Baumwolle erzielte Farbton angegeben sind.

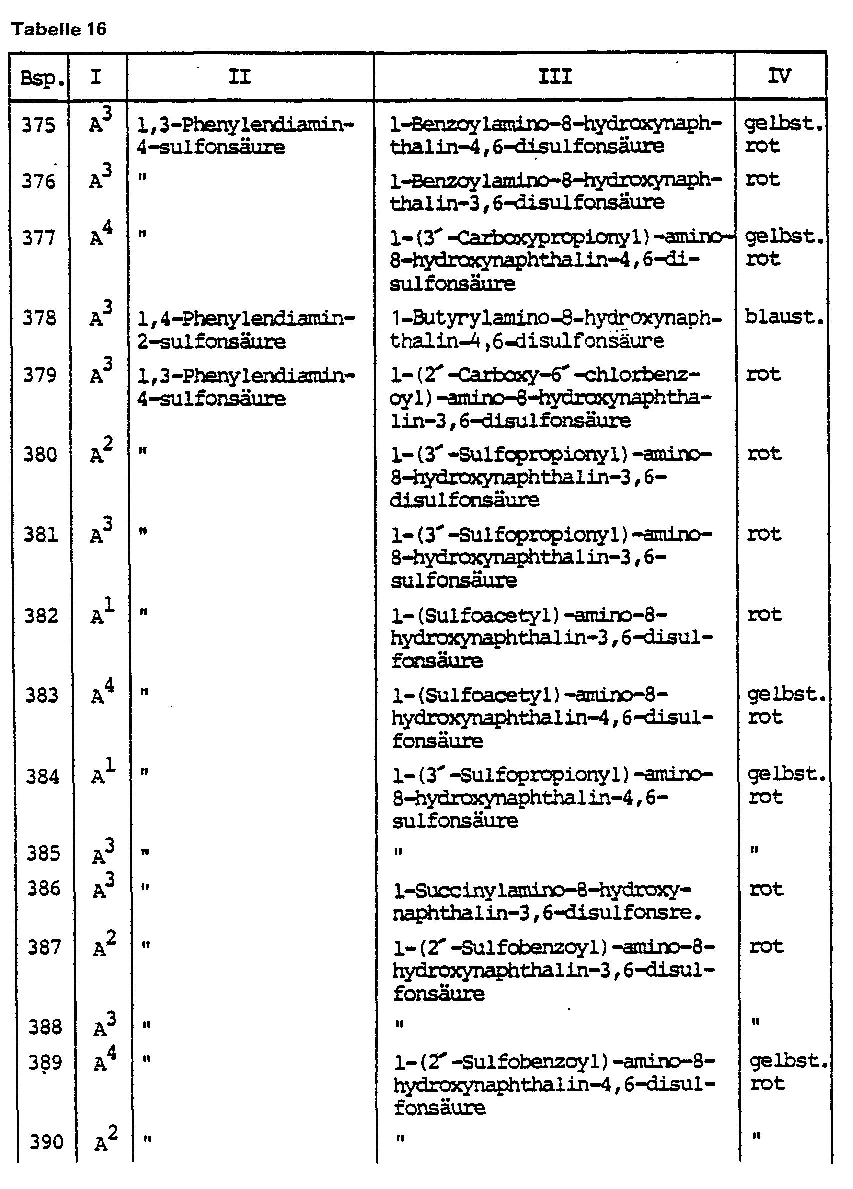

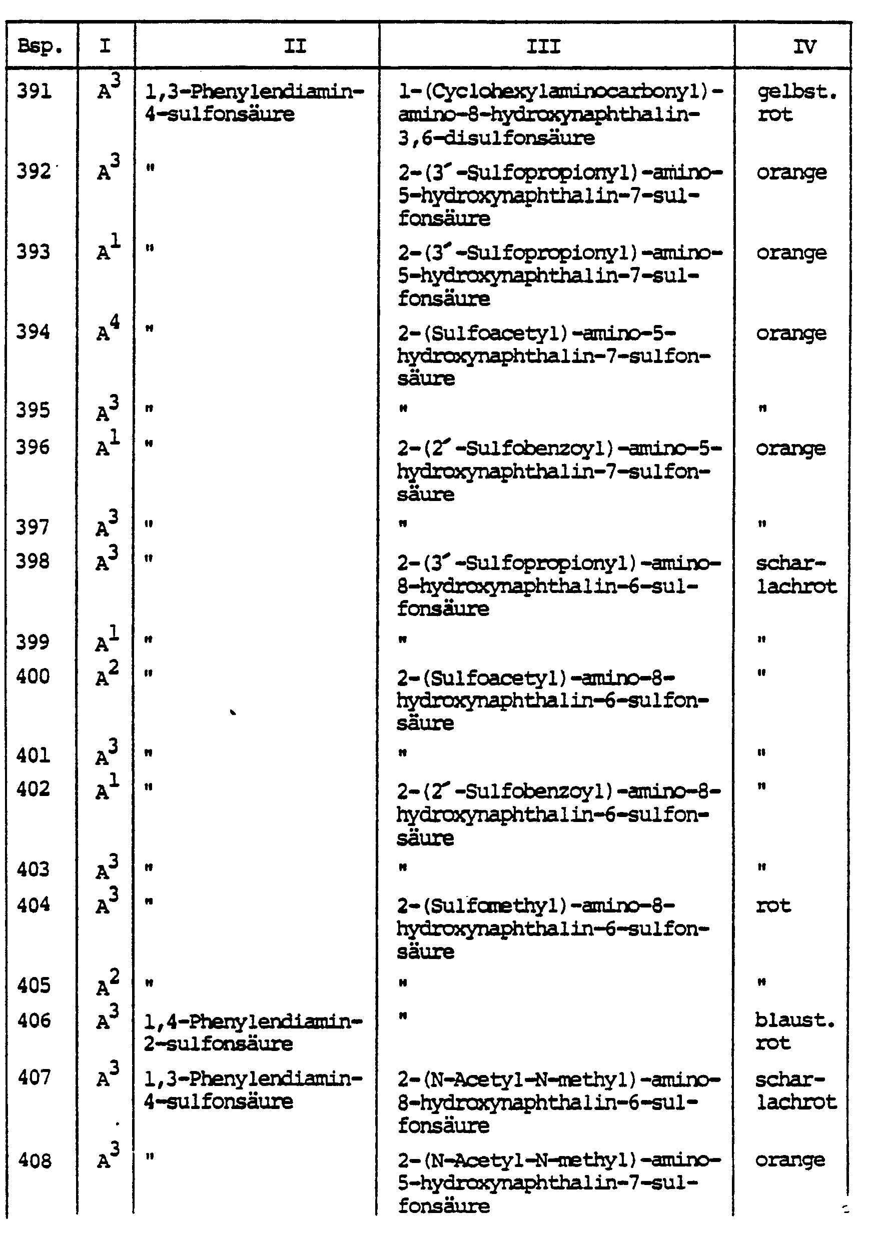

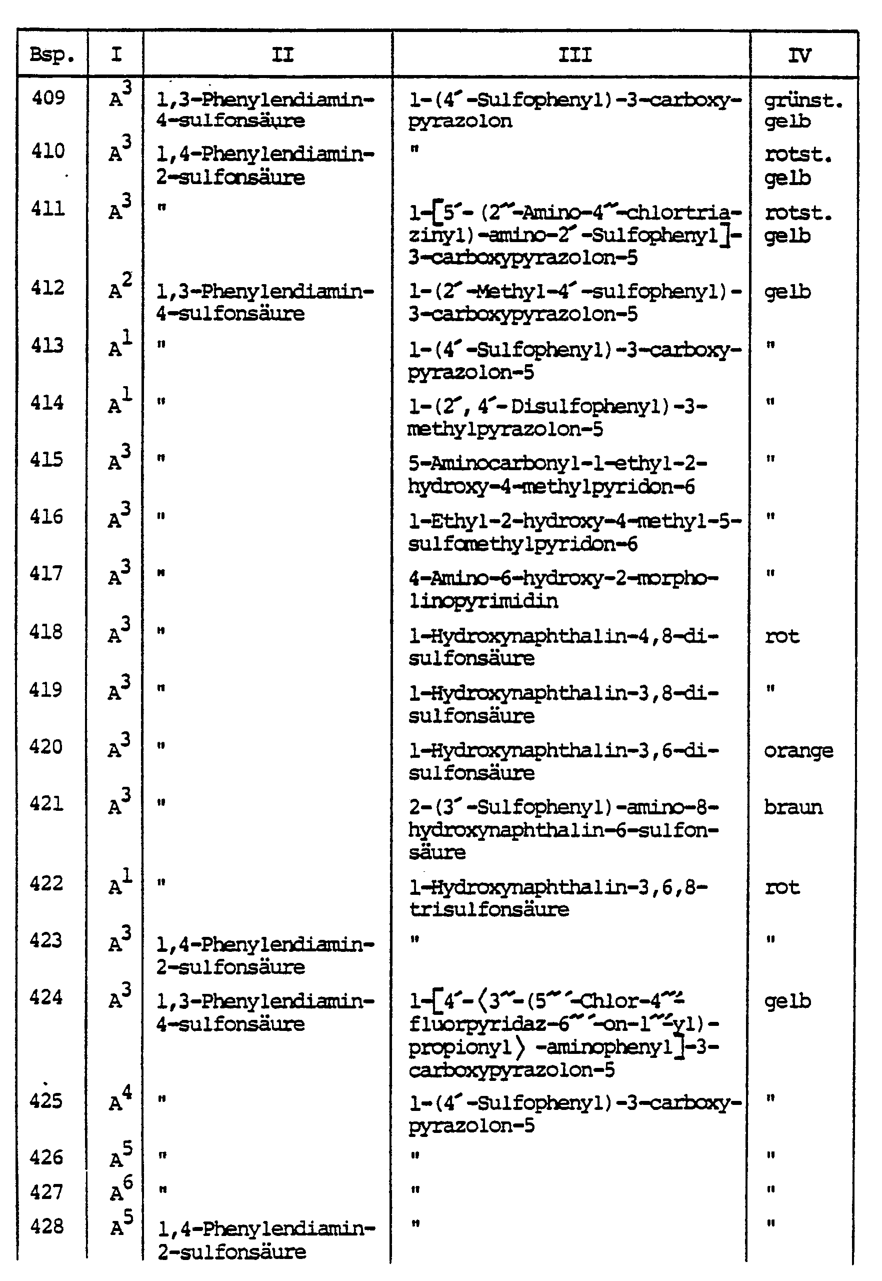

### Beispiel 429

Zu einer Lösung von 18,8 Teilen 1,3-Phenylendiamin-4-sulfon-säure in 200 Teilen Wasser wird bei 10°C eine Lösung von 32 Teilen 3-(5'-Chlor-4'-fluorpyridaz-6'-on-1'-yl)-propionsäurechlorid in 60 Teilen Essigsäureäthylester zugetropft und durch Zugabe von 80 Teilen 1 molarer Sodalösung ein pH-Wert von 7 gehalten. Nach 4 Stunden wird das Reaktionsgemisch salzsauer diazotiert und bei 5°C eine Suspension von 31,8 Teilen 1-Amino-8-hydroxynaphthalin-3,6-disulfonsäure zugegeben. Man hält den pH-Wert der sauren Kupplung mit Natriumacetat bei 3,5. Anschließend werden 17,3 Teile salzsauer diazotierte Anilin-4-sulfonsäure zugesetzt und durch Zugabe von 17,6 Teilen Natriumcarbonat gekuppelt. Aus dem neutralen Reaktionsgemisch wird der Farbstoff durch Zusatz von Siedesalz gefällt und getrocknet. Er färbt Baumwolle in echten, rotstichig marineblauen Tönen und entspricht der Formel

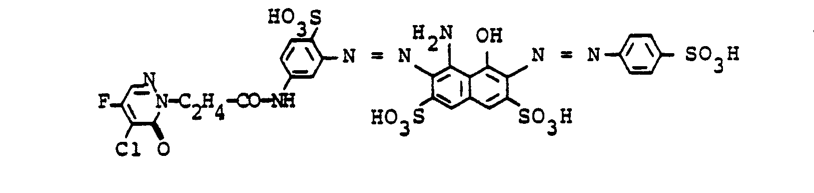

Weitere erfindungsgemäße Farbstoffe sind in Tabelle 17 zusammengefaßt, wobei in Spalte der Rest des verwendeten Carbonsäurechlorids, in Spalte II und III die anstelle von 1,3-Phen-ylendiamin-4-sulfonsäure und Anilin-4-sulfonsäure verwendeten Diazokomponenten und in Spalte TV der auf Baumwolle erzielte Farbton angegeben sind.

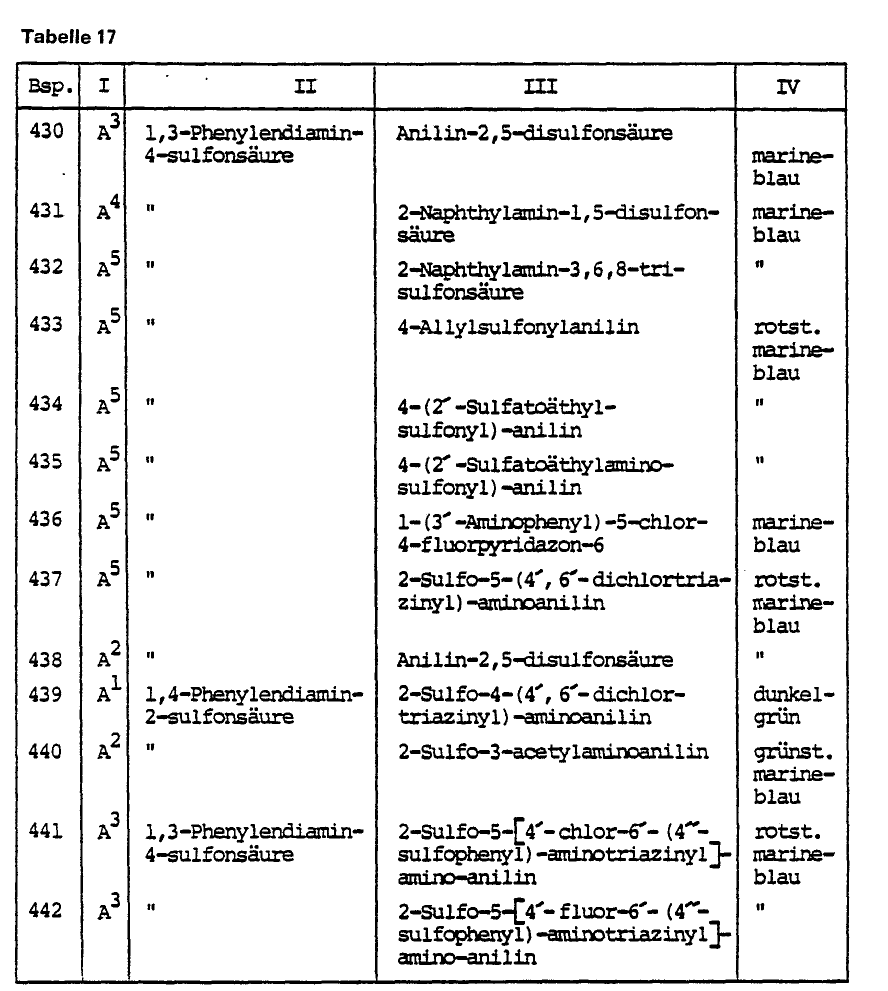

### Beispiel 443

25,4 Teile Anilin-2,5-disulfonsäure werden salzsauer diazotiert und mit einer Suspension von 31,8 Teilen 1-Amino-8-hydroxynaphthalin-3,6-disulfonsäure versetzt. Es wird salzsauer über Nacht gekuppelt und anschließend werden 31,9 Teile des salzsauer diazotierten primären Kondensationsproduktes aus 1,3-Phenylendiamin-4-sulfonsäure und 3-(5'-Chlor-4'-fluorpyridaz-6'-onl'-yl)-propionsäurechlorid zugegeben. Danach wird durch Zugabe von 17,5 Teilen Natriumcarbonat ein neutraler pH-Wert eingestellt und gekuppelt. Der Farbstoff wird durch Zugabe von Kaliumchlorid abgeschieden und schonend getrocknet. Er färbt Baumwolle in echten, grünstichig marineblauen Tönen und entspricht der Formel

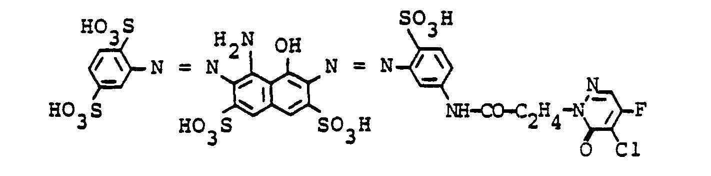

Weitere erfindungsgemäße Farbstoffe sind in Tabelle 18 zusammengefaßt, wobei in Spalte I und II die anstelle von Anilin-2,5-disulfonsäure und 1,3-Phenylendiamin-4-sulfonsäure verwendeten Diazokomponenten, in Spalte III der Rest des verwendeten Carbonsäurechlorids und in Spalte IV der auf Baumwolle erzielte Farbton angegeben sind.

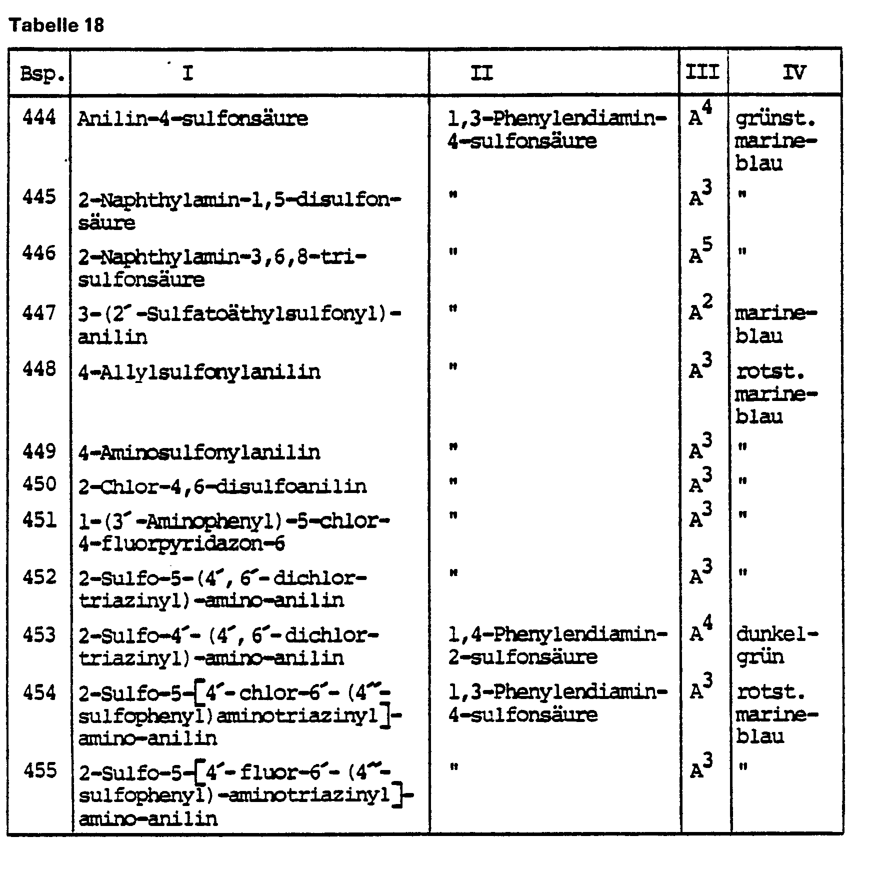

### Beispiel 456

21,9 Teile 1-(4'-Aminophenyl)-3-carboxypyrazolon-5 werden in 250 Teilen Wasser neutral gelöst und bei 10-15°C und pH 6 mit 29 Teilen 2-(5'-Chlor-4';fluorpyridaz-6'-on-1'-yl)-propion-säurechlorid (in 50 Teilen Essigester gelöst) umgesetzt. Sobald keine diazotierbaren Aminogruppen mehr nachweisbar sind, werden 30 Teile diazotierte 2-Aminonaphthalin-1,5-disulfon-säure bei pH 5 - 7 aufgekuppelt. Der mit Kaliumchlorid abgeschiedene und schonend getrocknete Farbstoff färbt Baumwolle in echten gelben Farbtönen und entspricht der Formel

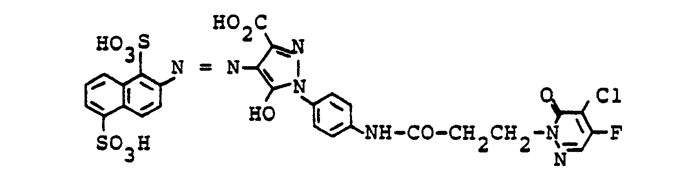

Weitere erfindungsgemäße Farbstoffe sind in Tabelle 19 aufgeführt, wobei in Spalte I und II die anstelle von 2 Aminonaphtha-lin-1,5-disulfonsäure bzw. 1-(4'-Aminophenyl)-3-carboxypyra-zolon-5 verwendeten Verbindungen, in Spalte III der Rest des verwendeten Carbonsäurechlorids und in Spalte IV der auf Baumwolle erzielte Farbton angegeben sind.

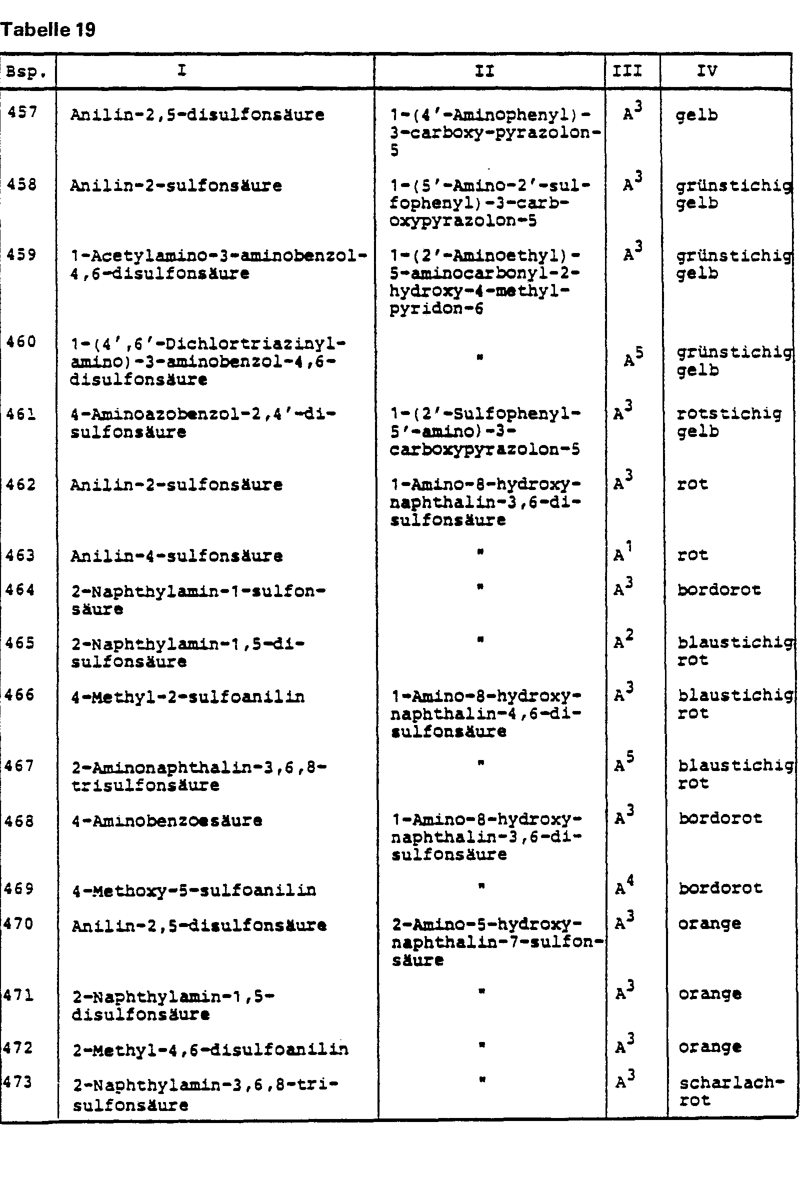

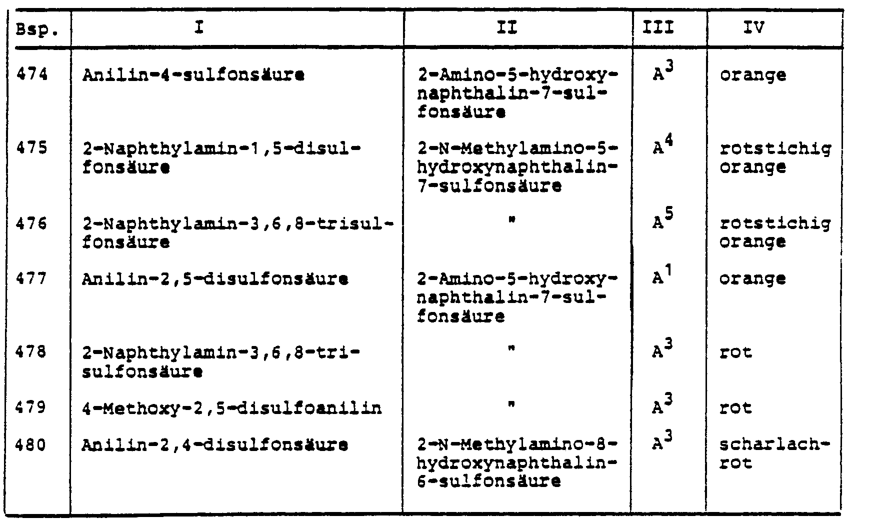

### Beispiel 481

Das gemäß Beispiel 374 erhaltene Kondensationsprodukt aus 18,8 Teilen 1,3-Phenylendiamin-4-sulfonsäure und 32 Teilen 3-(5'-Chlor-4'-fluorpyridaz-6'-on-1'-yl)-propionsäurechlorid wird wäßrig diazotiert und bei pH 5 - 6 auf 38 Teile 1-[4'-(2"-Sulfatoethylsulfonyl)phenyl]-3-methylpyrazolon-5 gekuppelt. Der durch Sprühtrocknung isolierte Farbstoff färbt Baumwolle in echten Gelbtönen und entspricht der Formel

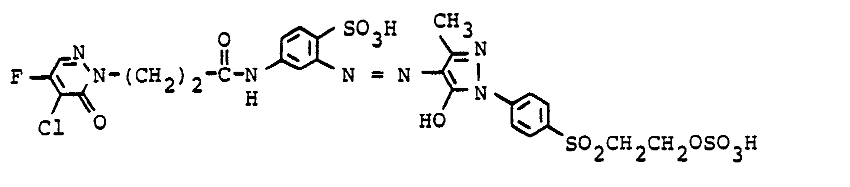

### Beispiel 482

31,9 Teile des primären Kondensationsproduktes aus 1,3-Phenylendiamin-4-sulfonsäure und 3-(5'-Chlor-4- fluorpyridaz-6'-on-1'-yl)-propionsäurechlorid werden salzsauer diazotiert und zu einer Lösung von 46,7 Teilen des primären Kondensationsproduktes aus 1-Amino-8-hydroxynaphthalin-3,6-disulfonsäure und Cyanurchlorid gegeben und bei essigsaurem pH-Wert unter Zusatz von 16,2 Teilen Natriumbikarbonat gekuppelt. Aus neutraler Lösung wird der Farbstoff durch Zugabe von Siedesalz gefällt und schonend getrocknet. Er färbt Baumwolle in echten, brillanten roten Tönen und entspricht der Formel

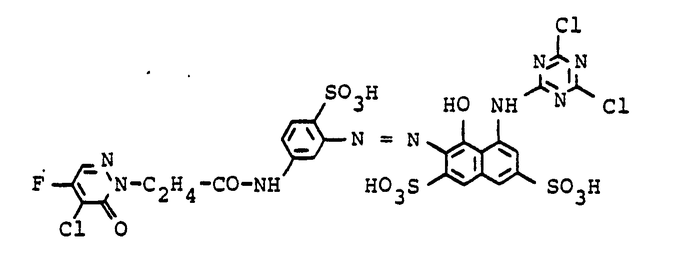

Weitere erfindungsgemäße Farbstoffe sind in Tabelle 20 zusammengefaßt, wobei in Spalte I das verwendete Carbonsäurechlorid, in Spalte II die anstelle von 1,3-Phenylendiamin-4-sulfonsäure verwendete Diazokomponente, in Spalte III die anstelle von 1-Amino-8-hydroxynaphthalin-3,6-disulfonsäure verwendete Kupplungskomponente, in Spalte IV das anstelle von Cyanurchlorid verwendete Triazin und in Spalte V der auf Baumwolle erzielte Farbton angegeben sind.

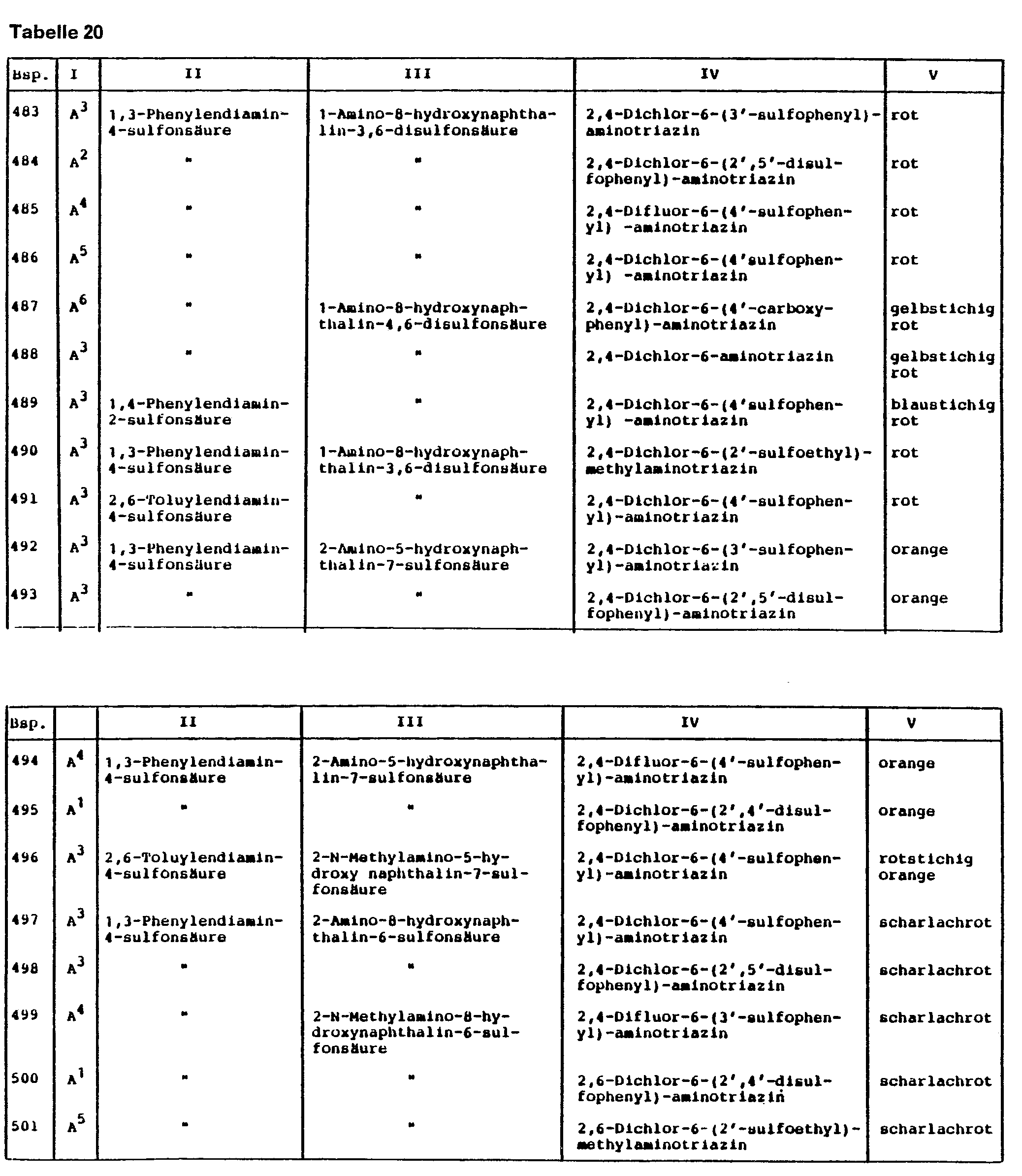

### Beispiel 502

Zu einer salzsauer diazotierten Suspension von 33,6 Teilen des primären Kondensationsproduktes aus 1,3-Phenylendiamin-4-sulfonsäure und Cyanurchlorid werden 52,1 Teile des Kondensationsproduktes von 1-Amino-8-hydroxynaphthalin-3,6-di-sulfonsäure und 3-(5'-Chlor-4'-fluorpyridaz-6'-on-1'-yl)-propionsäurechlorid gegeben. Man kuppelt unter Zusatz von 17,2 Teilen Natriumbikarbonat bei essigsaurem pH-Wert aus und fällt den Farbstoff anschließend aus neutraler Lösung mit Kaliumchlorid. Das Preßgut wird sprühgetrocknet. Man erhält ein dunkelrotes Pulver, das Baumwolle in echten, brillanten roten Tönen färbt. Der Farbstoff entspricht der Formel

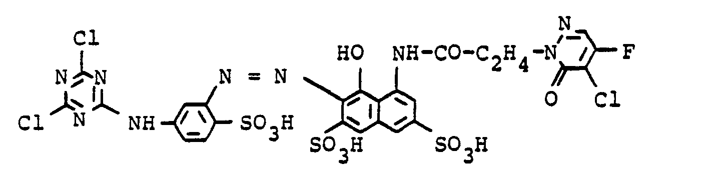

Weitere erfindungsgemäße Farbstoffe sind in Tabelle 21 zusammengefaßt, wobei in Spalte das anstelle von Cyanurchlorid verwendete Triazin, in Spalte II die anstelle von 1-Amino-8-hydroxynaphthalin-3,6-disulfonsäure verwendete Kupplungskomponente, in Spalte ITI das verwendete Carbonsäurechlorid und in Spalte IV der auf Baumwolle erzielte Farbton angegeben sind.

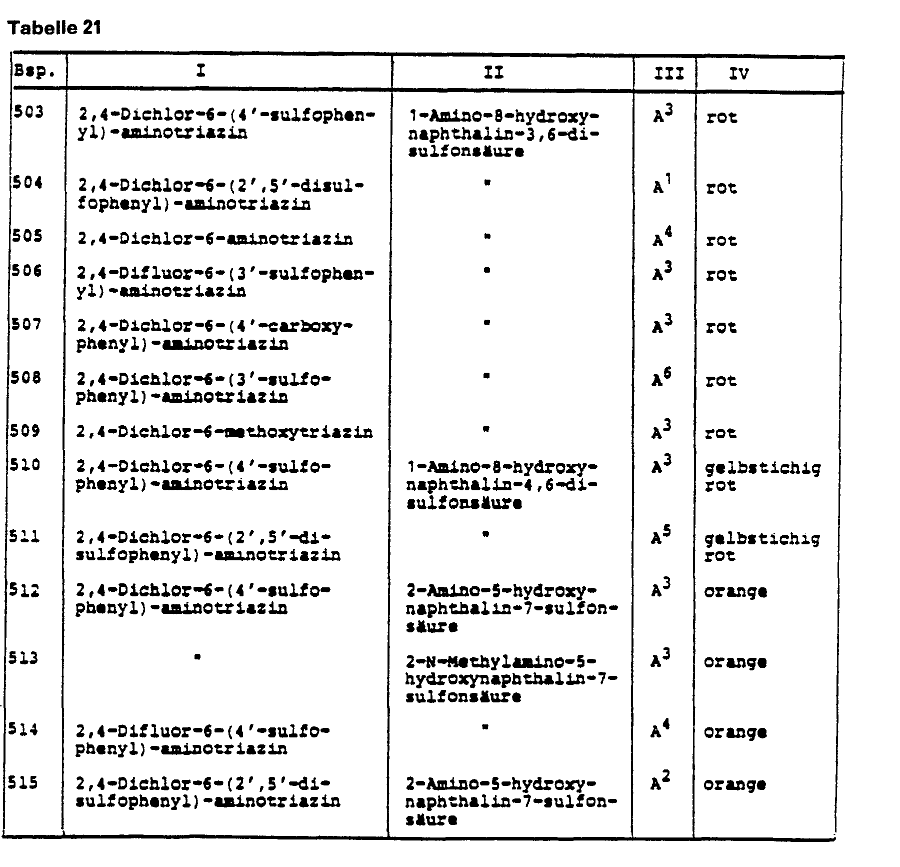

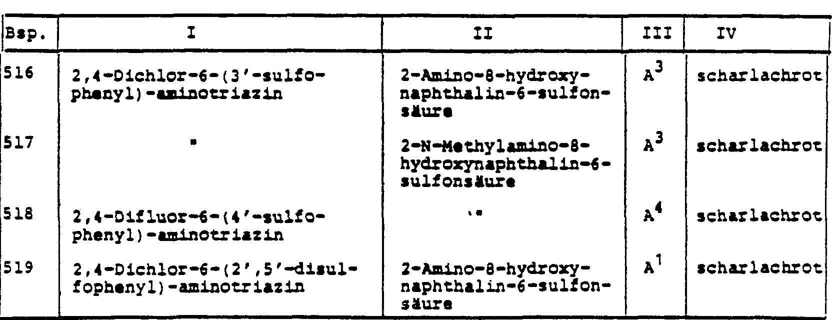

### Beispiel 520

Zu 64 Teilen des salzsauer diazotierten primären Kondensationsproduktes aus 1,3-Phenylendiamin-4-sulfonsäure und 3-(5'-Chlor-4'-fluorpyridaz-6'-on-1'-yl)-propionsäurechlorid wird eine Suspension von 31,6 Teilen 1-Amino-8-hydroxynaphthalin -3,6-disulfonsäure in 400 Teilen Wasser gegeben. Man kuppelt in acetatgepufferter Lösung über Nacht, stellt anschließend für 3 Stunden den pH-Wert unter Zugabe von 18,8 Teilen Soda auf 6,5 - 7 und kuppelt aus. Durch Zugabe von Siedesalz wird der Farbstoff aus neutraler Lösung gefällt und getrocknet. Er färbt Baumwolle in echten rotstichig marineblauen Tönen und entspricht der Formel

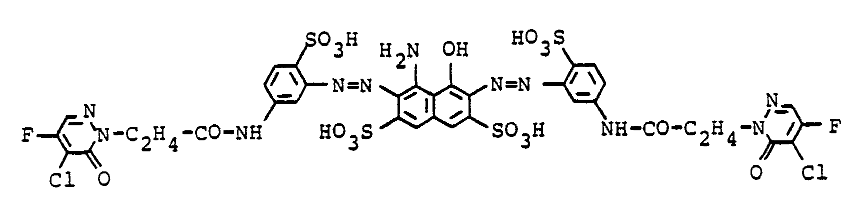

### Beispiel 521

Zu 31,9 Teilen des salzsauer diazotierten primären Kondensationsproduktes aus 1,3-Phenylendiamin-4-sulfonsäure und 3-(5'-Chlor-4'-fluorpyridaz-6'-on-1'-yl)-propionsäurechlorid wird eine Suspension von 31,6 Teilen 1-Amino-8-hydroxy-naphthalin-3,6-disulfonsäure in 400 Teilen Wasser gegeben. Man kuppelt in acetatgepufferter Lösung über Nacht und fügt anschließend 33,7 Teile salzsauer diazotiertes primäres Kondensationsprodukt aus 1,3-Phenylendiamin-4-sulfonsäure und 5-Chlor-2,4,6-trifluorpyrimidin zu. Durch Zugabe von 17,9 Teilen Natriumcarbonat wird neutral ausgekuppelt und der Farbstoff mit Siedesalz abgeschieden. Er färbt Baumwolle in echten, rotstichig marineblauen Tönen und entspricht der Formel

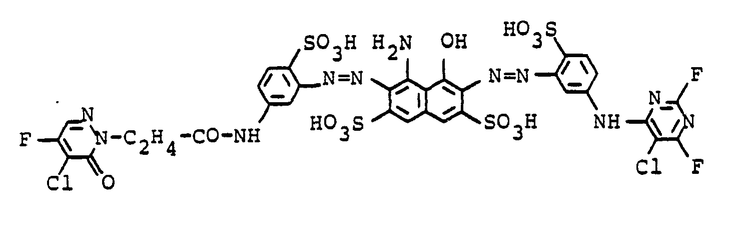

### Beispiel 522

Zu 33,7 Teilen des salzsauer diazotierten primären Kondensationsproduktes aus 1,3-Phenylendiamin-4-sulfonsäure und 5-Chlor-2,4,6-trifluorpyrimidin wird eine Suspension von 31,5 Teilen 1-Amino-8-hydroxynaphthalin-3,6-disulfonsäure in 400 Teilen Wasser gegeben. Man kuppelt in acetatgepufferter Lösung über Nacht aus und fügt anschließend 32 Teile des salzsauer diazotierten primären Kondensationsproduktes aus 1,3-Phenylendiamin-4-sulfonsäure und 3-(5'-Chlor-4'-fluorpyridaz-6'-on-1'-yl)-propionsäurechlorid zu. Durch Zugabe von 18 Teilen Natriumcarbonat wird neutral ausgekuppelt und der Farbstoff mit Siedesalz gefällt. Er färbt Baumwolle in echten, rotstichig marineblauen Tönen und entspricht der Formel

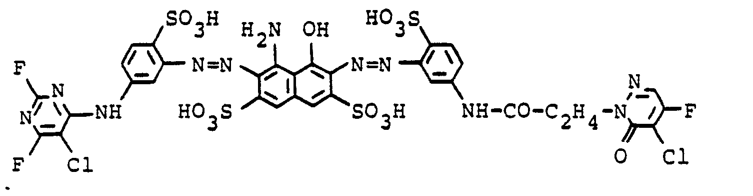

### Beispiel 523

31,9 Teile des primären Kondensationsproduktes aus 1,3-Phenylendiamin-4-sulfonsäure und 3-(5'-Chlor-4'- fluorpy-ridaz-6'-on-1'-yl)-propionsäurechlorid werden salzsauer diazotiert und zu einer Suspension von 52,1 Teilen des Kondensationsproduktes aus 1-Amino-8-hydroxynaphthalin-3,6-disulfonsäure und 3-(5'-Chlor-4'- fluorpyridaz-6'-on-1'-yl)-ppropionsäurechlorid gegeben. Man kuppelt unter Zusatz von 18,2 Teilen Natriumbikarbonat aus und fällt den Farbstoff aus neutraler Lösung durch Zugabe von Kaliumchlorid. Das Preßgut wird gefriergetrocknet. Der Farbstoff färbt Baumwolle in echten, brillanten roten Tönen und entspricht der Formel

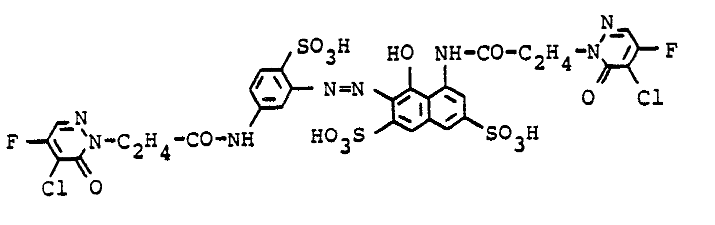

Weitere erfindungsgemäße Farbstoffe sind in Tabelle 22 zusammengefaßt, wobei in Spalte 1 das zur Acylierung der Diazokomponente verwendete Carbonsäurechlorid, in Spalte II die anstelle von 1,3-Phenylendiamin-4-sulfonsäure verwendete Diazokomponente, in Spalte 111 die anstelle von 1-Amino-8-hydroxynaphthalin-3,6-disulfonsäure verwendete Kupplungskomponente, in Spalte IV das zur Acylierung der Kupplungskomponente verwendete Carbonsäurechlorid und in Spalte V der auf Baumwolle erzielte Farbton angegeben sind.

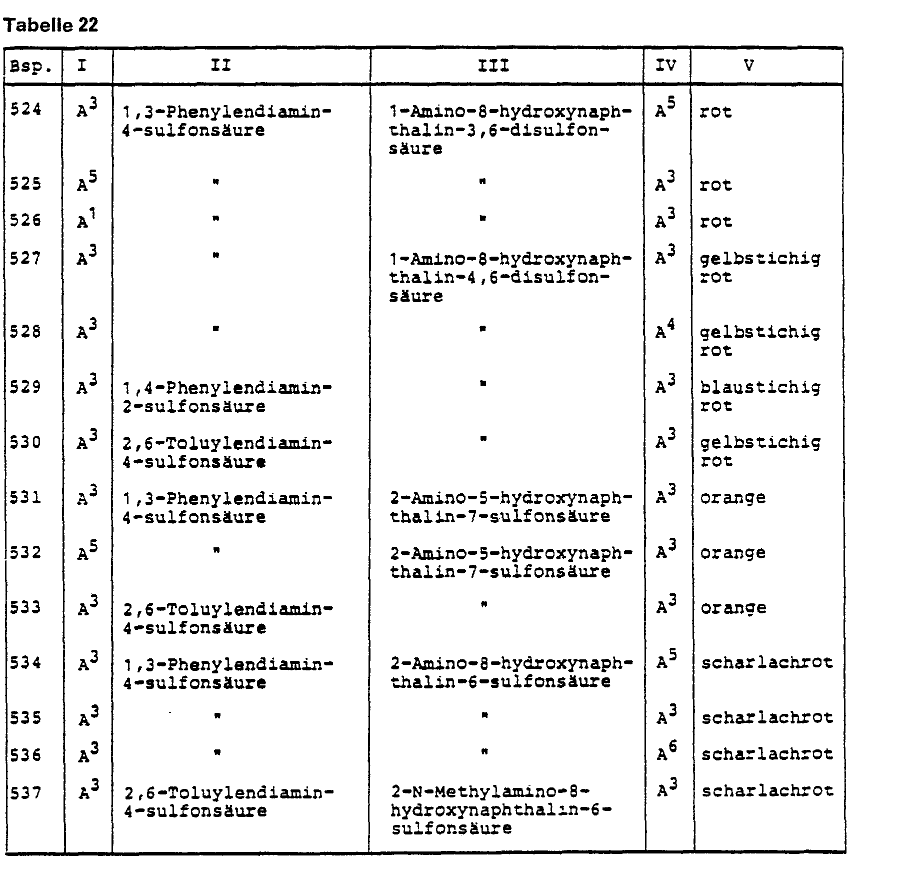

### Beispiel 538

Zu einer Suspension von 52,1 Teilen des Kondensationsproduktes aus 1-Amino-8-hydroxynaphthalin-3,6- disulfonsäure und 3-(5'-Chlor-4'-fluorpyridaz-6'-on-1'-yl)-propionsäurechlorid in 500 Teilen Wasser werden 33,7 Teile des salzsauer diazotierten primären Kondensationsproduktes aus 1,3-Phenylen-diamin-4-sulfonsäure und 5-Chlor-2,4,6-trifluorpyrimidin gegeben und bei essigsaurem pH-Wert gekuppelt. Aus neutraler Lösung wird der Farbstoff durch Zugabe von Natriumchlorid gefällt und getrocknet. Er färbt Baumwolle in echten, brillanten roten Tönen und entspricht der Formel

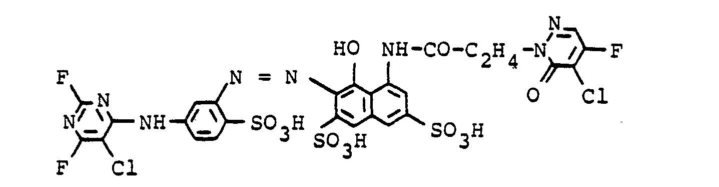

Weitere erfindungsgemäße Farbstoffe sind in Tabelle 23 zusammengefaßt, wobei die Spalte die reaktivgruppenhaltige Diazokomponente, in Spalte II die anstelle von 1-Amino-8-hydroxynaphthalin-3,6- disulfonsäure verwendete Kupplungskomponente, in Spalte III das zur Acylierung der Kupplungskomponente verwendete Carbonsäurechlorid und in Spalte IV der auf Baumwolle erzielte Farbton angegeben sind.

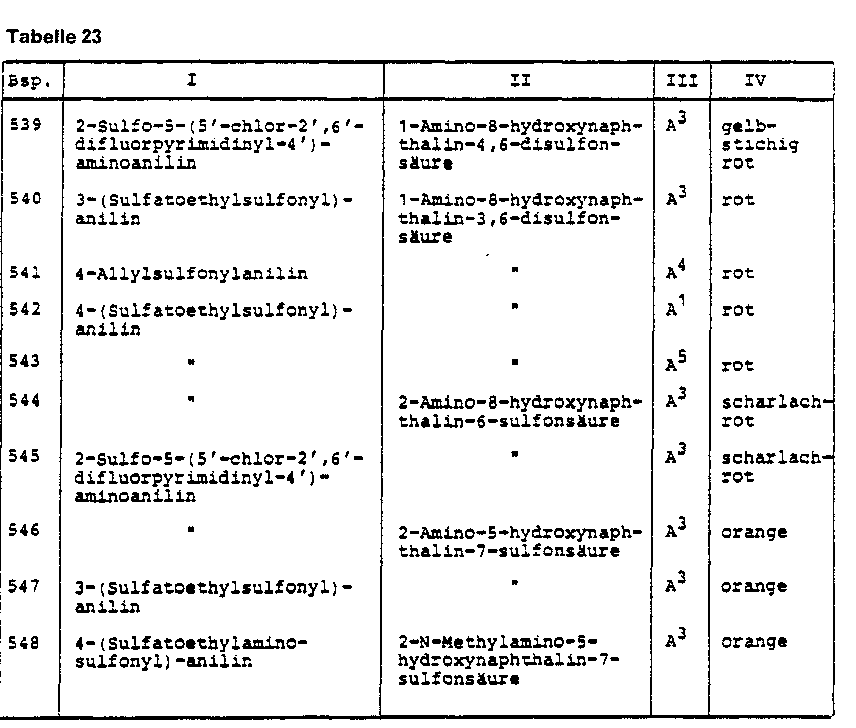

### Beispiel 549

Zu 31,9 Teilen des primären Kondensationsproduktes aus 1,3-Phenylendiamin-4-sulfonsäure und 3-(5'-Chlor-4'-fluorpy-ridaz-6'-on-1'-yl)-propionsäurechlorid werden 19 Teile Cyanurchlorid in 100 Teilen Aceton gegeben. Man rührt bei 5-10°C und pH 6 unter Zugabe von 14,3 Teilen Natriumbikarbonat bis keine diazotierbare Aminogruppe mehr nachgewiesen werden kann. Zum Reaktionsgemisch gibt man eine neutrale Lösung von 31,6 Teilen 1-Amino-8-hydroxynaphthalin-3,6-disulfonsäure und rührt bei 35°C und pH 6 - 7 unter Zugabe von 14,8 Teilen Natriumbicarbonat bis zur vollständigen Kondensation. Zummit Eis gekühlten Reaktionsgemisch werden 17 Teile salzsauer diazotierte Anilin-2-sulfonsäure gegeben und schwach sauer gekuppelt. Aus neutraler Lösung wird der Farbstoff durch Zugabe von Kaliumchlorid abgeschieden und getrocknet. Er färbt Baumwolle in echten,brillanten roten Tönen und entspricht der Formel

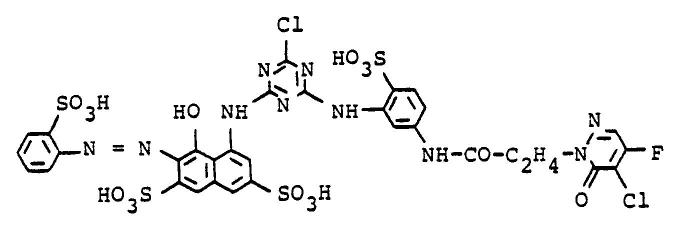

### Beispiel 550

28,1 Teile diazotiertes 4-(2'-Sulfatoethylsulfonyl)anilin werden bei pH 5 - 7 auf das gemäß Beispiel 456 erhaltene Kondensationsprodukt aus 21,9 Teilen 1-(4'-Aminophenyl)-3-carboxypyrazolon-5 und 29 Teilen 3-(5'-Chlor-4'-fluorpyridaz-6'-on-1'-yl)-propionsäurechlorid gekuppelt. Der Farbstoff wird mit Kaliumchlorid abgeschieden und schonend getrocknet. Er färbt Baumwolle in echten Gelbtönen und entspricht der Formel

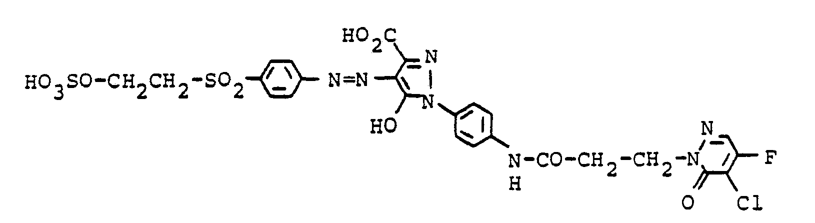

### Beispiel 551

33,7 Teile diazotiertes Kondensationsprodukt aus 5-Chlor-2,4, 6-trifluorpyrimidin und 1,3-Phenylendiamin-4-sulfonsäure werden bei pH 6 auf das gemäß Beispiel 456 erhaltene Kondensationsprodukt aus 21,9 Teilen 1-(4'-Aminophenyl)-3-carboxypyrazolon -5 und 29 Teilen 3-(5'-Chlor-4'-fluorpyridaz-6'-on-1'-yl)-propionsäurechlorid gekuppelt. Nach Isolierung und schonender Trocknung erhält man einen Farbstoff, der Baumwolle in echten gelben Farbtönen anfärbt. Er entspricht der Formel

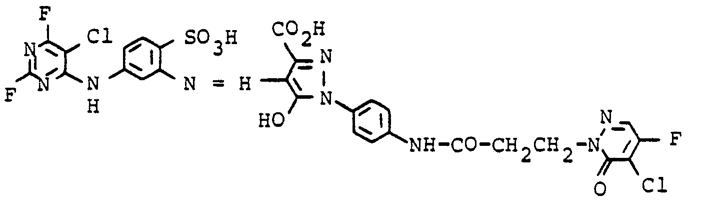

### Beispiel 552

69 Teile 2-[4'-(3",6",8"Trisulfonaphthyl-2")-azo-3'-ureido-phenyl]-amino-4,6-dichlortriazin werden in 800 Teilen Wasser gelöst und mit 40 Teilen 4-[3'(5";Chlor-4";fluorpyridaz-6"; on-1"-yl)-propionyl-amino]-2-aminobenzolsulfonsäure bei 30-40° C und pH 6,5 umgesetzt. Nach Fällung mit Kaliumchlorid und schonender Trocknung erhält man einen Farbstoff mit guten Echtheiten, der Baumwolle in brillanten goldgelben Tönen färbt und der Formel 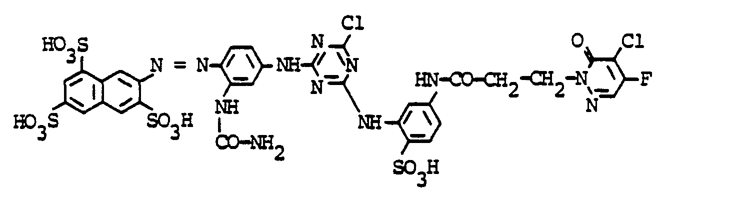 entspricht.

Zum gleichen Farbstoff kommt man auch, wenn man 54,5 Teile 4 -(3',6',8'-Trisulfonaphthyl-2'-)-azo-3- ureidoanilin mit 56 Teilen 4-[3'- (5";Chlor-4";fluorpyridaz-6";on-I"-yl)-propion-ylamino]-2-(4',6'-dichlor-1',3',5'-triazin-2'-ylamino)-benzol-sulfonsäure bei 30-35°C und pH 6 - 7 umsetzt.

### Beispiel 553

32 Teile salzsauer diazotiertes 1-(3 -Amino-4 -sulfophenyl)-5-chlor-4-fluorpyridazon-6 werden zu einer Lösung von 52 Teilen des Kondensationsproduktes von 1-Amino-8-hydroxynaphthalin -3,6-disulfonsäure und 3-(5 -Chlor-4 -fluorpyridaz-6 -on-1 -yl)-propionsäurechlorid gegeben. Man kuppelt unter Zusatz von 18 Teilen Natriumbikarbonat bei essigsaurem pH-Wert aus und fällt den Farbstoff anschließend aus neutraler Lösung mit Kaliumchlorid. Das Preßgut wird sprühgetrocknet. Man erhält ein rotes Pulver, das Baumwolle in echten brillantroten Tönen färbt. Der Farbstoff entspricht der Formel

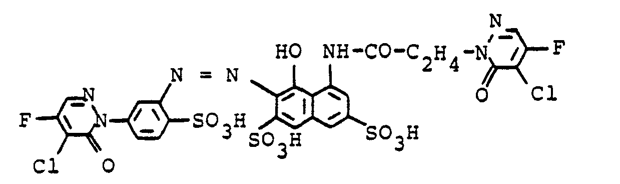

### Beispiel 554

Verwendet man anstelle von 1-(3 -Amino-4 -sulfophenyl)-5-chlor-4-fluorpyridazon-6 das 1-(4 -Amino-3'-sulfophenyl)-5-chlor-4-fluorpyridazon-6, so erhält man einen ähnlichen Farbstoff, der Baumwolle in blaustichig roten Tönen färbt.

### Beispiel 555

64,5 Teile des durch Kupplung von 31,9 Teilen 1-(3 -Amino-4-sulfophenyl)-5-chlor-4-fluorpyridazon-6 auf 31,9 Teile 1-Amino-8-hydroxynaphthalin-3,6-disulfonsäure in saurer Lösung erhaltenen roten Monoazofarbstoffs werden bei pH 6,5 in Wasser gelöst vorgelegt. Dazu werden 40 Teile des salzsauer diazotierten primären Kondensationsproduktes aus 1,3-Phenylen-diamin-4-sulfonsäure und 3-(5 -Chlor-4 -fluorpyridaz-6 -on-1 -yl)-propionylchlorid gegeben. Man kuppelt schwach sauer aus unter Zugabe von 1 molarer Sodalösung und fällt den Farbstoff mit Siedesalz. Das Preßgut wird gefriergetrocknet. Man erhält ein schwarzes Pulver, das Baumwolle in rotstichig marineblauen Tönen mit guter Echtheit färbt. Der Farbstoff entspricht der Formel

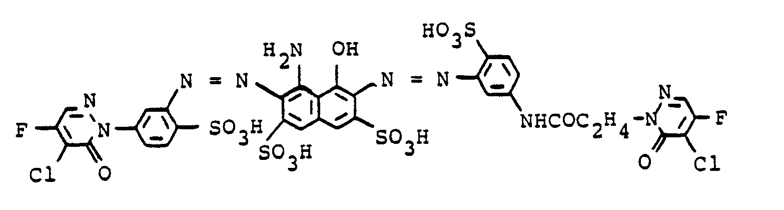

### Beispiel 556

Verwendet man anstelle von 1-(3'-Amino-4'-sulfophenyl)-5-chlor-4-fluorpyridazon-6 das 1-(4'-Amino-3'-sulfophenyl)-5-chlor-4-fluorpyridazon-6, so erhält man einen Farbstoff mit ähnlichen Eigenschaften. Er färbt Baumwolle in grünstichig marineblauen Tönen.

### Beispiel 557

Der rote Monoazofarbstoff, der durch Kupplung von 39 Teilen des primären Kondensationsproduktes aus 1,3-Phenylendiamin-4-sulfonsäure und 3-(5'-Chlor-4'-fluorpyridaz-6'-on-1'-yl)-propionsäurechlorid auf 31,9 Teile 1-Amino-8-hydroxynaphtha-lin-3,6-disulfonsäure in saurer Lösung erhalten wurde, wird mit 32 Teilen salzsauer diazotiertem 1-(4'-Amino-3'-sulfo-phenyl)-5-chlor-4-fluorpyridazon-6 versetzt. Man kuppelt unter konstanter Zugabe von 1 molarer Sodalösung am Neutralpunkt aus und isoliert anschließend den Farbstoff durch Zusatz von Kaliumchlorid. Das Preßgut wird gefriergetrocknet. Das erhaltene schwarze Pulver färbt Baumwolle in grünstichig marineblauen Tönen von guter Echtheit. Der Farbstoff entspricht der Formel

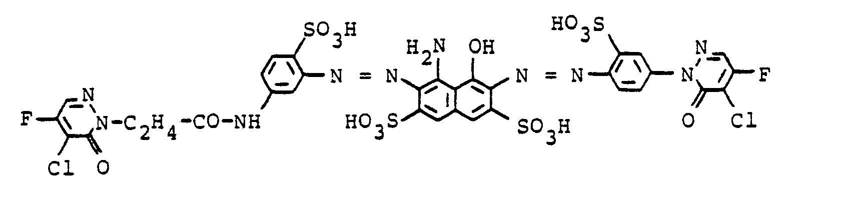

### Beispiel 558

Einen Farbstoff mit ähnlichen Eigenschaften erhält man, wenn man anstelle des 1-(4'-Amino-3'-sulfophenyl)-5-chlor-4-fluor-pyridazon-6 das 1-(3'-Amino-4'-sulfophenyl)-5-chlor-4-fluor-pyridazon-6-verwendet. Er färbt Baumwolle in rotstichig marineblauen Tönen.

### Beispiel 559

27,9 Teile des salzsauer diazotierten primären Kondensationsproduktes aus 1,3-Phenylendiamin-4-sulfonsäure und β-Chlorpropionylchlorid werden in essigsaurer Lösung auf 52 Teile des Kondensationsproduktes aus 1-Amino-8-hydroxynaphthalin-3,6-disulfonsäure und 3-(5'-Chlor-4'-fluorpyridaz-6'- on-1'-yl)-propionsäurechlorid gekuppelt. Der Farbstoff wird anschließend aus neutraler Lösung mit Siedesalz gefällt. Das Preßgut wird sprühgetrocknet. Man erhält ein rotes Pulver, das Baumwolle in brillantroten Tönen mit guter Echtheit färbt. Der Farbstoff entspricht der Formel

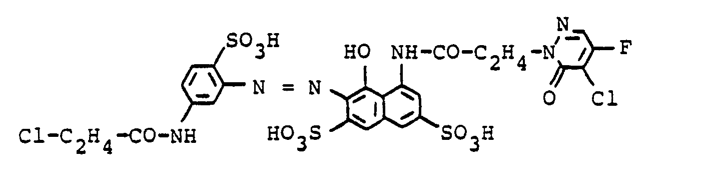

### Beispiel 560

51,4 Teile des Monoazofarbstoffes, der erhalten wurde durch Kupplung von 28,7 Teilen diazotierter 4-Chloranilin-2,5-disulfonsäure, auf 22 Teile 1-Aminonaphthalin-7-sulfonsäure, werden bei 10-15°C in salzsaurer Lösung diazotiert. In das Reaktionsgemisch trägt man 52 Teile des Kondensationsproduktes aus 1-Amino-8-hydroxynaphthalin-3,6-disulfonsäure und 3-(5'-Chlor-4'-fluorpyridaz-6'-on-1'-yl)-propionsäurechlorid ein und kuppelt unter konstanter Zugabe von 1 molarer Sodalösung schwach sauer aus. Der Farbstoff wird aus neutraler Löung mit Kaliumchlorid abgeschieden und das Preßgut schonend etrocknet. Man erhält ein dunkelblaues Pulver, das Baumwolle in marineblauen Tönen mit guter Echtheit färbt. Der Farbstoff entspricht der Formel

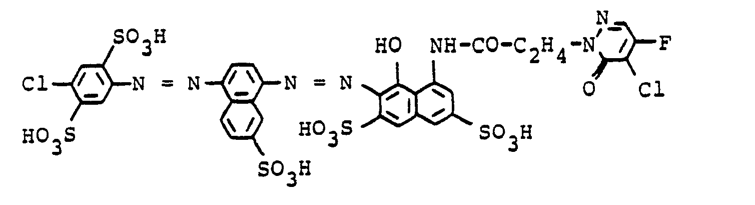

### Beispiel 561

Ersetzt man die in Beispiel 560 verwendete 4-Chloranilin-2,5-disulfonsäure durch 32 Teile 1-(3'-Amino-4'-sulfophenyl)-5-chlor-4-fluorpyridazon-6, so erhält man einen Farbstoff mit ähnlichen Eigenschaften.

### Beispiel 562

62 Teile des Monoazofarbstoffs, der erhalten wurde durch Kupplung von diazotierten 39,1 Teilen des Kondensationsproduktes aus 1,3-Phenylendiamin-4-sulfonsäure und 3-(5'-Chlor-4'-fluorpyridaz-6'-on-1'-yl)-propionsäurechlorid auf 22 Teile 1-Aminonaphthalin-7-sulfonsäure werden bei 10-15°C in salzsaurer Lösung diazotiert. Zum Reaktionsgemisch werden 52 Teile des Kondensationsproduktes aus 1-Amino-8-hydroxynaphthalin-3,6-disulfonsäure und 3-(5'-Chlor-4'-fluorpyridaz-6'-on-1'-yl)-propionsäurechlorid gegeben und unter konstanter Zugabe von 1 molarer Sodalösung schwach sauer gekuppelt. Aus neutraler Lösung wird der Farbstoff mit Siedesalz gefällt und das Preßgut gefriergetrocknet. Man erhält ein blauschwarzes Pulver, das Baumwolle in rotstichig marineblauen Tönen mit guter Echtheit färbt.

### Beispiel 563

Verwendet man anstelle des in Beispiel 562 genannten Kondensationsproduktes aus 1-Amino-8-hydroxynaphthalin-3,6-disul-fonsäure und 3-(5'-Chlor-4'-fluorpyridaz-6'-on-1'-yl)-propionsäurechlorid 46,7 Teile des primären Kondensationsproduktes aus 1-Amino-8-hydroxynaphthalin-3,6-disulfonsäure und Cyanurchlorid, so erhält man einen Farbstoff mit ähnlichen Eigenschaften.

### Beispiel 564

Einen Farbstoff mit ähnlichen Eigenschaften erhält man, wenn man anstelle des in Beispiel 563 genannten Kondensationsproduktes aus 1-Amino-8-hydroxynaphthalin-3,6-disulfonsäure und Cyanurchlorid das Kondensationsprodukt aus 1-Amino-8-hydroxy-naphthalin-3,6-disulfonsäure und 2-Phenyl-4,6-dichlor-s-triazin einsetzt.

### Beispiel 565

Verwendet man als Diazokomponente anstelle des in Beispiel 562 genannten Kondensationsproduktes aus 1,3-Phenylendiamin-4-sulfonsäure und 3-(5'-Chlor-4'-fluorpyridaz-6'-on-1 '-yl)-propionsäurechlorid 32 Teile 1-(4'-Amino-3'-sulfophenyl)-5-chlor-4-fluorpyridazon-6, so erhält man einen Farbstoff mit ähnlichen Eigenschaften.

### Beispiel 566

32 Teile salzsauer diazotiertes 1-(3'Amino-4'-sulfophenyl)-5-chlor-4-fluorpyridazon-6 werden zu einer neutralen Lösung von 22 Teilen 1,4-Dimethyl-6-hydroxypyrid-2-on-5-sulfonsäure in 200 Teilen Wasser gegeben. Die Kupplung wird bei pH 5 - 7 zu Ende geführt, und der bei pH 6,5 mit Kaliumchlorid ausgesalzene Farbstoff gefriergetrocknet. Er färbt Baumwolle in brillanten, echten Gelbtönen und entspricht der Formel

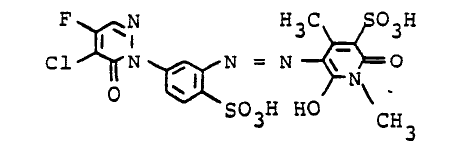

### Beispiel 567

Ersetzt man das in Beispiel 566 genannte 1-(3'-Amino-4'-sul-fophenyl)-5-chlor-4-fluorpyridazon-6 durch das 1-(4'-Amino-3'-sulfophenyl)-5-chlor-4-fluorpyridazon-6, so erhält man einen Farbstoff mit ähnlichen Eigenschaften.

## Patentansprüche

1. Verbindungen der allgemeinen Formel 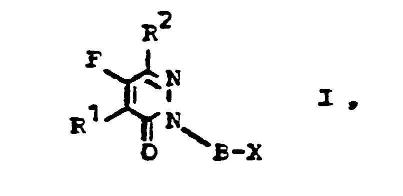 in der
R¹ und R² voneinander unabhängig Wasserstoff, Halogen, Nitro, Cyan, Acylamino, Hydroxy, Alkoxy, Aryloxy, Mercapto, Alkylthio, Arylthio, Hydroxycarbonyl, Alkoxycarbonyl, Aryloxycarbonyl, Aminocarbonyl, Hydroxysulfonyl, Alkylsulfonyl, Arylsulfonyl, Aminosulfonyl oder ein gegebenenfalls substiuierter aliphatischer, araliphatischer, aromatischer oder heterocyclischer Rest,
B eine direkte Bindung oder ein Brückenglied, das einen aliphatischen, aromatischen, araliphatischen oder heterocyclischen Rest darstellt, und
X ein Farbstoffrest sind.

2. Verwendung der Verbindungen gemäß Anspruch 1 zum Färben von hydroxylgruppenhaltigem Textilmaterial, insbesondere von Baumwolle.

## Claims

1. A compound of the general formula 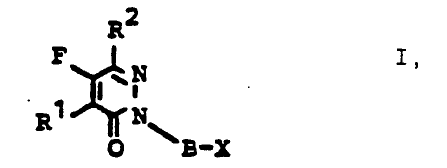 where
R^{l} and R² independently of one another are hydrogen, halogen, nitro, cyano, acylamino, hydroxyl, alkoxy, aryloxy, mercapto, alkylthio, arylthio, hydroxycarbonyl, alkoxycarbonyl, aryloxycarbonyl, aminocarbonyl, hydroxysulfonyl, alkylsufonyl, arylsufonyl, aminosulfonyl or an unsubstituted or substituted aliphatic, araliphatic, aromatic or heterocyclic radical,
B is a direct bond or a bridge member which is an aliphatic, aromatic, araliphatic or heterocyclic radical, and
X is a dye radical.

2. The use of a compound as claimed in claim 1 for dyeing hydroxyl-containing textile material, especially cotton.

## Revendications

1. Composés de formule générale 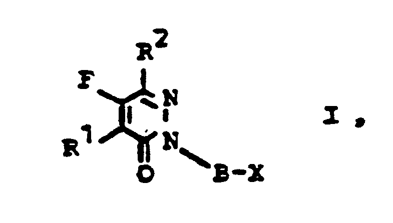 dans laquelle
R^{l} et R² représentent, indépendamment l'un de l'autre, un atome d'hydrogène ou d'halogène, un radical nitro, cyane, acylamino, hydroxy, alcoxy, aryloxy, mercapto, alkylthio, arylthio, hydroxycarbonyle, alcoxycarbonyle, aryloxycarbonyle, aminocarbonyle, hydroxysulfonyle, alkylsulfonyle, arylsulfonyle, aminosulfonyle eu un radical aliphatique, araliphatique, aromatique ou hétérocyclique éventuellement substitué,
B est une liaison directe ou un chaînon de pontage qui représente un radical aliphatique, aromatique, araliphatique ou hétérocyclique et
X est un radical colorant.

2. Utilisation des composés selon la revendication 1 pour la teinture de matières textiles contenant des groupes hydroxyle, en particulier de coton.
